(19)

**Europäisches Patentamt**
**European Patent Office**
**Office européen des brevets**

(11) **EP 4 668 135 A1**

(12) **EUROPEAN PATENT APPLICATION**

(43) Date of publication:
**24.12.2025 Bulletin 2025/52**

(21) Application number: **25168050.0**

(22) Date of filing: **02.04.2025**

(51) International Patent Classification (IPC):
**G06F 16/901** *(2019.01)* **G06F 16/242** *(2019.01)*
**G06Q 10/0633** *(2023.01)*

(52) Cooperative Patent Classification (CPC):
**G06F 16/9024; G06F 16/2428; G06Q 10/0633**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **18.06.2024 US 202418746453**

(71) Applicant: **SAP SE**
**69190 Walldorf (DE)**

(72) Inventors:
• **BERG, Gregor**
**69190 Walldorf (DE)**

• **BAIER, Stephan**
**69190 Walldorf (DE)**
• **KAMPIK, Timotheus**
**69190 Walldorf (DE)**
• **CRAMER, Alexander**
**69190 Walldorf (DE)**
• **RAFIEI, Majid**
**69190 Walldorf (DE)**

(74) Representative: **Müller-Boré & Partner**
**Patentanwälte PartG mbB**
**Friedenheimer Brücke 21**
**80639 München (DE)**

(54) **GENERATION OF TEMPORALLY RELEVANT PROCESS IMPROVEMENT TRAJECTORIES**

(57) The present disclosure provides techniques and solutions for improving computer-implemented processes. Process mining is performed to identifying processes of a first entity. Characteristics of the first entity at a first time are used to identify a set of reference entities having similar characteristics to the first entity at a second, earlier time. Process mining is performed for the set of reference entities to identify process changes that led to process improvements for the set of reference entities. These process changes are used to suggest process changes to the first entity that may improve performance of the process.

FIG. 28

**Description**

**FIELD**

The present disclosure generally relates to process mining and techniques for using process mining data to improve processes.

**BACKGROUND**

Processes, by definition, require resources (that is, by performing actions to accomplish process steps) to move from a beginning state to a final state. Often a process can be carried out in a variety of ways. That is, assuming a given starting state and a desired end state, there may be a variety of actions that can be carried out to achieve the end state, and a given path between the starting and end states can involve different actions, different numbers of actions, or different sequences between actions.

Often, multiple entities will engage in the same process. Some entities may have more efficient ways of accomplishing the process than others. However, it may be difficult to obtain data needed to, for example, define how a particular entity performs a process and how one or more reference entities perform the process. Typically, one entity can compare their performance to another entity or a group of entities, such as those that perform higher than median, at median, or lower than media relative to an overall group of entities.

While an entity may be able to understand how they compare with other entities/entity groups, it may be difficult to determine what steps the entity should take to improve their processes. For example, it may be difficult to identify entities that are sufficiently similar to a given entity such that comparisons are valid and useful. Even if such entities are identified, it can be difficult to determine what changes an entity could make to improve performance. That is, it may be possible to see that two entities have similar characteristics and perform similar processes, but simply noting that one entity performs better does not provide an indication of what the entity is doing, or what changes they may have made, in order to achieve the higher performance. Making these kinds of correlations is even more difficult when it may take time to see an improvement in a process after a process change is implemented. Accordingly, room for improvement exists.

**SUMMARY**

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

The present disclosure provides techniques and solutions for improving computer-implemented processes. Process mining is performed to identifying processes of a first entity. Characteristics of the first entity at a first time are used to identify a set of reference entities having similar characteristics to the first entity at a second, earlier time. Process mining is performed for the set of reference entities to identify process changes that led to process improvements for the set of reference entities. These process changes are used to suggest process changes to the first entity that may improve performance of the process.

In one aspect, the present disclosure provides a process for analyzing process data to identify changes to improve a performance metric of a first entity and provide an improvement recommendation. A request for an improvement recommendation for a first entity is received. The improvement recommendation is based on the results of first process mining performed on one or more data sets comprising process data of the first entity.

First process mining is performed on the one or more data sets of the first entity to provide first process mining results. This first process mining identifies a first plurality of activities performed in one or more instances of a process associated with the one or more data sets. Values for a plurality of characteristics of the first entity are identified as of a first time. From a plurality of entities, a set of one or more reference entities is identified. These reference entities have values for at least a portion of the plurality of characteristics of the first entity satisfying a threshold similarity with the first entity as of a second time, which is earlier than the first time.

Prior or subsequent to identifying the set of one or more reference entities, second process mining is performed on one or more data sets comprising process data of the set of one or more reference entities. This process mining identifies a second plurality of activities performed in one or more instances of a process associated with the one or more data sets comprising process data of the set of one or more reference entities, providing second process mining results.

A first value for a first performance metric for the first process mining results is compared with a second value for the first performance metric for the second process mining results. It is determined that the second value satisfies one or more criterion indicating that the second value reflects better performance for the first performance metric than the first value. A change to a process described by the first process mining results is identified to improve the first performance metric value. The change is displayed to a user via a user interface in response to the received request.

The present disclosure also includes computing systems and tangible, non-transitory computer readable storage media configured to carry out, or including instructions for carrying out, an above-described method. As described herein, a variety of other features and advantages can be incorporated into the technologies as desired.

## BRIEF DESCRIPTION OF THE DRAWINGS

FIG. 1 is a diagram illustrating a host platform for generating process insights in accordance with an example embodiment.

FIG. 2A is a diagram illustrating a schema of a data system uploaded to the host platform in accordance with an example embodiment.

FIG. 2B is a diagram illustrating a user interface for defining milestones and blockers in accordance with an example embodiment.

FIG. 2C is a diagram illustrating a process of generating an executable query for generating process insights in accordance with an example embodiment.

FIG. 3A is a diagram illustrating a process of executing a query and generating process insights in accordance with an example embodiment.

FIG. 3B is a diagram illustrating a process of identifying milestones and blockers as a subset of the overall state space in accordance with an example embodiment.

FIG. 4 is a diagram illustrating a user interface with process insight data in accordance with an example embodiment.

FIG. 5 is a diagram illustrating a method of generating process insights in accordance with an example embodiment.

FIG. 6 is a diagram illustrating a process of benchmarking a target process in accordance with example embodiments.

FIG. 7 is a diagram illustrating a data set that can be used to generate the milestones and blockers shown in FIG. 3B, in accordance with example embodiments.

FIG. 8 is a diagram illustrating an example of an event log that can be generated from the data set shown in FIG. 7, in accordance with example embodiments.

FIG. 9 is a diagram of a process that may be generated based on document data such as the event log shown in FIG. 8, in accordance with example embodiments.

FIGS. 10A-10C are diagrams illustrating a process of identifying a suggested improvement to a target process based on a reference diagram of a reference process in accordance with example embodiments, where FIG. 10A represents a target process, FIG. 10B is a reference process, and FIG. 10C shows differences between the target and reference processes.

FIG. 10D is an example user interface for searching for a reference diagram.

FIG. 11 is a diagram illustrating the process shown in FIG. 9 along with an alternative flow, in dashed lines, from a reference diagram in accordance with example embodiments.

FIG. 12 is a diagram illustrating a process of analyzing variants among a target process and a reference process in accordance with example embodiments.

FIG. 13 is a diagram illustrating a method of generating a process graph based on process insights in accordance with example embodiments.

FIG. 14 is a diagram illustrating a process of benchmarking a target process based on a reference process in accordance with example embodiments.

FIG. 15 is a diagram illustrating partially overlapping data sets that are capable of being filtered together in accordance with example embodiments.

FIGS. 16A-16C are diagrams illustrating a process of identifying a dynamic peer group in accordance with example embodiments.

FIG. 17A-17B are diagrams illustrating a process of generating and illustrating filtering metadata for a next iteration of the dynamic peer group selection in accordance with example embodiments.

FIG. 18 is a diagram illustrating a view of lead time from a benchmarking group in accordance with example embodiments.

FIG. 19 is a diagram illustrating a method of controlling a record filtering process via a user interface in accordance with example embodiments.

FIG. 20 provides a graph illustrating performance comparisons as of particular times and a graph of a disclosed technique, where performance improvement over a time period is analyzed.

FIG. 21 illustrates an example computing environment in which disclosed techniques can be implemented.

FIGS. 22A-22C illustrate how a process can be associated with a variety of activities and can have various process flows that can be used to carry out the process, along with, in squares, a corresponding number of days to transition between activities.

FIG. 23 illustrates an example domain model that can be used in carrying out disclosed techniques, where the domain model can be a schema for data storage, such as defining relational database tables that can store information used in disclosed techniques.

FIG. 24 illustrates how performance metrics can be linked to initiatives to improve process performance, where an initiative can be associated with particular tasks, where the tasks can involve making changes to a process used by an entity.

FIG. 25 provides an expanded domain model that can be used with the domain model of FIG. 23.

FIG. 26 provides an example JSON listing that can be used to store information for an initiative.

FIGS. 27A and 27B provide example python code that can be used to compare processes of two entities.

FIG. 28 is a flowchart of an example process for analyzing process data to identify changes to improve a performance metric of a first entity and provide an improvement recommendation.

FIG. 29 is a diagram of an example computing system in which some described embodiments can be implemented.

FIG. 30 is an example cloud computing environment that can be used in conjunction with the technologies described herein.

## DETAILED DESCRIPTION

### Example 1- Overview

Processes, by definition, require resources (that is, by performing actions to accomplish process steps) to move from a beginning state to a final state. Often a process can be carried out in a variety of ways. That is, assuming a given starting state and a desired end state, there may be a variety of actions that can be carried out to achieve the end state, and a given path between the starting and end states can involve different actions, different numbers of actions, or different sequences between actions.

Often, multiple entities will engage in the same process. Some entities may have more efficient ways of accomplishing the process than others. However, it may be difficult to obtain data needed to, for example, define how a particular entity performs a process and how one or more reference entities perform the process. Typically, one entity can compare their performance to another entity or a group of entities, such as those that perform higher than median, at median, or lower than media relative to an overall group of entities.

While an entity may be able to understand how they compare with other entities/entity groups, it may be difficult to determine what steps the entity should take to improve their processes. For example, it may be difficult to identify entities that are sufficiently similar to a given entity such that comparisons are valid and useful. Even if such entities are identified, it can be difficult to determine what changes an entity could make to improve performance. That is, it may be possible to see that two entities have similar characteristics and perform similar processes, but simply noting that one entity performs better does not provide an indication of what the entity is doing, or what changes they may have made, in order to achieve the higher performance. Making these kinds of correlations is even more difficult when it may take time to see an improvement in a process after a process change is implemented. Accordingly, room for improvement exists.

The present disclosure provides techniques that can be used to identify specific changes that one or more reference entities made that led to improved performance. That is, rather than simply benchmarking performance at different times, process mining data can be analyzed to determine what processes are in place at a first time, what processes are in place at a second, later time, and changes to the processes at the first time that led to improved performance in the processes at the second time.

This information can then be compared with process mining results from an entity to be analyzed for process improvement. Rather than identifying entities that are similar to the entity to be analyzed as of a common time, entities are selected that were like the entity to be analyzed at an earlier time. Once those entities have been identified, it can be determined how their processes changed from the first time to the second time. Since the reference entities were similar to the entity being analyzed prior to their improvement, there can be an expectation that performance for the entity being analyzed ("analysis entity") will be improved if the analysis entity makes process changes that similarly situated reference entities made - that is, modifying their processes to incorporate process elements (such as process steps) of higher-performing reference entities.

A variety of techniques can be used to determine entity similarity, such as looking at "descriptive" information for an entity, such as information about the number of employees for an entity, revenue, industry in which the entity operates, geographic location, etc. Similarity can also be determined based on process information. For example, entities may be identified as more similar if the activities that are carried out in performing a process are similar, or if particular action sequences/paths are similar between the analysis entity and references entities.

Entities can create initiatives to carry out process improvements. Initiatives can be associated with one or more insights, where an insight can represent information regarding a particular process change - such as switching from manual approvals to automatic approvals. Tasks can be defined to help an entity implement process changes that may lead to improved performance.

It should be appreciated that processes discussed in the present disclosure are fundamentally computer-implemented, such as where activities read, write, or modify stored data. Because the processes are computer-implemented, typically improving the performance of a process causes the process to use fewer computing resources. For example, eliminating a process step can correspond to eliminating a document to be created/edited, or at least reducing read or write operations accessing such data, resulting in better performance. In addition, improving the process can provide better performance by reducing manual work. For example, automation can eliminate an operation that would otherwise be performed by a user.

Moreover, technical enhancements can result in reduced processing time, such as by streamlining workflows or optimizing algorithmic processes. These improvements directly translate into better performance.

Process improvements can provide better performance by increasing scalability, such as by providing for dynamic resource allocation or flexible task allocation, helping to maintain performance as demand changes. Better performance can also be provided through process improvements that increase accuracy and reliability, such as automated validation checks or error detection mechanisms. These improvements not only bolster technical performance, but also improve the integrity of the overall system.

Process improvements can enhance compliance and governance requirements, leading to better performance in adhering to regulatory standards and internal policies, safeguarding against legal risks and operational disruptions.

By prioritizing customer-centric improvements, such as reducing lead times for order fulfillment or enhancing communication channels, organizations can elevate customer satisfaction levels, thereby achieving better performance in delivering superior service experiences.

**Example 2- Example Identification of Process Milestones and Blockers**

Entities, such as companies and other organizations (where the present disclosure will hereinafter use the terms "entity" or "entities"), need to have insights into their core business processes if they are to plan, monitor, and evaluate any meaningful changes to their processes. Related approaches to understanding such insights are derived using process mining. A realistic timeline for performing such process mining is a few months and it requires consulting effort from process mining vendors that are familiar with the software system being mined. The result is significant time and costs being consumed, as well as significant amounts of computing resources in gathering and processing large amounts of data. Another drawback is that process mining may "mine" the entire state space of the software which ultimately leads to a convoluted model that is different to interpret, at least without significant manual effort. Furthermore, once a mining project is complete, the data can continue to be monitored, but the data extraction can no longer easily be modified. As a result, if a mining project requires new or different requirements, a completely new mining project will need to be created, again consuming large amounts of computing resources, and often duplicating prior efforts.

The example embodiments are directed to a software system (also described herein as a host system) that provides a different approach for gathering insights from a business process by analyzing the data based on standardized milestones and standardized blockers of such milestones. A milestone represents an event that occurs within the business process which should always take place within the process, regardless of its manifestation in a specific enterprise software system. For example, a business process that involves the sale of goods may include a requirement that a sales order (document) be created which identifies the goods and a requirement that an invoice (document) be generated and cleared. These three actions can be considered milestones. For example, the first milestone may be "creating a sales order", a second milestone may be "creating an invoice", and a third milestone may be "clearing the invoice".

Blockers, on the other hand, are occurrences or events that block the process from moving forward and will usually remain in place until the block is removed, if they do not directly terminate process instances (*e.g.*, the manual cancelation of an order). Referring again to the example of the three milestones above, the process may require that the buyer sign and return the sales order before the invoice can be generated by the system. In this example, failure to receive a signed sales order may be considered a blocker to the process. Until the signed sales order is received, the block will remain in place. Other contextual information reflecting unwanted or unintentional behavior (*e.g.*, wrong sequence of process steps) can also be covered in such a definition of a blocker to surface these issues to the people responsible for running the process.

Such standardized milestones and blockers have been and can be identified from years of expertise in the field of data-driven process management, such as process mining, and avoid unnecessary mining projects which attempt to mine the entire state space of the process including parts of the process that are unrelated to the ultimate success of the process. While process mining can provide a whole state space including all irrelevant variants, paths and events, certain example embodiments of the present disclosure focus on providing those blockers typically encountered by most companies. From a commercial perspective, the customer does not have to decide on one process to understand in depth but can get insights into challenges and blockers in a standardized way across the whole process landscape. The software system may provide pages of user interfaces which enable users to choose or otherwise select a subset of milestones from the predefined / standardized list and a subset of blockers for each milestone from another predefined / standardized list.

The process experts may also develop queries for the data values that are the result of the process such as sales data, invoice data, payment data, and the like, which can be used to see how the process is performing. To do this, the host system may provide most of the query template and the experts may input the table identifiers, column identifiers, data value locations, etc. of the data to be queried to complete / fill-out the query. As another example, machine learning models, artificial intelligence models, statistical models, or the like, may be trained to fill in the query template with underlying data from the database.

The resulting queries cover what a customer would be interested in regarding a process. These queries may be combined into a single executable that can be called at any time to show the current status of the process based on the actual data of the process without a need to mine the process using process mining. Instead, the software system described herein queries business data of the process to identify how the process is performing and generate insights that can be performed in significantly less time than process mining. In some cases, disclosed techniques of this Example 2 can be performed in as little as a few minutes or up to a few hours. Meanwhile, process mining can take a few weeks to a few months of time.

The example embodiments of this Example 2 provide a number of advantages with respect to current insight generating techniques such as process mining. For example, the software system may utilize standard processes for a given system to identify milestones and blockers of a process. Using predefined / standardized milestones and blockers generalizes the fastest way to insights for any enterprise system, which can also increase computational efficiency. Speed can be improved by standardizing the scope of the analysis to important areas (milestones and blockers), including steps of the process with low efficiency or significant defects.

As opposed to competing approaches, in some aspects, the system described herein only requires a one-time effort of mapping out processes $\mathcal{P}$ in a new system $\mathcal{S}$ that can be performed comparatively quickly, such as within days, if not hours, as compared to much more time-consuming prior approaches. Once this mapping is performed, insights can be generated by anyone with access to the software by connecting their instance of $\mathcal{S}$ to a suitable analytics application. In addition, automated generation of (parts of) the required information accelerates the approach even further by assisting the user to fill-out the necessary data via the user interface. Other offerings in the market take months to get started and to customize the analysis for only a limited number of processes.

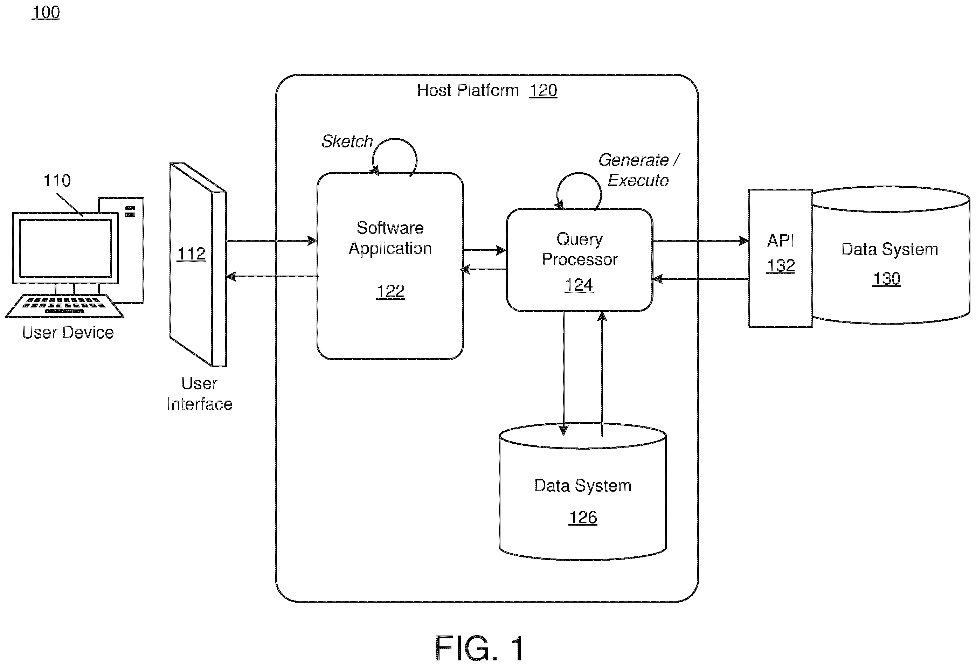

FIG. 1 illustrates a computing environment 100 of a host platform 120 for generating process insights in accordance with an example embodiment. Referring to FIG. 1, the host platform 120 may be a cloud platform, a web server, a database, a combination of devices, and the like. The host platform 120 hosts a software application 122 for generating process insights. The software application may include one or more analytic programs that can analyze a business process and generate insights. The data used by the software application 122 to generate process insights is stored in a data system, for example, data system 126 that is local to the host platform and/or data system 130 that is external to the host platform 120 and that is accessible via a network such as the Internet. As described herein, a data system may refer to a database, a website, a data service, a blockchain, or the like. The data system 126 may be accessed via an API and/or it may be accessed via a query such as a SQL query, or the like.

In this example, a user, such as a process expert, may interact with the software application 122 via a user device 110 such as a laptop computer, a mobile device, a desktop computer, a server, and the like. For example, the user may use the user device 110 to connect to a website, uniform resource locator (URL), or other location where the software application 122 is hosted. In some examples, the software application 122 is a progressive web application, a mobile application, or the like. In some embodiments, the software application 122 is a suite of multiple applications. The software application 122 may include a front-end with a user interface 112 that is output on a screen / display of the user device 110 once a session is established between the user device 110 and the host platform 120.

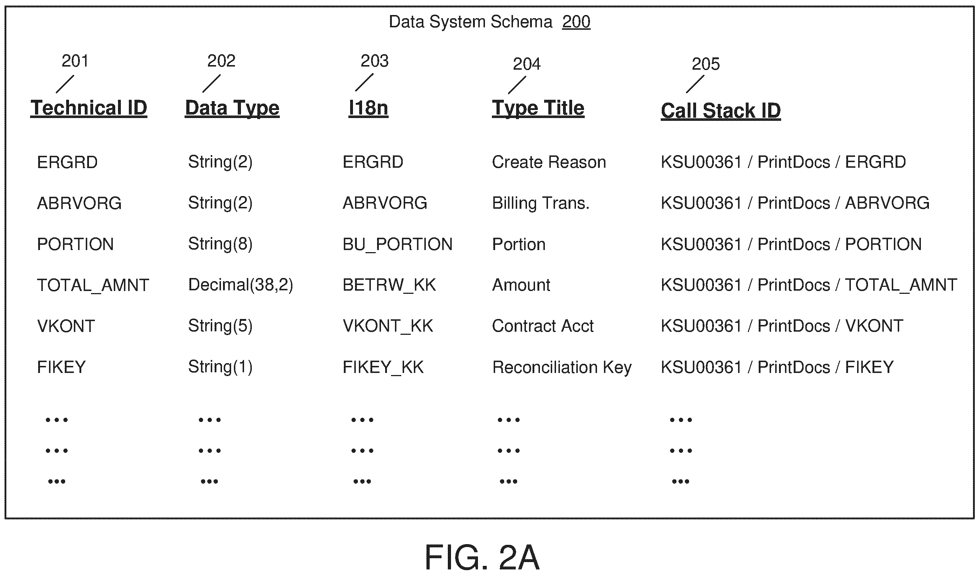

According to various embodiments, the user may select a system where the process data is located from among the data system 126 and the data system 130. In this example, the data system 130 is accessed via an application programming interface (API) 132. The software application 122 may output guidance for the user via the user interface 112 to assist the user in selecting the correct system. A schema of the selected system may be uploaded to the software application 122 via the user interface 112. For example, the user may upload a file, a document a spreadsheet, or the like which includes the schema information. An example of a schema of a data system in shown in FIG. 2A.

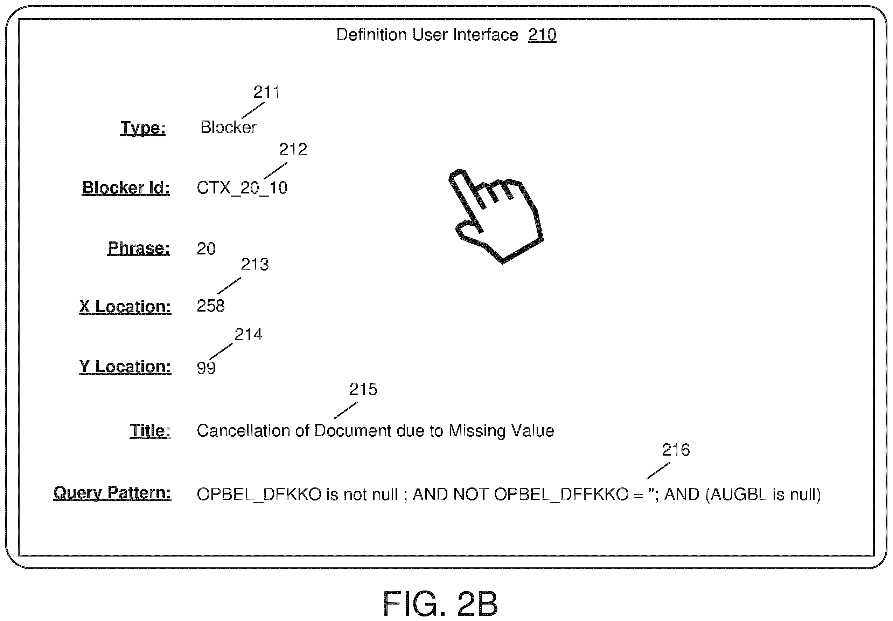

The software application 122 may also provide various user interfaces which enable the user to define milestones within the process and blockers for those milestones. An example of such a user interface is shown in FIG. 2B. The user interfaces may be accessible via a same page of the software application 122 or across multiple different pages of the software application 122. The user may also define a script or other instructions with query commands for querying the data necessary for analyzing the milestones and blocker(s) of the milestone via the user interface. Each blocker may have its own query, for example, a structured query language (SQL) query, or the like. The software application 122 may provide user interfaces and standardized lists of milestones and blockers (*e.g.*, via drop-down menus, etc.) that the user can select from. Furthermore, software application 122 may also provide support and assistance in developing queries for accessing the data from the underlying data system.

When queries for blockers have been generated, the software application 122 may create one or more scripts, API calls, etc., which can be executed by a query processor 124 on the selected data system to extract the data necessary for analyzing each of the blockers via a single command. For example, the software application 122 may generate a structured query language (SQL) query for the blockers and then create one or more scripts that extract a union of all of the relevant fields from the data system.

In some embodiments, the data system may also include an API, such as data system 130 which includes an API 132. In this example, the query generated by the software application 122 may include query commands and/or API calls for extracting the process data from the data system 130. The generated script, query, etc. may be stored by the software application 122 and accessed by the user via the user device 110 or any other user with access to the process data via the software application 122. Here, the user may provide an identifier of the process (*e.g.,* a process ID, etc.). In response, the software application 122 may query the selected data system based on the previously generated query corresponding to the process ID, and execute an analytic(s) on the process data to generate process insights which can be displayed on the user interface 112.

FIG. 2A illustrates a schema 200 of a data system uploaded to the host platform in accordance with an example embodiment. For example, the schema 200 may be a table schema that is uploaded via a user interface of the host system or via a document or other file that can be ingested via an API or other means. The schema 200 includes attributes 201, 202, 203, 204, and 205 which can include identifiers of tables, columns, data values, etc., as well as data types, names, locations / paths to the data and/or the software stack, and the like. In response, the host system can identify how to access the data for analyzing the milestones and blockers of the milestones, for example, using type-checking and auto-completion. The actual data from the data system which is needed to calculate the metrics for the milestones and blockers depends on the queries on top of available data fields in the table.

With reference to FIG. 2B, a query for a milestone or blocker may be defined by a process expert based on these data fields, checking for specific constraints as depicted in input field 216. The sum of the data fields in these queries identifies which table columns the host system has to retrieve from the data system to allow for the standardized process insights. The actual retrieval is then possible in a customer setting where the customer identifies the data system to be used, including providing access, e.g., via API tokens to ensure that the host system can retrieve the required data set.

FIG. 2B illustrates a user interface 210 for defining queries for extracting data and generating display values (*e.g.,* of milestones and blockers) of a business process on a user interface for insight analysis in accordance with an example embodiment. For example, the user interface 210 includes input fields 211, 212, 213, 214, 215, and 216, which request information from the user. The input fields may be "standard" fields that request general attributes with of a blocker and/or milestone to be defined. For example, the input values entered into the fields may identify a name of the milestone or blocker, a type of the blocker, a pixel location(s) on the user interface where a graphical object corresponding to the milestone / blocker is to be displayed, and the like. In addition, the input field 216 may be used to define a query pattern for querying an underlying data system for the data to be used to analyze this milestone / blocker.

In this example, a blocker is being defined. However, it should also be appreciated that milestones may be identified / defined in a similar way using a similar user interface. Essentially, out of all the business objects (logical data objects that typically represent analog world objects or documents), such as a Sales Order in scope for the process under investigation, the query of a blocker may need to define which of many instances (*e.g.*, hundreds of thousands of instances, etc.) are considered to be affected by the blocker. For example, a blocker identifying manually blocked sales orders would cause the system to check whether the corresponding flag found in a specific table is set to true. Then, in response to the blocker, the system could cause the end users' UI could display the amount of manually blocked sales orders, either absolute (500 items) or relative (0.5%).

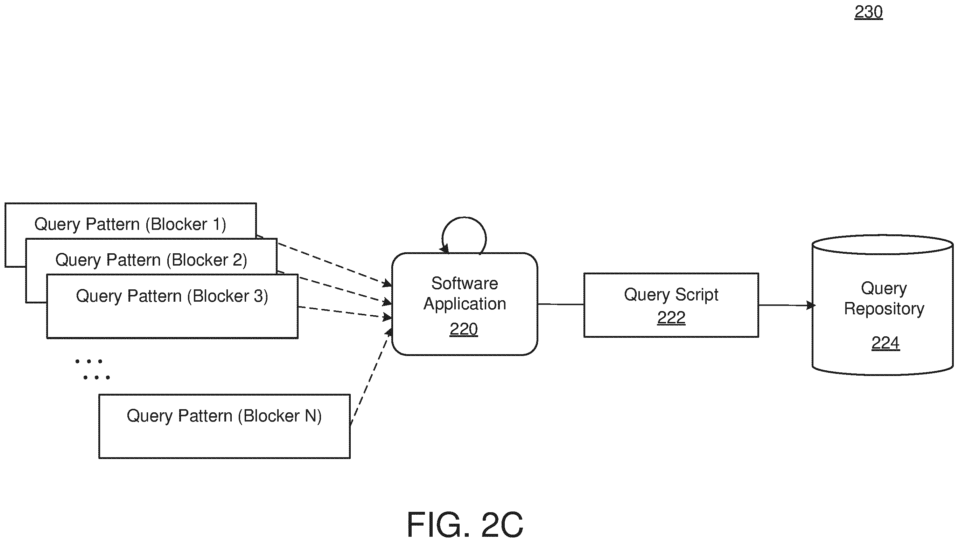

FIG. 2C illustrates a process 230 of generating an executable query for generating process insights in accordance with an example embodiment. The user may use the user interface 210 in FIG. 2B to generate queries for data for analyzing blockers of the process resulting in multiple query patterns as shown in FIG. 2C. The software application 220 may combine these queries into a query script 222 (*e.g.,* a single script) that can be executed to extract all of the data for all of the blockers of the process at once (in a unionized view) from an underlying data system, and return a unionized result of all the values for all the fields in a data structure such as a Core Data Services (CDS) view or the like. The query script 222 can be stored within a query repository 224, or the like. As another example, the software application 220 may generate a query without using a script, or the results of executing multiple scripts can be combined. As another example, the software application may generate commands for extracting the data from the underlying data system using API calls instead of or in combination with database queries.

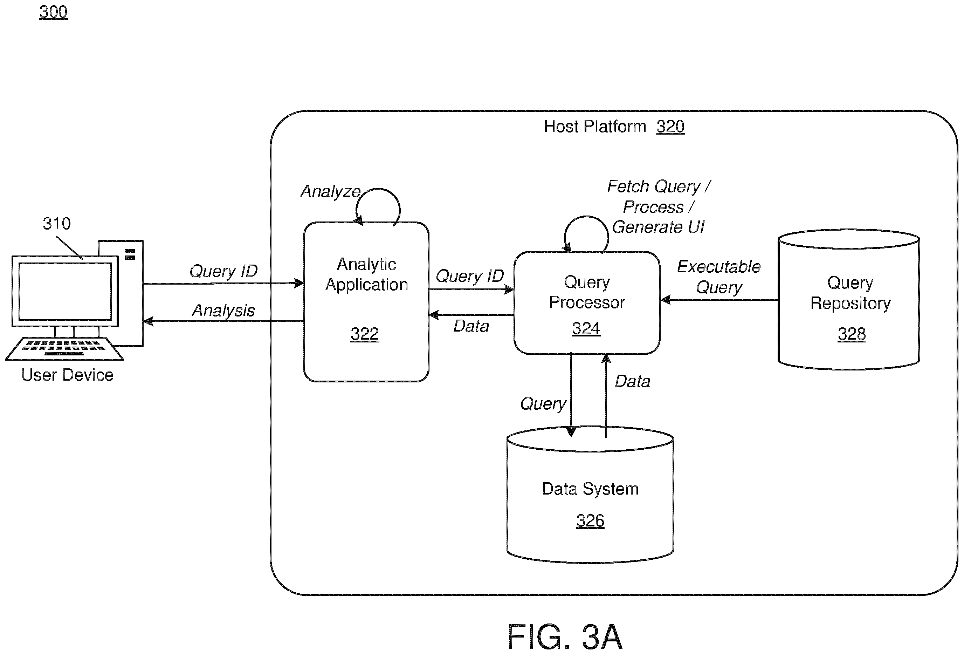

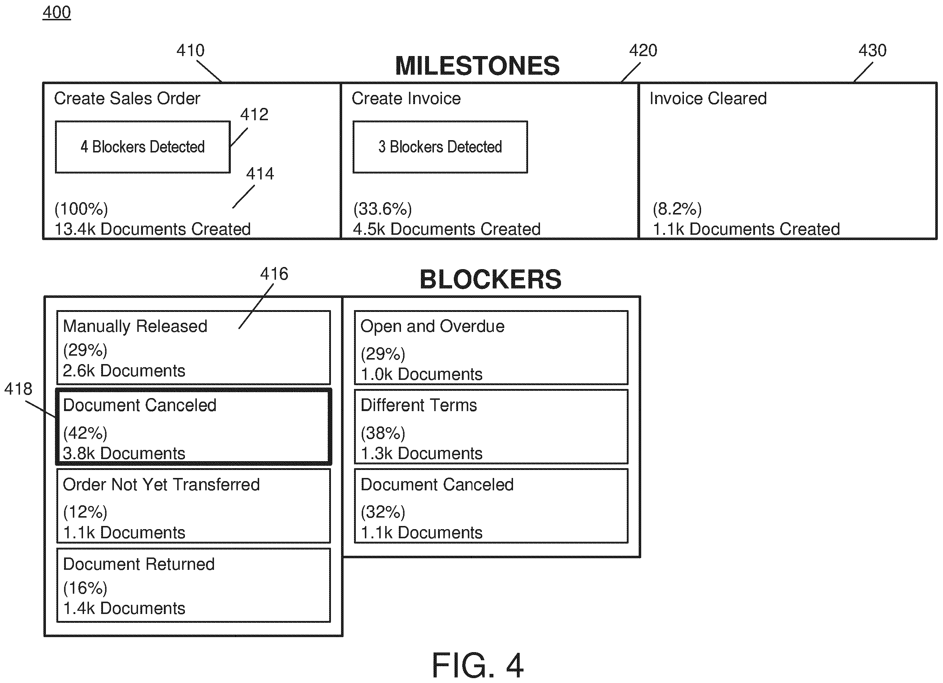

FIG. 3A illustrates a process 300 of executing a query and generating process insights in accordance with an example embodiment, while FIG. 4 illustrates an example of a user interface 400 with various insights provided by the analysis of the example embodiments. Referring back to FIG. 3A, a host platform 320 hosts an analytic application 322. The analytic application 322 may be the same as the software application 122 shown in FIG. 1, or it may be a different application such as another application in the same suite of applications that interacts with or otherwise can receive and send data to the software application 122.

In this example, a user may submit a query ID of a previously generated query that is held in a query repository 328 of the host platform 320 via a user device 310 which is connected to the host platform 320 via a network. In this example, the user can correspond to a customer (*i.e.,* an end user of the system) and not a process expert helping build the system as was the case in FIGS. 2A-2C. The query ID may be supplied by the user inputting the query ID (*e.g.,* string value, etc.) into a user interface of the analytic application 322 via the user device 310. Here, the analytic application 322 may pass the query ID to a query processor 324 which generates and executes a query for the process data on a data system 326. In this example, the query processor 324 uses the query ID to obtain a query (*e.g.,* query script, API call, etc.) from the query repository 328 which includes commands and instructions for extracting the process data from the data system 326 and providing the data to the analytic application 322.

The process data that pulled / extracted from the data system 326 may include values of table data that are pulled from tables stored in the data system 326 including order data, invoice data, payment data, shipping data, transportation data, inventory data, and the like. Through this data, the analytic application 322 can analyze the data to identify insights associated with the process. For example, the analytic application 322 may identify how long it takes for each milestone to be reached (*e.g.,* the amount of time that elapses between milestones) and the blockers that block these milestones from being achieved. To identify the duration between milestones, the analytic application 322 may use timestamps of when the process enters the two respective milestones on average and subtract the two.

For a given standard process $\mathcal{P}$ , the analytic application 322 can check whether the process data $\mathcal{S}$ collected during an execution of $\mathcal{P}$ (also referred to as data footprint of $\mathcal{P}$ in $\mathcal{S}$ ) fulfills the data needs of a query $Q$. This can be performed by a team of process experts who know $\mathcal{P}$ and system experts who know $\mathcal{S}$ . With an autocompletion-support tool, these experts can define a process, its milestones and blockers (along with their respective queries) within hours. Once this is done, the analysis of standard process $\mathcal{P}$ is available for all customers running $\mathcal{P}$ on $\mathcal{S}$ . Customizations are out of scope for the current discussion, as each customization of $\mathcal{P}$ in $\mathcal{S}$ will incur customer-specific efforts of mapping additional data fields in $\mathcal{S}$ to $\mathcal{P}$' .

The resulting insights that are generated by the analytic application 322 may include identifications of the milestones of the process, identifications of the blockers, an amount of elapsed time on average between the milestones, the number of processes that make it to each milestone, how each blocker affects the achievement of milestones within the process, and the like. For example, in FIG. 4, a user interface 400 displays insights that identify a plurality of milestones 410, 420, and 430, and attributes of the milestones including a number of blockers 412 that are detected and attributes 414 of the milestone with respect to other milestones. In this example, the milestones 410, 420, and 430 are executed in sequence within the end-to-end business process and each involve a document. In this example, the milestones each correspond to documents involved in the process.

In this example, milestone 410 represents a step of generating a sales order, milestone 420 represents a step of generating an invoice based on the sales order, and milestone 430 represents clearing the invoice (based on successful payment). The milestone 410 includes four blockers which are show below the milestone 410 including a blocker 416 directed to manually released documents. Other blockers including cancellation of documents, not transferring an order to the invoicing department, returning the sales order for errors, and the like. To assist the user in understanding the issues, the host system can display an identifier of the number of blockers 412 within the milestone 410, and also attributes 414 of the milestone 410 inside a content area of the graphical object of the milestone 410 on the user interface 400. Also, the average lead time of getting from one milestone to its successor can be computed and displayed for additional insights.

In addition to identifying the amount of time and the attributes of the milestones and the blockers, the analytic application 322 may distinguish different graphical objects on the screen. As an example, the analytic application 322 may highlight an object with a bold line 418 to identify this blocker as something that needs to be addressed more urgently as it is causing a lot of loss within the process. Thus, the system can identify a priority among the different blockers and display visual indicators of such priority or arrange the display of the blockers in an order based on the priority, etc. This priority can be based on thresholds the process experts provided based on their experience for what is considered good or bad for the process execution when they defined the blockers.

In some embodiments, each milestone may be associated with a document that is involved in the process such as an order, an invoice, a financial document, or the like. The blockers may refer to actions or other events / items within the process that block or otherwise prevent the milestone (*e.g.,* the document) from being completed in some way such as incorrect content, not yet submitted, submitted and returned, canceled, etc. Furthermore, each of the milestones 410, 420, and 430, may identify the number of documents generated for the milestone and the percentage or ratio of such documents that compete the milestone. For example, in FIG. 4, the milestone 410 includes 13,400 documents (sales orders) being created, but only 4500 of the documents were eventually converted into invoices in the milestone 420. This corresponds to a loss of about 66.4%. These insights can be provided to the user via the user interface 400.

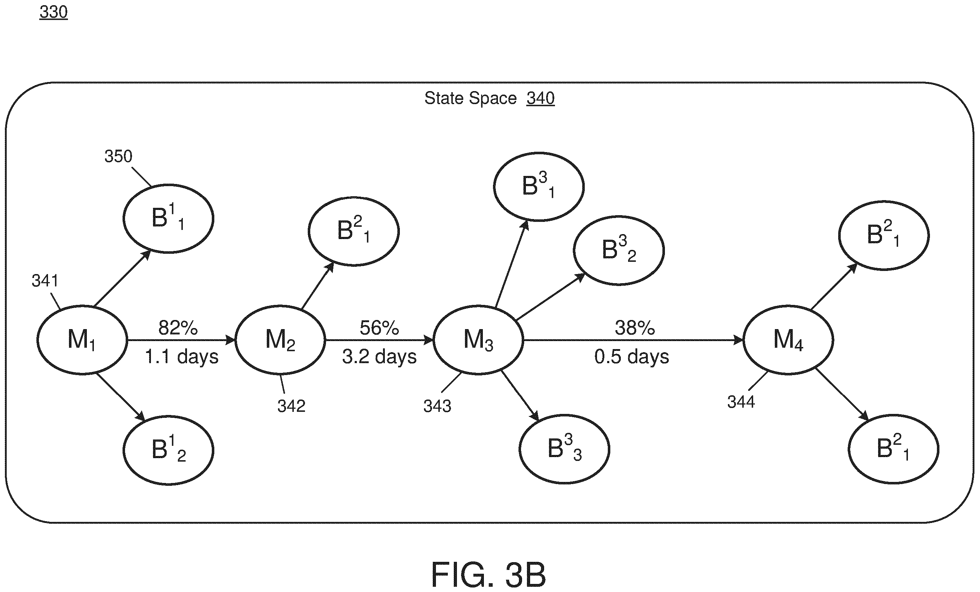

FIG. 3B illustrates a process 330 of identifying milestones and blockers as a subset of the overall state space in accordance with an example embodiment. Referring to FIG. 3B, the entire process space of a business process is shown as state space 340. A traditional process mining approach would analyze the state space 340 in its entirety. In contrast, in the example embodiments, the host system may identify one or more milestones such as milestones 341, 342, 343, and 344, and blockers 350 for the respective milestones. In this example, the blocker 350 is a blocker for milestone 341. Each milestone may have its own respective blockers or it may not. For example, each milestone may include zero blockers, one blocker, more than one blocker, and/or the like. In this way, the process is only analyzed based on the key areas of the process associated with milestones (*e.g.*, document creation, document submission, document clearing, etc.) instead of the entire state space which can take significantly more time and overwhelm users.

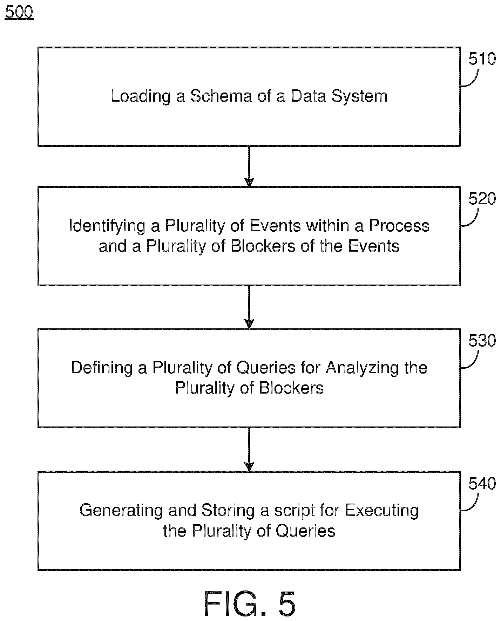

FIG. 5 illustrates a method 500 of generating an executable query for generating process insights in accordance with an example embodiment. For example, the method 500 may be performed by a software application hosted by a host platform such as a cloud platform, a web server, a distributed system, a database, or the like. Referring to FIG. 5, in 510, the method may include loading a schema of a data system into memory. The schema may include identifiers of data values, data types, table names, column names, locations of the system on network, and the like. The schema may be uploaded in the form of a file or via input on a user interface.

In 520, the method may include identifying a plurality of events that occur within a process supported by data from the data system and a plurality of blockers that prevent the plurality of events from completing. In 530, the method may include defining a plurality of queries for the plurality of blockers, respectively, wherein each query comprises instructions for extracting data for a respective blocker from the data system based on the schema and for executing the process based on the extracted data. In 540, the method may include generating a script for executing the plurality of queries and transmitting the script to a software application. The script may include instructions for executing a database query such as an SQL query. The script may also or instead include a series of calls to be made to an application programming interface (API) of the data system for retrieving the data for generating the process insights.

In some embodiments, the method may further include executing the script via the software application, wherein the executing comprises querying the data system for document data based on the plurality of defined queries via the software application, and executing the process based on the document data to generate process results based on the plurality of blockers. In some embodiments, the method may further include identifying an event and a plurality of blockers that prevent the event from being completed based on the generated process results, and displaying an identifier of the event and identifiers of the one or more blockers via a user interface. In some embodiments, the method may further include identifying a most urgent blocker from among the plurality of blockers based on a rate of occurrence of the most urgent blocker from the generated process results, and distinguishing a display of an identifier of the most urgent blocker from a display of identifiers of other blockers from among the plurality of blockers displayed on the user interface.

In some embodiments, the defining may include defining a plurality of structured query language (SQL) queries for accessing table data of the process from the data system, and the generating comprises generating a script for executing a single SQL query which includes a union of the plurality of SQL queries. In some embodiments, the identifying the plurality of events may include identifying a plurality of documents that are used by the process and locations of table data from the data system for filling in fields of the plurality of documents. In some embodiments, the identifying the plurality of blockers may include identifying a plurality of blocking events that prevent the plurality of documents from being completed during the process. In some embodiments, the defining may include defining a query for a blocker based on a document that is associated with the blocker and a location of table data from the data system for filling in fields of the document.

**Example 3- Example Comparison of Process to Reference Process**

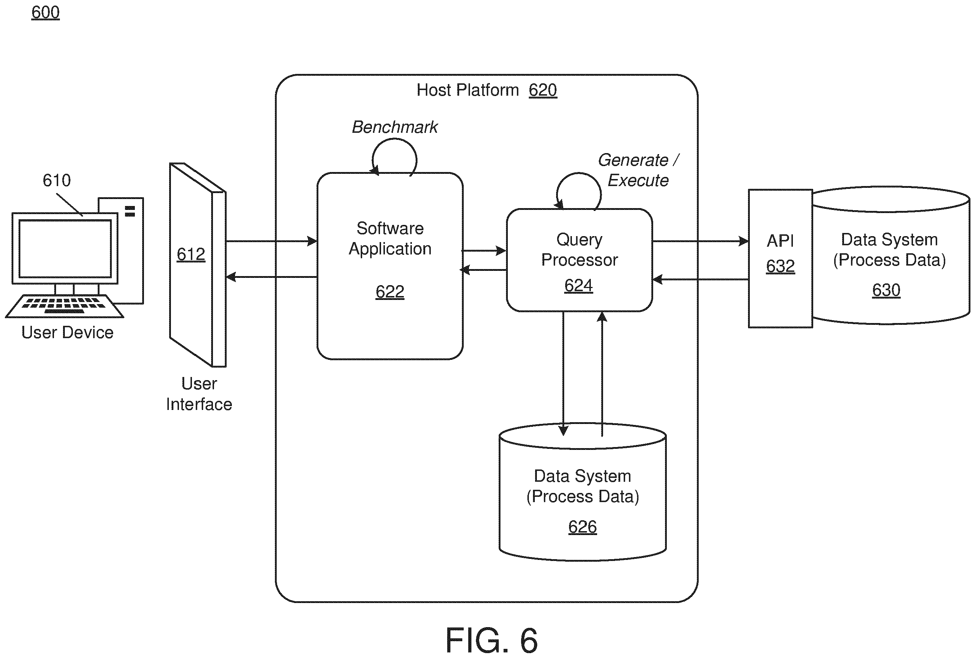

FIG. 6 illustrates a computing environment 600 of a host platform 620 for benchmarking a target process in accordance with an example embodiment. Referring to FIG. 6, the host platform 620 may be a cloud platform, a web server, a database, a combination of devices, and the like. The host platform 620 hosts a software application 622 for benchmarking. The software application may include one or more analytic programs that can analyze a business process and generate a benchmark of the process based on a reference process that contains the best practices of the process type. The data used by the software application 622 to benchmark the process may be stored in a data system, for example, data system 626 that is local to the host platform and/or data system 630 that is external to the host platform 620 and that is accessible via a network such as the Internet. As described herein, a data system may refer to a database, a website, a data service, a blockchain, or the like. The data system 626 may be accessed via an API and/or it may be accessed via a query such as a SQL query, or the like.

In this Example 3, a user such as a process expert may interact with the software application 622 via a user device 610 such as a laptop computer, a mobile device, a desktop computer, a server, and the like. For example, the user may use the user device 610 to connect to a website, uniform resource locator (URL), or other location where the software application 622 is hosted. In some examples, the software application 622 is a progressive web application, a mobile application, or the like. In some embodiments, the software application 622 is actually a suite of multiple applications. The software application 622 may include a front-end with a user interface 612 that is output on a screen / display of the user device 610 once a session is established between the user device 610 and the host platform 620.

According to various embodiments, the user may select a system where the process data is located from among the data system 626 and the data system 630. In this example, the data system 630 is accessed via an application programming interface (API) such as API 632. The software application 622 may output guidance for the user via the user interface 612 to assist the user in selecting the correct system. A schema of the selected system may be uploaded to the software application 622 via the user interface 612. For example, the user may upload a file, a document, a spreadsheet, or the like which includes the schema information.

The software application 622 may also provide various user interfaces which enable the user to define milestones within the process and blockers for those milestones. The user interfaces may be accessible via a same page of the software application 622 or across multiple different pages of the software application 622. The user may also define a script or other instructions with query commands for querying the data necessary for analyzing the milestones and blocker(s) of the milestone via the user interface. Each blocker may have its own query, for example, a structured query language (SQL) query, or the like. The software application 622 may provide user interfaces and standardized lists of milestones and blockers (*e.g.,* via drop-down menus, etc.) that the user can select from. Furthermore, software application 622 may also provide support and assistance in developing queries for accessing the data from the underlying data system.

When all queries for all blockers have been generated, the software application 622 may create a single script, API call, etc., which can be executed by a query processor 624 on the selected data system to retrieve the data necessary for analyzing each of the blockers via a single command, such as described in Example 2. For example, the software application 622 may generate a structured query language (SQL) query for each of the blockers and then create a single script which extracts a union of all of the fields necessary from the data system. In some embodiments, the data system may also include an API, such as data system 630 which includes an API 632. In this example, the query generated by the software application 622 may include query commands and/or API calls for extracting or pushing the process data from the data system 630.

Process insights provided in response to a query may include identifiers of milestones (*e.g.,* events, activities, etc.) within the process and any blockers associated with the milestones. In addition, the insights may include context associated with the milestones and blockers such as how many users / customers are affected by the blockers, how many customers / users fail to finish the process, where customers are getting stuck in the process, and the like.

In addition to identifications of the milestones and blockers of the process, the insights may also include an amount of elapsed time on average between the milestones such as an average amount of execution time between two process events, the number of processes that make it to each milestone (*e.g.,* a percentage, ratio, etc.), the total cost of each process event, how each blocker affects the achievement of milestones within the process, and the like.

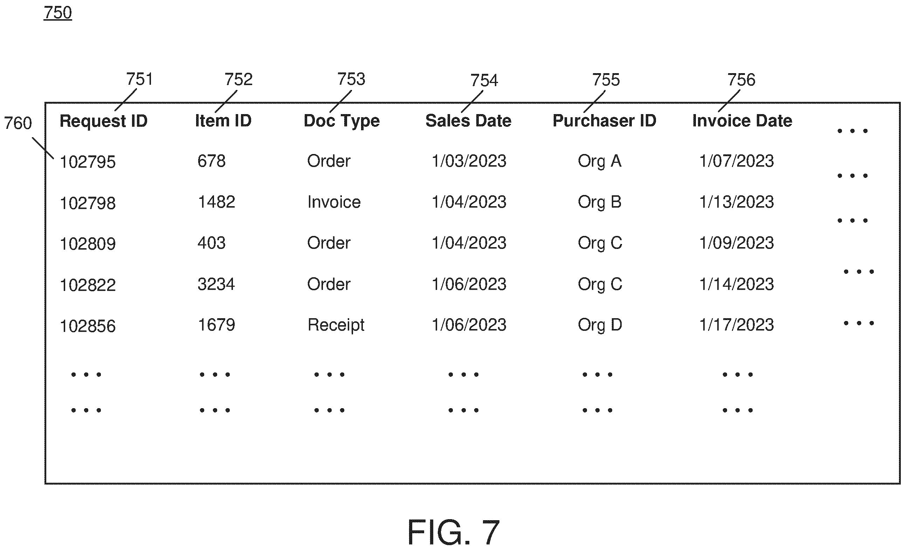

FIG. 7 illustrates a data set 750 resulting from generating the process insights in FIG. 6, in accordance with example embodiments. The data set 750 may include a record of a particular item / product that is purchased via the process. Here, the data set 750 includes a plurality of columns 751, 752, 753, 754, 755, 756, etc., as well as columns not shown which can be analyzed by the host system to generate a log of events that have occurred within the process. In other words, the host system can analyze the data stored in the data set 750 which may include document data from the underlying database / data system, and generate a listing of events that have occurred within a process.

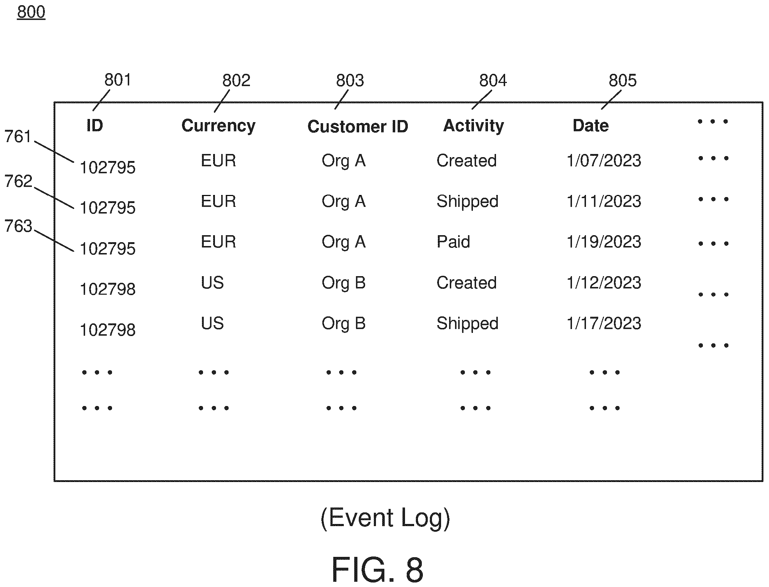

FIG. 8 illustrates an example of an event log 800 that can be generated from the data set 750 shown in FIG. 7. Referring to FIG. 8, the event log 800 includes a plurality of columns of data values including columns 801, 802, 803, 804, 805, and the like. In this example, the event log 800 includes multiple events (*e.g.,* three events, four events, etc.) which have been interpreted from each record shown in FIG. 7. For example, a first record 760 shown in FIG. 7 includes three events 761, 762, and 763 in the event log 800 in FIG. 8. The events 761, 762, and 763 may be identified from within the same record using timestamps of the events which are stored in the record. For example, each timestamp may be paired with an action (*e.g.*, invoice creation, etc.). The host system may analyze the records in the data set 750 and interpret the records to generate events which are added to the event log 800.

The events may include actions that occur within the process including creating a sales order, shipping the item to the customer, receiving payment for the item from the customer, etc. In many cases, the events may correspond to the milestones and/or the blockers already identified. The host system may identify the events within the event log 800 and pair the events with a corresponding timestamp from the record to generate a log entry in the event log 800. In other words, the host system may pair activities identified from the insight data with timestamps found in the insight data to generate an activity definition that can be analyzed for additional process insights. The process may be performed by an executable script creating one event log per standardized milestones definition of the process. Accordingly, the definition of this script generation the event log 800 can be a one-time effort. The time it takes the script to complete execution (i.e., create the log) is typically based at least in part on the amount of data to process. Furthermore, state-of-the-art process mining solutions can display first process graphs (*i.e.,* diagrams) within minutes.

The event log 800 can be used to build a process graph of the process. For example, the process graph may be similar in appearance as a process diagram created from process mining. However, in this case, historical data (*e.g.*, document data, etc.) is used to mine the process without interacting with the process.

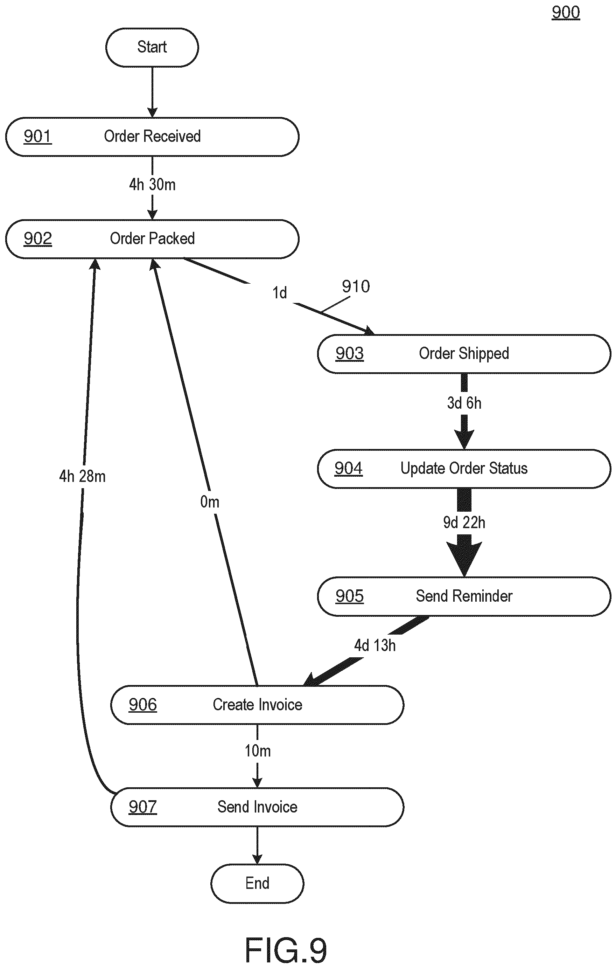

FIG. 9 illustrates an example of a process diagram 900 that may be generated based on document data such as the event log shown in FIG. 8, in accordance with example embodiments. The process diagram may include a plurality of nodes including a node 901, 902, 903, 904, 905, 906, and 907, representing events that occur during the process and edges 910 between the nodes identifying relationships between the events. For example, the edges 910 within the process diagram may be annotated with contextual attributes 912 of the process with respect to the two events connected by the edge such as average execution time between two the events, percentage of users that travel this part of the process, and the like. In some cases, the edges may be of different widths, colors, etc. to identify parts of the process that take longer than others. For example, the width of an edge may be directly correlated to the length of time between the two events of the two nodes connected by the edge.

The host platform described herein (*e.g.,* the software application 622 shown in FIG. 6) may convert document data, such as the document data that has been converted into the event log 800 shown in FIG. 8, into the process diagram 900 that is shown in FIG. 9. For example, the process can include a plurality of steps, such as a payment being processed in a first step (the node 901), an order being packaged in a second step (node 902), the packaged order being shipped in a third step (the node 903), the order status of the package being updated in the system in a fourth step (the node 904), a reminder being sent on the order to an account in a fifth step (the node 905), creation of an invoice in a sixth step (the node 906), and sending of the invoice to the customer in a seventh step (the node 907). Furthermore, many of the nodes include reverse flows (directional edges going the other way) to previous nodes representing users that had to return to previous steps in the process due to issues and other errors.

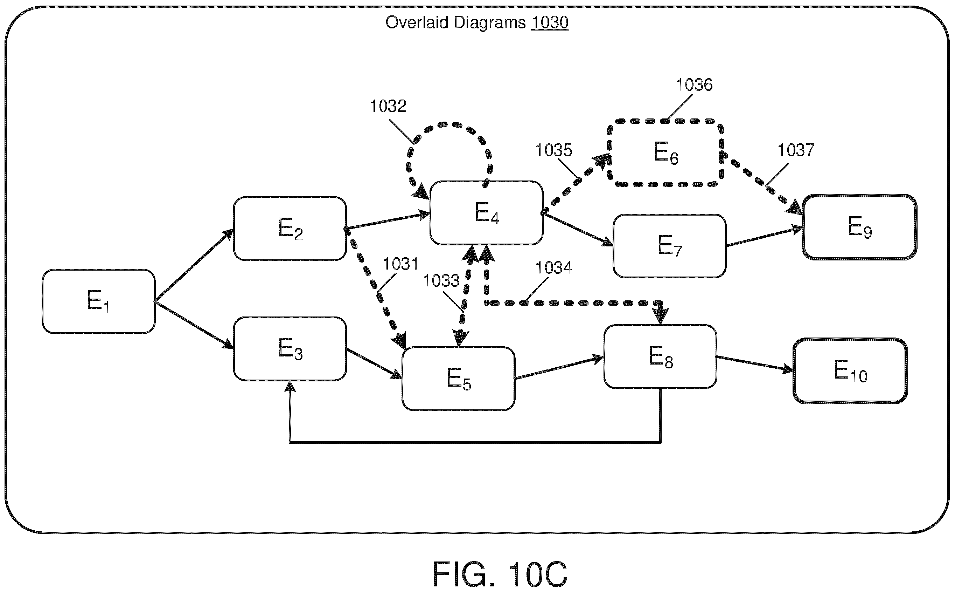

Additionally, virtual events can be constructed wherever necessary. For example, a process mining algorithm may identify that after an event such as an invoice being created, the process does not provide any additional activity. In this example, the algorithm may infer a missing event (*e.g.*, sending the invoice to the customer, etc.) based on comparisons of the process to implementations of other customers. In this case, a virtual event can be constructed and added to the process diagram, indicated as "missing" (for example, event 1036 of FIG. 10C).

The process diagram may be stored within a repository. In some embodiments, a process diagram may be in the format of a Business Process Model and Notation (BPMN) model which is a standard for business process modeling. For example, the BPMN model can provide a graphical notation for specifying business processes in a Business Process Diagram (BPD) based on a flowcharting technique very similar to activity diagrams from Unified Modeling Language (UML). The objective of BPMN is to support business process management, for both technical users and business users, by providing a notation that is intuitive to business users, yet able to represent complex process semantics. The BPMN specification also provides a mapping between the graphics of the notation and the underlying constructs of execution languages, where BPMN also includes execution functionality.

BPMN models are typically expressed by simple diagrams constructed from a limited set of graphical elements. For both business users and developers, they simplify understanding of business activities' flow and process. BPMN's four basic element categories are Flow objects (*e.g.,* events, activities, gateways, etc.), connecting objects (*e.g.,* sequence flow, message flow, association, etc.), swim lanes (*e.g.,* pool, lane, dark pool, etc.), and artifacts (*e.g.*, data object, group annotation, etc.). These four categories enable creation of simple business process diagrams (BPDs). BPDs also permit making new types of flow objects or artifacts, to make the diagram more understandable.

The process diagrams described herein may be processed based on thresholds, which can help ensure the most relevant process variants are exported. For example, a process may include the following events (event A=created, event B=shipped, and event C=paid) which are observed in all permutations. Here simply constructing a graph diagram of such a process would result in a rather trivial graph/diagram which would not lead to insights about how the process is run. However, if the event sequence A, B, C makes up only 5% of the process runs while the event sequence A, C, B makes up 95% of all paths, a diagram showing these two variants is relevant and specific for the process and its owner / developer. This generation provides traceability via identifiers (*e.g.*, event type references for activities in process models, etc.). This also allows the host system to be used to automatically add live insights (*e.g.,* KPI values) from process insights or other data sources to the corresponding activities in the process models.

When the process diagram has been created, the host system may select a reference diagram of the process and analyze it for additional insights. The reference diagram may be generated in advance and may include a sequence of steps that are best practices in the industry for that type of process. The reference diagrams can be generated by users, generated by analysis, or the like. Here, the host system may compare the process diagram to the reference diagram to provide additional insight about how to improve the target process shown in the process diagram.

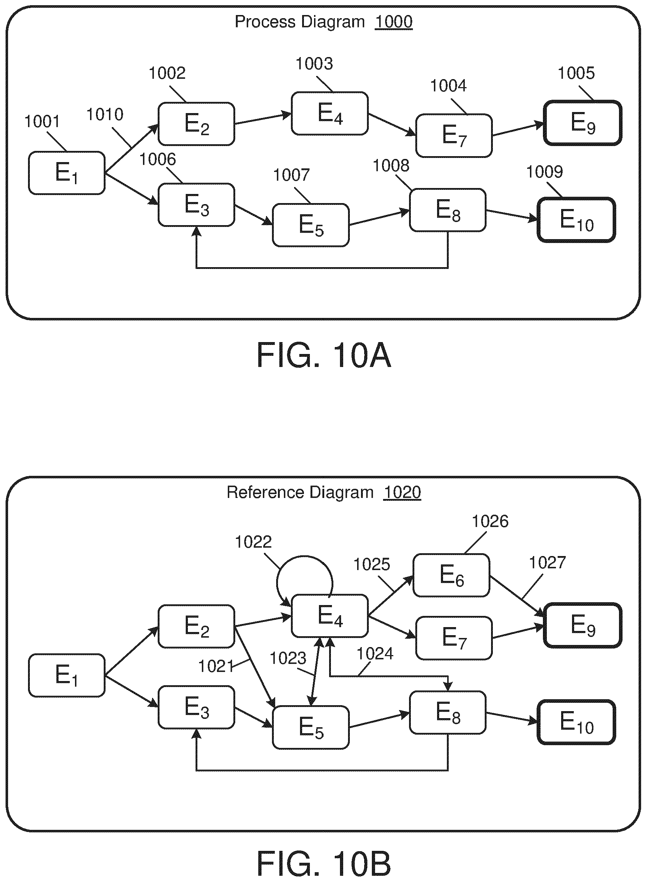

FIGS. 10A-10C illustrate a process of identifying a suggested improvement to a target process based on a reference diagram of a reference process in accordance with example embodiments. FIG. 10A illustrates a process diagram 1000 of an analyzed process. The process diagram 1000 may be generated from document data by the software application 622 described in the example of FIG. 6. The process diagram 1000 includes a plurality of nodes 1001-1009 corresponding to a sequence of events that occur during execution of the target process and edges 1010 between the plurality of nodes 1001-1009 which identify executional dependencies between the events. The process diagram 1000 represents a current implementation of an entity's process. A target process (such as a more optimal process) can be derived based off of the benchmarking process described herein.

FIG. 10B illustrates a reference diagram 1020 (also referred to herein as a reference process) that is related to the target process shown in the process diagram 1000. For example, the reference process may be the same type of process, but with a different sequence of steps, edges, nodes, etc. than the target process. In this example, the reference diagram 1020 includes the nodes 1001-1009 from the target process. In addition, the reference diagram also includes nodes 1021-1027, and edges therebetween that are from the reference process and which are not included in the target process.

Based on process analyses using the same approach, the host platform 620 contains information about how other customers implemented their processes (626) and, e.g., that edge 1021 is used by 90% of the industry peers which execute the process 20% faster. The reference diagram 1020 may be a copy of another process (such as of another entity) that has been identified as being a best-in-class process. As another example, the reference diagram 1020 may be generated by combining steps of the process from multiple different process diagrams in the same field to build a complete model of the process.

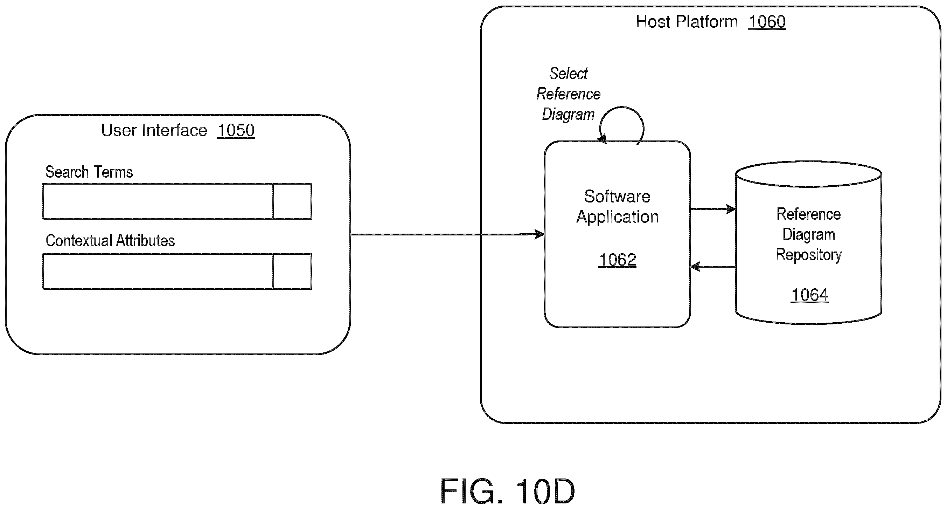

The reference diagram 1020 may be supplied by the user (entity) that also submits the process diagram 1000. As another example, the reference diagram 1020 may be identified by the host platform, such as by searching for the reference diagram 1020 using a search interface as described in FIG. 10D. It should be appreciated that there is not limitation to how the reference diagram 1020 is generated.

According to various embodiments, the system described herein may overlay the reference diagram 1020 on top of the process diagram 1000 to generate a visualization of steps that can be integrated into the process diagram 1000 to help improve the execution of the target process corresponding to the process diagram 1000. Furthermore, the system may remove steps to prevent the process from becoming more complicated and thereby simplifying the process.

FIG. 10C illustrates a process 1030 of overlaying the reference diagram 1020 on the process diagram 1000 to generate a pair of overlaid diagrams 1030 within a user interface of the software application. In this example, the overlaid diagrams 1030 illustrate suggested recommendations that include an alternative data flow 1031, 1032, 1033, 1034, 1035, 1036, and 1037 within the target process by integrating the alternative data flow into the process diagram 1000.

The overlaying process may integrate pieces of the reference diagram 1020 into the process diagram 1000. For example, the system may connect an edge 1035 between an existing node ($E_4$) of the process diagram 1000 and a new node ($E_6$) in the reference diagram 1020 as shown in FIG. 10C to visually show how the existing process can be modified to create the improvement.

Here, the software may distinguish the recommended changes (different data flow / steps) on the user interface from the existing flow of the target process using highlighting, bolded lines, thicker lines, different colors, shading, and the like. As a result, a viewer can quickly see what changes to make to the target process based on the alternative data flow including the node 1036 and the edges 1031, 1032, 1033, 1034, 1036, and 1037 therein.

FIG. 10D illustrates a user interface 1050 for searching for a reference diagram in accordance with an example embodiment. For example, a host platform 1060 may host a software application 1062 which carries out the benchmarking process described in the present disclosure. The software application 1062 may include or otherwise have access to a repository 1064 of reference diagrams. A user may enter keywords into a search bar on the user interface 1050 which can be submitted to the software application 1062.

Based on process performance metrics collected and derived for each different version of the process diagram customers might have implemented, customers can query the system to display the flow(s) associated with the best results when it comes to, e.g., completion rate, overall execution time or least manual effort. Since each customer might have optimized for different performance metrics, the customer can inspect which ones are most promising and easiest to adapt when overhauling their own processes. Typically, it is desirable to anonymize data of different customers, e.g., by never displaying individual models but only aggregates of the top N customers for a metric.

According to various embodiments, the software application 1062 may manage an index of information about the reference diagrams that are stored in the repository 1064. For example, each diagram may have a description associated therewith that describes the type of process and the steps therein. The software application 1062 may compare the search terms to these descriptions to identify a reference diagram with a description that most closely matches the search input. As another example, other attributes such as process type, location, etc. may be provided for the search and used to identify the reference diagram.

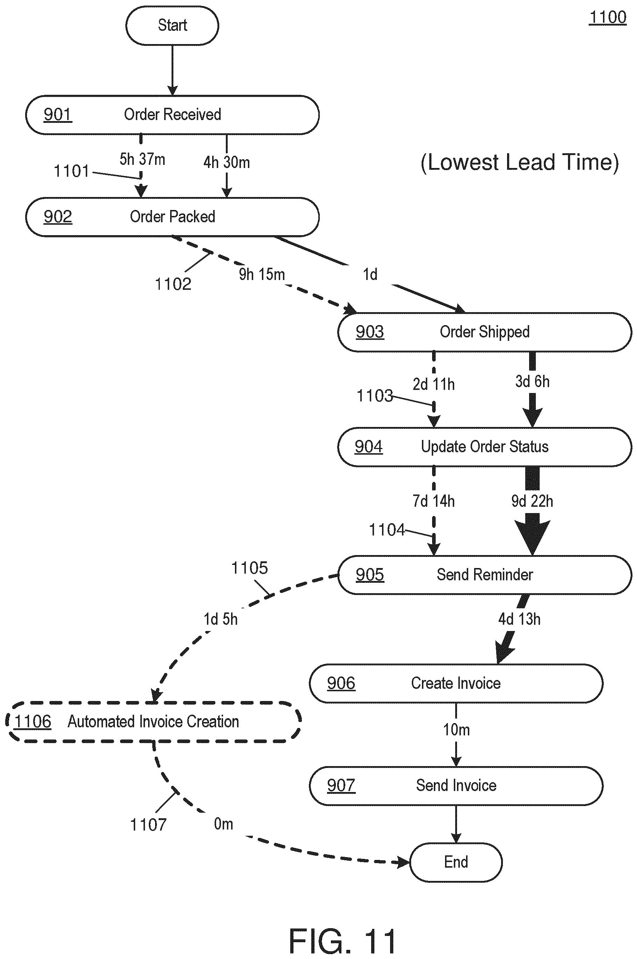

FIG. 11 illustrates a modified process diagram 1100 that includes modifications to the process diagram of the target process shown in FIG. 9. In particular, the modified process diagram 1100 includes an alternative flow path from that runs from the node 905 to the node 907 via a new node 1106 that corresponds to a new event that is included in the reference process but not the target process. The new event can be integrated into the process diagram of the target process thereby visually illustrating the changes that need to be made to the process to improve the process execution.

According to various embodiments, the system described herein may overlay a reference diagram (of a reference process) on the process diagram 900 shown in FIG. 9, to generate the modified process diagram 1100.

Furthermore, the system may identify an improvement by analyzing the execution times within the reference diagram and the process diagram of the target process. For example, differences between execution times can be identified and used to identify changes in the target process that can be integrated from the reference process / reference diagram. As another example, cost analysis may be performed on the process and context associated therewith may be added to the annotated edges and used to determine the improvements to the target process.

In the example of FIG. 11, the best-in-class flow from the reference diagram is shown with a dotted line and includes edges 1101, 1102, 1103, 1104, 1105, and 1107, and it also includes the new node 1106. Here, the best-in-class execution flow is shown in parallel to the execution flow of the target process that is determined from the process mining / document data. The system may visually differentiate the best-in-class flow from the flow of the target process within the modified process diagram 1100 using bold lines, highlighting, different colors, and the like. Furthermore, timing data may be annotated on the edges to show how the process execution differs in time. Thus, a viewer can quickly understand which steps in the target process are causing a problem, and how to address the problem by, e.g., switching from the sequence of 906 and 907 to the alternative step 1106.

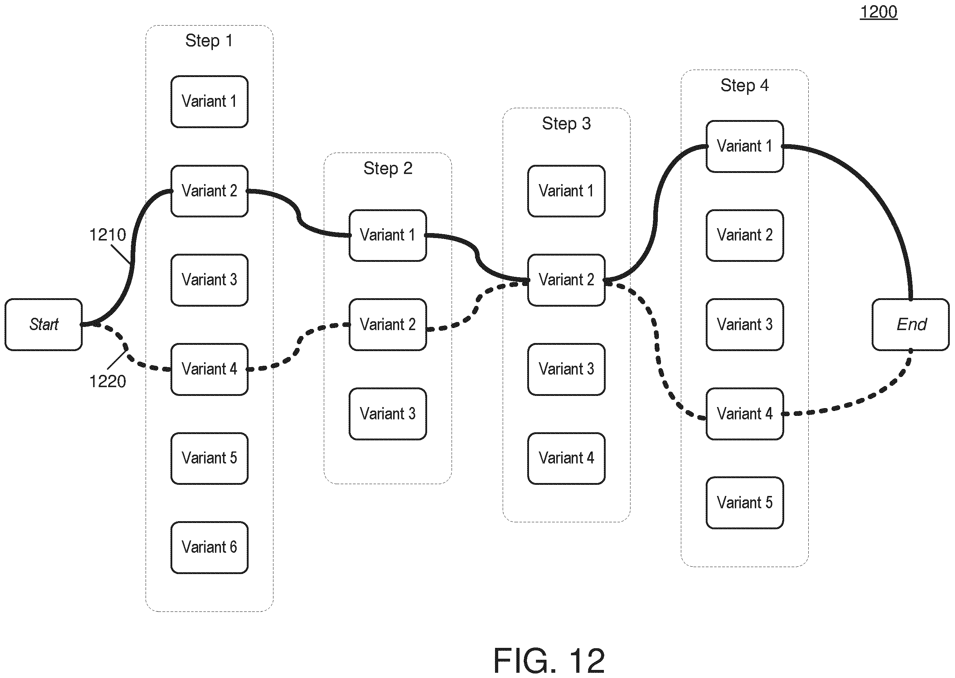

FIG. 12 illustrates a user interface 1200 that includes an analysis of variants among a target process and a reference process in accordance with example embodiments. Referring to FIG. 12, here, the target process includes four steps with four different sets of variants. In particular, a first step includes six possible variants, a second step includes three possible variants, a third step includes four possible variants, and a fourth step includes five possible variants of executing the operation. In this example, the most common variant of the target process is shown with a path 1210. Meanwhile, the most common variant for the best-in-class process is shown with a path 1220. Here, the system identifies which variant most commonly occurs in the target process, and how that variant ranks in the reference process. Furthermore, the system may identify the most common variant in the best-as-is process and compare it to see where it ranks in the target process. The system may display the rankings on the user interface 1200.

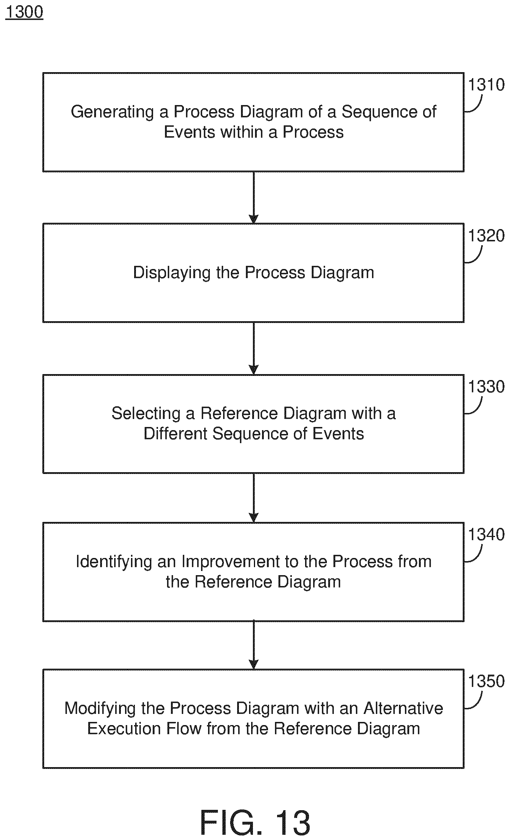

FIG. 13 illustrates a method 1300 of generating a process graph based on process insights in accordance with example embodiments. For example, the method 1300 may be performed by a software application hosted by a host platform such as a cloud platform, a web server, a distributed system, a database, or the like. Referring to FIG. 13, in 1310, the method may include generating a diagram of a process based on data from the process. For example, the diagram may include a sequence of nodes that correspond to a sequence of events that occur within the process and edges between the sequence of nodes which indicate execution times between the sequence of events within the process.

In 1320, the method may include displaying the process diagram via a user interface of a software application. Here, the diagram may be rendered within a window, slot, or other area with a template of the software application. In 1330, the method may include selecting a reference diagram of a reference process from a data store, where the reference diagram has a different sequence of nodes corresponding to a different sequence of events than the sequence of events in the diagram. In 1340, the method may include identifying an improvement to the process based on the reference diagram. In 1350, the method may include modifying the diagram to include a different execution flow included in the reference diagram based on the identified improvement. For example, the method may include overlaying the reference diagram on top of / over the process diagram. In doing so, the differences between the process and the reference process can be visualized. Process execution/definitions can then be modified to conform with the reference process, such as by implementing changes to account for the differences.

In some embodiments, generating the diagram may include annotating an edge between two nodes within the diagram corresponding to two different events within the process with an average execution time between the two different events. In some embodiments, the generating may include querying the data store for document data of the process, and identifying the sequence of events that occur within the process and the execution times between the sequence of events based on the document data. In some embodiments, the modifying may include inserting an alternative edge within the diagram between an existing node among the plurality of nodes within the diagram and a new node included in the different execution flow from the reference diagram.

In some embodiments, the selecting the reference diagram may include displaying a search bar via the user interface, receiving an input search term via the search bar displayed on the user interface, querying a plurality of descriptions of a plurality of respective reference diagrams in a storage device based on the search term, and selecting the reference diagram based on the queried plurality of descriptions in comparison to the input search term. In some embodiments, the modifying may include overlaying the reference diagram on top of the process diagram within the user interface, and identifying the improvement within the process diagram based on a comparison of an alternative process flow within the overlaid reference diagram to an existing process flow within the process diagram.

In some embodiments, the modifying may include visually distinguishing the alternative process flow within the overlaid reference diagram from an existing process flow of the process diagram when the reference diagram is overlaid on the process diagram. In some embodiments, the method may further include identifying a variant that occurs in each of the process and the reference process and identifying differences between the occurrences of the variant in each of the process and the reference process, and displaying the differences via the user interface.

**Example 4- Example Peer Groups for Process Benchmarking**

While benchmarking as described in Example 3 can be helpful, the comparison between a process being analyzed and any particular "best practice" process can be skewed if an analysis entity (i.e., companies/organizations) and the references entities used for determining best practices have different characteristics, such as being of different sizes or of being in difficult industries. For example, an entity with 90% of its revenue coming from the sales of running shoes may assume it should benchmark itself against another well-known shoe making entity oblivious to the fact that the other well-known shoe making entity makes 75% of its revenue from the sale of golf equipment. Selecting the wrong peers or peer group can result in a benchmarking process and insights that are too generic and less trustworthy, or are even suboptimal.

This Example 4 provides a filtering system with an interactive user interface that helps guide a user to select a peer group for the purposes of benchmarking. For example, the filtering system can filter data records (of entities) based on dynamically selected filtering features that are relevant to a target entity. The filtering system includes an interactive user interface that enables a user to dynamically select search parameters and values for these search parameters. The filtering system can then compare the dynamically selected parameters and values to values stored in the data records of other entities to identify entities that best match the search criteria chosen. These entities, and their processes, can be used for benchmarking since these will provide the most relevant comparisons. It should also be appreciated that the filtering system described herein may be used for other features besides benchmarking. For example, anytime an entity wants to compare itself to other entities, the filtering system can be helpful.

The parameters that are used to compare the target entity to the peer entities may include parameter values that are not well known to the target entity but which are highly relevant for comparing two businesses together. For example, parameters such as total revenue, number of employees, number of customers, procurement spending, lead generation spending, and the like, may be much more relevant to determining the similarity of the target entity to a peer entity for process benchmarking purposes than a type of product that is offered by the target entity and a type of product offered by the peer entity(s).

In some embodiments, the filtering process can be used to select a final subset of peers (*e.g.,* 1-5, etc.) from among a much larger set of peers. Due to local, regional or national restrictions of data usage, it can be desirable that these peers remain anonymous, including having a restriction that benchmarking, such as described in Example 3, is performed if a minimum amount of entities are part of the peer group to avoid singling out one specific entity. The process diagrams of the selected peers can then be used to construct a reference diagram with all possible steps from the process diagrams of the peers, which can then be analyzed in a similar manner as described in Example 3. The reference model can be thought of as a complete picture of the process type including all possible known (i.e., defined) steps used by the other processes and the directed edges between these displaying the flow of the process. The host system may generate multiple reference models for different types of processes. The processes may be business processes, sales processes, ordering processes, delivery process, etc.

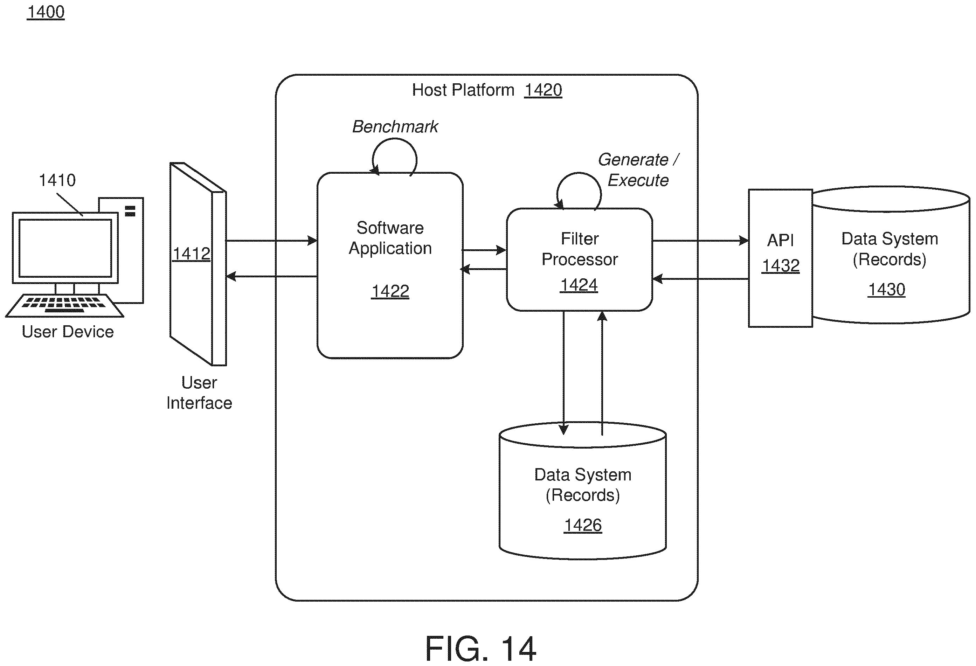

FIG. 14 illustrates a process 1440 of a user interacting with a user interface 1450 for searching for a reference diagram in accordance with an example embodiment. For example, a host platform 1460 may host a software application 1462 which carries out the benchmarking process described in the example embodiments. The software application 1462 may include or otherwise have access to a repository 1464 of process diagrams of other entities, reference diagrams, target process diagrams, and the like. The software application 1462 may also combine multiple process diagrams of multiple entities in the same class to generate a reference diagram for the class. The parameters of the class can be configured by the user by selecting filtering attributes and conditions via controls 1452 on the user interface 1450 which can be submitted to the software application 1462.

Based on process performance metrics collected and derived for each different version of the process diagram customers might have implemented, customers can query the system to display the flow(s) associated with the best results when it comes to, e.g., completion rate, overall execution time or least manual effort. Since each customer might have optimized for different performance metrics, the customer can inspect which ones are most promising and easiest to adapt when overhauling their own processes. In some implementations, anonymity of customers is provided, e.g., by never displaying individual models but only aggregates of the top N customers for a metric.

In some embodiments, the software application 1462 may manage an index of information about the reference diagrams that are stored in the repository 1464. For example, each diagram may have a set of fields with data values stored therein which identify attributes of the reference process such as KPIs including but not limited to revenue, number of employees, sales, spending on lead generation, spending on procurement, number of customers, and the like. The software application 1462 may compare the filtering conditions input via the controls 1452 to identify a reference diagram with a description that most closely matches the search input. As another example, the software application 1462 may identify a plurality of entities / process diagrams that meet all filtering criteria entered via the controls 1452, and build a reference diagram from the plurality of process diagrams of the plurality of entities. Here, the reference diagram may include every possible step (*e.g.,* a maximum of all steps) combined across the plurality of process diagrams from the plurality of entities, while the target process is usually only a subset of the steps.

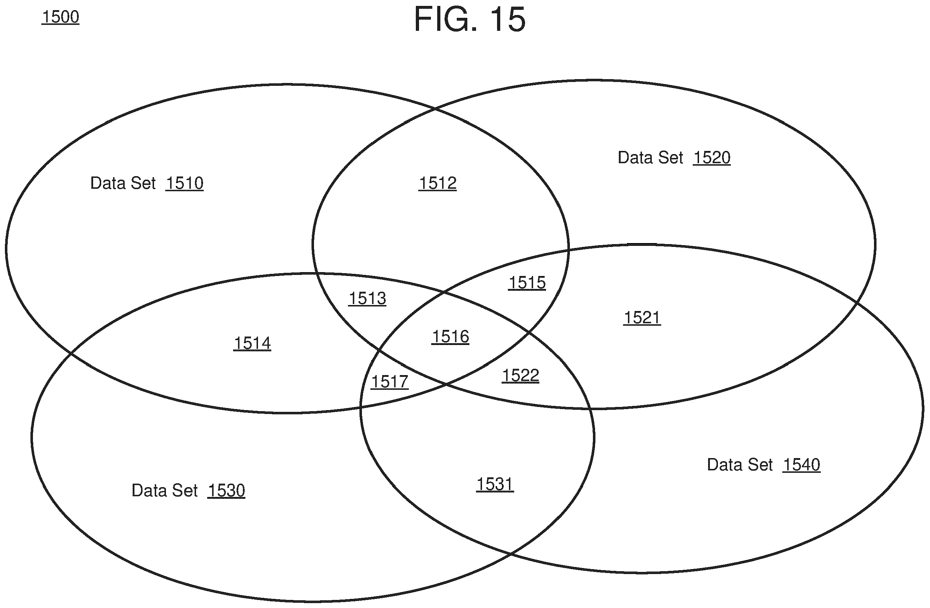

FIG. 15 illustrates a logical view 1500 of partially overlapping data sets including a data set 1510, a data set 1520, a data set 1530, and a data set 1540 in accordance with example embodiments. The data sets can correspond to attributes and attribute values that can be used for categorizing and comparing entities, such as for selecting peer entities to be used in the benchmarking process of Example 3.

Referring to FIG. 15, the partially overlapping data sets may correspond to a plurality of sets of data records which can be filtered using filtering conditions that are input via a user interface. In the example of FIG. 15, the data set 1510 shares a subset of data 1512 with only the data set 1520. In addition, the data set 1510 shares subsets of data 1513, 1515, 1516, and 1517 with the data set 1520, and other data sets. Furthermore, the data set 1510 also shares a subset of data 1514 with only the data set 1530. Other subsets of data can be found therein including a subset of data 1521 that is shared by only the data set 1520 and the data set 1540, a subset of data 1522 shared between the data set 1520, the data set 1530, and the data set 1540, and a subset of data 1531 shared between the data set 1530 and the data set 1540.

If, for example, data set 1510 contains attributes such as "revenue last year" and "profit margin" for 100,000 companies, a customer filtering only for attributes from this data set can potentially be compared to any of these 100,000 companies. Further, if data set 1520 contains employee information and headquarter locations of 50,000 companies, a customer who filters for attributes in data set 1510 (revenue) and in data set 1520 (employee count) can only be compared to customers who are present in both data sets (i.e., the intersection created by the subset of data 1512). Thus, the more sub-data sets are available, the smaller the intersections between all involved data sets might be and, consequently, the smaller the candidate set of potential peers who match the filters chosen.

One publicly available example for such a data set are the filings with the Security and Exchange Committee (SEC) from companies publicly traded in the United States. This data set may contain several entity attributes that customers are very interested in for filtering purposes. Identifying the same entity throughout each data set can be achieved by different means (depending on availability) ranging from unique tax identification numbers in the US and other regions, the name of the entity, the stock symbol or any globally unique classification scheme for companies, such as the DUNS number.

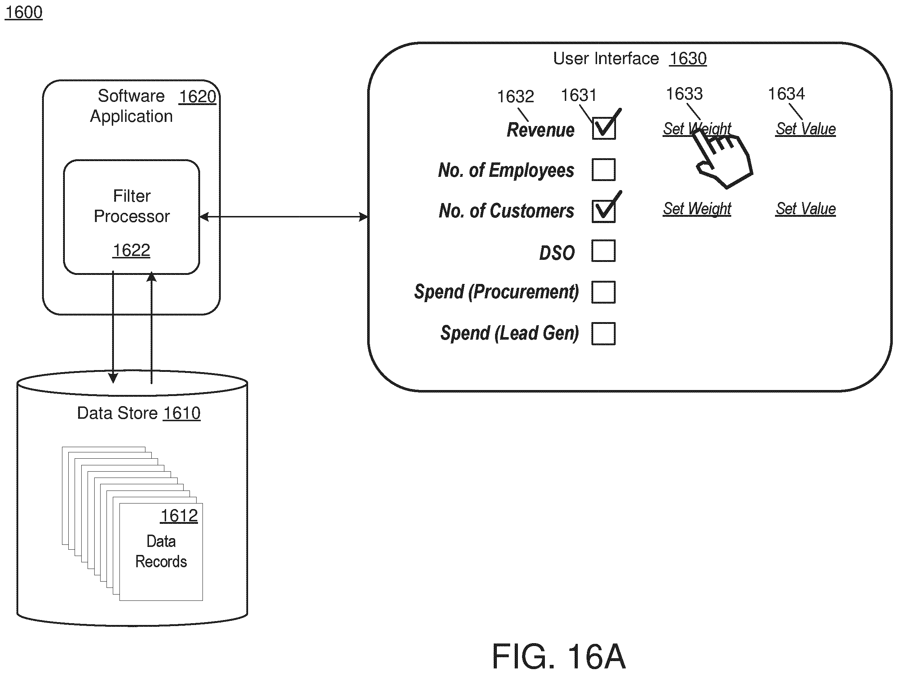

In the example embodiments, filtering mechanism can be used to filter through the different sets of data records (*e.g.*, tables, files, documents, etc.) and the different subsets of the data records using different filtering criteria. FIGS. 16A-16C are diagrams illustrating a filtering process that is performed based on user interaction with a user interface. Through the user interface, the user can filter the data records (*e.g.,* the organizational records) based on key performance indicators (KPIs) of interest to the user with respect to a target process of the user. For example, the user may select a KPI such as "revenue" and a condition such as "greater than 500M" and query a database of data records for all data records that satisfy the condition of the selected KPI. The user can also chain together filtering conditions to further reduce the number of data records that match all filtering criteria. When the user has reached a target or desired number of data records as a result of the filtering, the user may perform another operation such as select to have a reference diagram created, select to have a key performance indicator (KPI) KPIs created, select to have a process performance indicator created, or the like.

In the example embodiments, the user interface is "interactive" and sequential in that the filtering process occurs based on user interactions and the filtering may be performed such that multiple filters are applied in sequence. When a first filtering condition is applied (*e.g.*, number of employees greater than 10,000, etc.), the system may compare the filtering condition to a value that is stored in each of the data records such as a value for current number of employees of the entity at a given time, which is stored within a predefined field, row, column, etc. of the data records. The comparison may be performed for each entity resulting in some entities that satisfy the condition (a first subset) and some that do not (a second subset). Additional filtering conditions can be applied to the first subset of data records to further refine the records.

Traditionally, a filtering operation simply performs a value comparison without much insight into the remaining content within the data records. In the example embodiments, the user interface may provide transparency into the future filtering operations to be performed on the data records by displaying information about the additional filtering conditions available for the subset of data records and the number of data records that satisfy the filtering conditions.

For example, FIG. 16A illustrates a process 1600 of filtering a set of data records 1612 within a data store 1610, such as a database. The set of data records 1612 may correspond to a set of entities, respectively. Here, by filtering the set of data records 1612 the system also filters the entities associated with the data records. In this example, the filtering is performed by a software application 1620 hosted by a host platform (not shown). Here, the software application 1620 includes a filter processor 1622 that can receive filter conditions and analyze fields of data within the set of data records 1612 to determine whether the set of data records 1612 match the filter conditions. The conditions may be selected via a user interface 1630 of the software application 1620 which includes controls for filtering the set of data records 1612.

For example, in FIG. 16A, the user interface 1630 includes a plurality of boxes 1631 corresponding to a plurality of filter attributes 1632 also referred to herein as dimensions. Each attribute can be selected and used to filter the set of data records 1612. In this example, the user has selected two attributes (Revenue and No. of Customers). In some embodiments, this may be enough to complete the search process. As another example, the user may establish weights for the different attributes and even set values or ranges of values corresponding to filter conditions. For example, the user may select a link 1633 to set a weight for the Revenue attribute with respect to the other filtering attributes. As another example, the user may select a link 1634 to set an attribute value / condition for the filtering process.

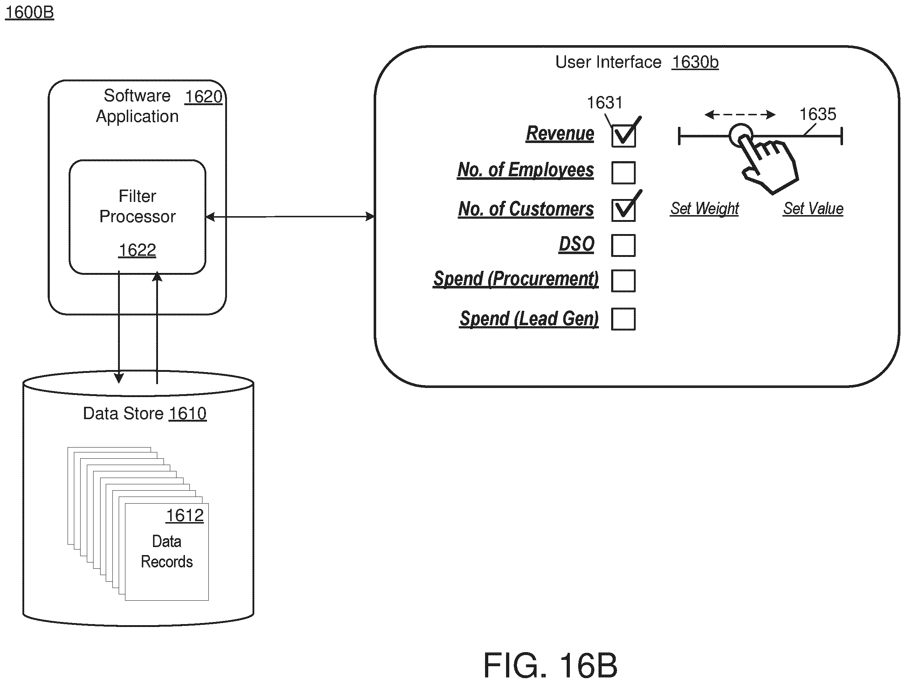

FIG. 16B illustrates a process 1600B of the user setting a weight for the Revenue attribute via an input mechanism 1635. For example, the user may use a pointer such as a finger, a mouse keyboard commands, speech, etc., to select the link 1633 in the user interface 1630 shown in FIG. 16A to cause the user interface to change to a user interface 1630b shown in FIG. 16B. Here, the user may move the cursor and hover over the input mechanism 1635, etc. Furthermore, the user may click / press on the input mechanism 1635 based on the cursor and drag the input mechanism in one of two directions to change a weight value for the attribute. The value that is selected via the user interface 1630b may be delivered to the filter processor 1622 and used to filter the set of data records 1612 within the data store.

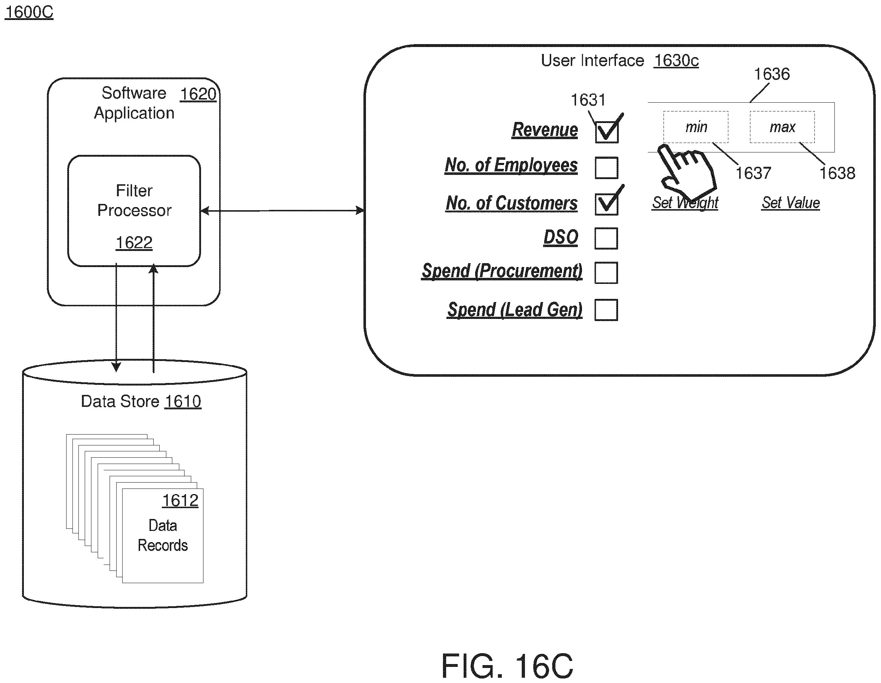

FIG. 16C illustrates a process 1600C of setting a value or a range of values for the attribute Revenue based on user inputs on the user interface. In this example, the user may use the cursor to select the link 1634 shown on the user interface 1630 in FIG. 16A to cause the user interface to change to user interface 1630c shown in FIG. 16C. In this example, the user interface 1630c initializes a box 1636 with input fields 1637 and 1638 for establishing a range of values to be used with the attribute when filtering the set of data records 1612.

However, it should be appreciated that the user may not enter a value for the attribute into the filtering criteria. Instead, the system may automatically use a value of the target process for the filtering criteria. For example, if the target process is associated with a process that has 30M in revenue, then the system may automatically set the filter criteria for a similar range of revenue, for example, 20-40M, etc., thereby ensuring that the minimal amount of companies is still present in the benchmarking peer group.

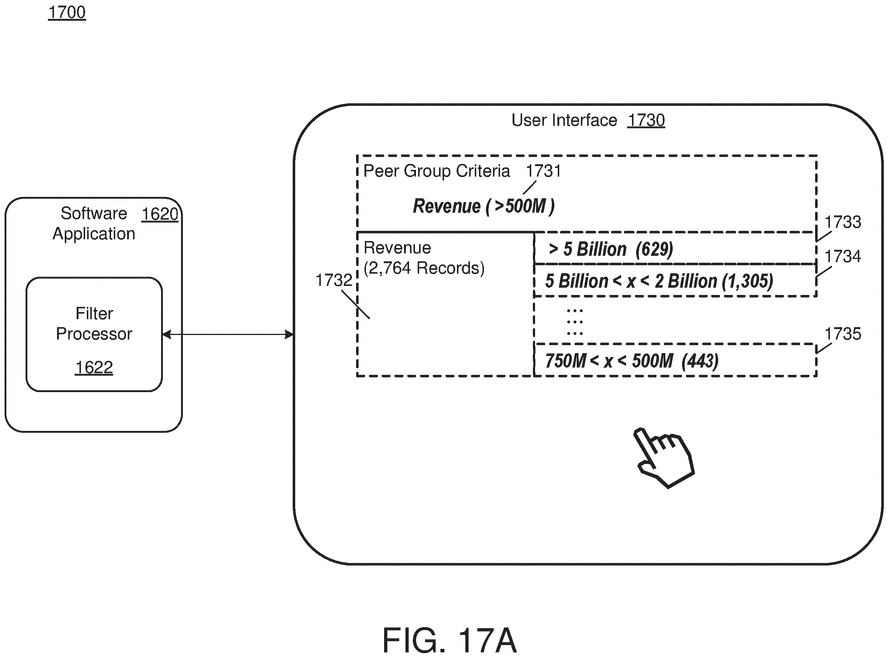

FIG. 17A-17B illustrate a process of the user interface changing based on user inputs to a user interface in accordance with example embodiments. For example, assume that a user uses the user interface 1630c shown in FIG. 16C to set a revenue value of greater than 500M. In other words, the user has input search criteria to find all entities where the revenue value is greater than 500M based on values for revenue of the entities stored in the data records within the data store. In response, the system may execute a filtering then perform a process 1700 of displaying the results of the filtering via a user interface 1730 as shown in FIG. 17A. Referring to FIG. 17A, the filter processor 1622 identifies 2,764 data records (entities) that have a first filtering condition 1731 (*i.e.,* a revenue of more than 500M) which is displayed on the user interface 1730. An identifier of total number of data records matching the first filtering condition 1731 is displayed within a field 1732 on the user interface 1730.

According to various embodiments, the software application 1620 may also provide additional filtering criteria for the matched records within the field 1732. Here, the software application 1620 may render additional fields 1733, 1734, 1735, etc. with additional filtering options for the remaining data records (entities) within the subset of data records. That is, the filtering options correspond to the identifier data records displayed in the field 1732. In this example, the additional fields 1733, 1734, and 1735 with the additional filtering options may be displayed in parallel to each other vertically on the user interface. Furthermore, the filtering options may each be displayed in sequence to the field 1732 horizontally thereby enabling the user to understand the each of the additional filtering options within the additional fields 1733, 1734, and 1735 corresponds to the data records in the field 1732.

By providing the user with the additional filtering options, the user obtains more than just the results of the filtering process but also additional insight and information that can be used during a next iteration of the filtering process.

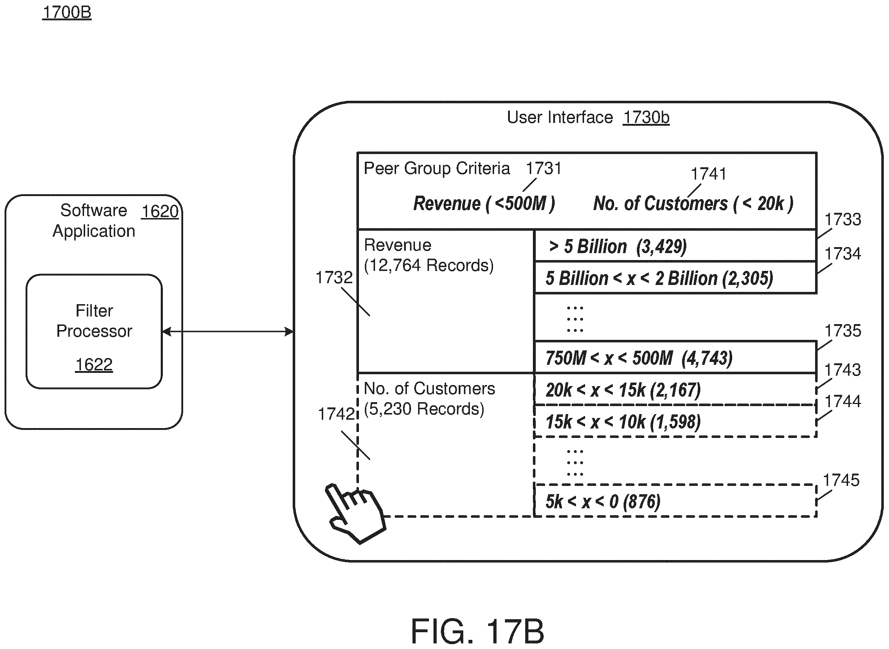

For example, FIG. 17B illustrates a process 1700B of displaying the results of a second filtering condition 1741 on the user interface causing a change from the user interface 1730 to the user interface 1730b in FIG. 17B. Here, the second filtering condition 1741 (*i.e.,* number of customers less than 20,000) is applied to the data records in combination with the previously executed filtering condition (*i.e.,* the first filtering condition 1731) by the filer processor. In this example, the data records shown in the field that satisfy the first filtering condition 1731 are further filtered based on the second filtering condition 1741 resulting in an additional subset 1742 of data records. Furthermore, the software application 1620 may analyze the content within the additional subset 1742 of data records and determine additional filtering conditions 1743, 1744, 1745, etc. The additional filtering conditions may include data values and may include operations such as greater than, less than, equal to, not, etc. As another example, the data values may be used from the target process.

In this example, the host system provides transparency into the remaining data records and also to the possible filtering options that can be used to further filter the remaining data records. In this way, the system can guide the user through the filtering process while providing significantly more transparency to the underlying data being searched than traditional search mechanisms and search engines. The transparency enables a user to find what they are looking for in less time.

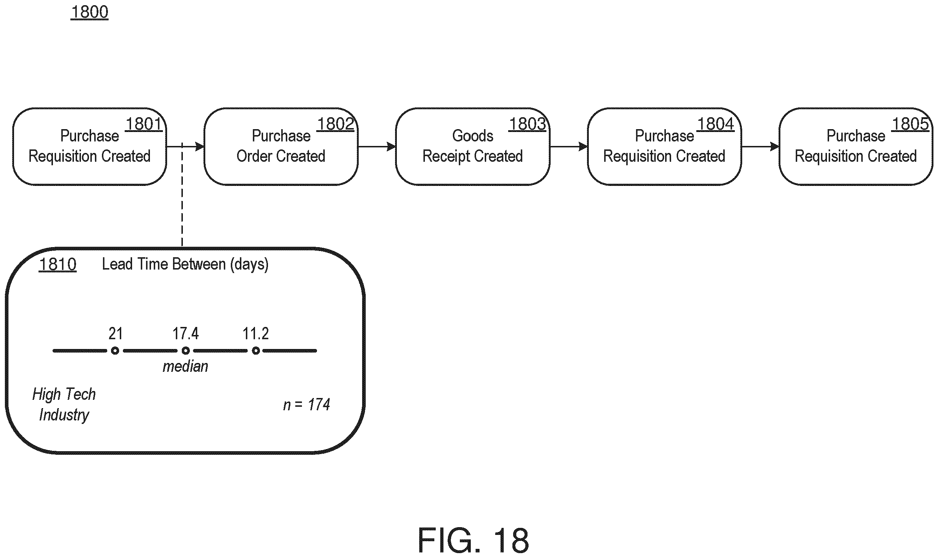

The dynamic peer grouping process that is performed herein can be used to select a group of records from comparison to a customer's record. As an example, the dynamic peer grouping process may be used to identify other entities (peers) with related process graphs. As another example, the dynamic peer grouping process may be used to identify other entities (peers) for use in comparing other attributes such as key performance indicators (KPIs), process performance indicators (PPIs), and the like. For example, FIG. 18 illustrates a diagram 1800 with a sequence of steps that are part of a process. The diagram includes step 1801, step 1802, step 1803, step 1804, and step 1805. The steps are performed in sequence.

In this example, a user may use the peer grouping process described herein to dynamically select a group of peers to be used to compare PPIs such as lead time between two steps in the process (*i.e.,* the step 1801 and the step 1802). In response, the system may display a window 1810 within details about lead times of the peers that are included in the dynamically selected benchmarking group.

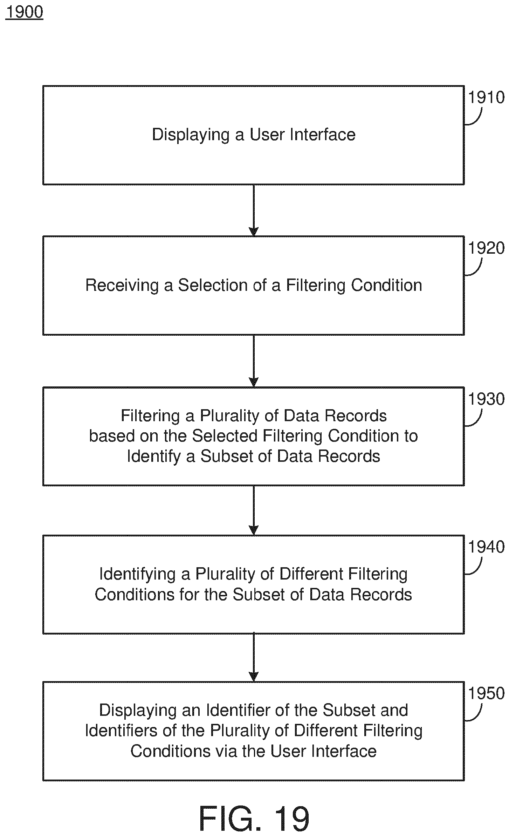

FIG. 19 illustrates a method 1900 of controlling a record filtering process via a user interface in accordance with example embodiments. For example, the method 1900 may be performed by a software application hosted by a host platform such as a cloud platform, a web server, a distributed system, a database, or the like. Referring to FIG. 19, in 1910, the method may include displaying a user interface comprising interactive controls. In 1920, the method may include receiving a selection of a filtering condition from among a plurality of filtering conditions based on input on an interactive control on the user interface.

In 1930, the method may include, in response to the receipt of the selection, filtering a plurality of data records based on the selected filtering condition to identify a subset of data records that satisfy the filtering condition from among the plurality of data records. In 1940, the method may include identifying a subset of filtering conditions from among the plurality of filtering conditions that are available for the subset of data records. In 1950, the method may include displaying an identifier of the subset of data records and identifiers of the subset of filtering conditions on the user interface. Although not shown in FIG. 19, the method may also include displaying the benchmarks of the dynamic peer group.

In some embodiments, the displaying the identifier comprises displaying a bubble with an identifier of the subset of data records inside the bubble, and displaying bubbles with identifiers of the subset of filtering conditions inside the bubbles, respectively. In some embodiments, the displaying the identifier may further include displaying the bubble with the identifier of the subset of data records in parallel to the bubbles with the identifiers of the subset of filtering conditions on the user interface. In some embodiments, the method may further include determining an amount of data records within the subset of data records that satisfy an additional filtering condition, and the displaying comprises displaying an identifier of the additional filtering condition and the determined amount of data records that satisfy the additional filtering condition next to the identifier of the subset of data records within the user interface.

In some embodiments, the plurality of data records may correspond to a plurality of entities, and the plurality of filtering conditions correspond to a plurality of organizational metrics. In some embodiments, the method may further include displaying a sub-menu with identifiers of the plurality of filtering conditions and a plurality of controls for selecting the plurality of filtering conditions, respectively, and the receiving the selection of the filtering condition comprises receiving a selection of a control within the sub-menu which selects a filtering condition from among the plurality of filtering conditions. In some embodiments, the receiving may include receiving a selection of a sequence of filtering conditions, and executing the sequence of filtering conditions in sequence on the plurality of data records to identify the subset of data records.

**Example 5 - Example Temporal Comparison of Processes to Identify Process Improvements**

The techniques described in Examples 2-4 can help provide more accurate/actionable insights for improving processes. However, making a process change can require substantial effort to implement, and it may take time to see improvement. A potential drawback of the benchmarking process of Examples 2-4, including to try and identify and reduce blockers, is that it typically uses the current processes implemented by an entity or group of entities (such as a set of reference entities, which can be referred to as a peer group) without consideration as to whether the reference entity or entities might have even had processes similar to an analysis entity. That is, it may be particularly useful to identify entities that are currently performing well, but which were more like the analysis entity at some previous point in time. If such entities are identified, it can provide insights on what aspects of a process should be modified, and information about long it may take to see improvement from such changes. In general, this makes predictions about potential gains data-based instead of being based on anecdotal evidence which may be inaccurate or biases.

Thus, the following description can be used to suggest process improvements that are more likely to be actionable by the analysis entity, since a similar improvement was achieved by an entity that was similar to the current state of the analysis entity. Further, the reference timeframe can be adjusted, which can provide information about improvements that can realistically be achieved within the given timeframe. Selecting a longer timeframe may provide a path for more substantial improvements, but may be more difficult to implement since more changes are required.

Peer groups can be selected as described in Example 4, but based on their process performance (indicators) at a previous point in time. For example, an entity might wish to determine what improvement might be realistically obtained over a year, and so the peer group selection can consider peer data from a year ago, rather than current data. That is, historical data can be maintained, both in terms of attributes that can be used to categorize and compare entities, but also their associated process information (such as for use in generating a reference graph or a target graph). Peer groups can be selected in other ways, including using modifications of the techniques of Example 4. For example, peer group characteristics can be statically defined, rather than using a dynamic process. While a user can manually enter group criteria through a user interface, in other cases group criteria can be determined in an automated or semi-automated manner. A variety of grouping attributes can be defined, values for these attributes can be retrieved for the analysis entity, and then reference entities can be identified that have similar attribute values, where appropriate thresholds and weights can be used to help establish a definition of "similar" entities.

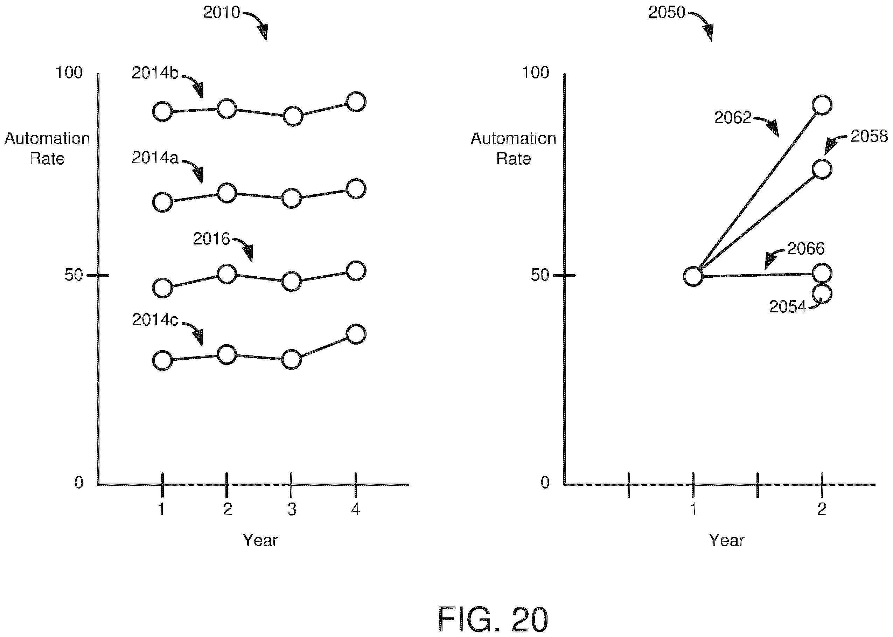

FIG. 20 provides graphs 2010, 2050, representing, respectively, a more traditional approach for benchmarking a particular entity with clusters of entities in different benchmark classifications, and an approach of the present disclosure, where entity similarity is determined with respect to a prior time, such as a year ago, and trajectories are shown for how those cohorts performed after a year.

The graph 2010 uses a performance indicator of automation rate, over a number of years. Entities have been classified into three groups, those having values benchmark values closer to the median of the benchmark 2014a, those having a benchmark significantly higher than the median 2014b (also referred to as best-in-class performers), and those having a benchmark significantly lower than the median 2014c (referred to as low performers). To the extent data is available for an analysis entity, it can be included in the graph 2000 as data 2016. Typically, at least current data is available for the analysis entity.

While the graph 2010 offers a comparison between an analysis entity and various cohorts having various performance characteristics, the comparison is for entity characteristics and processes at the same point in time. That is, an entity can compare themselves with others (and even the trend of the benchmark for the entity as compared with others), but the comparison may be inaccurate to a degree, because while an analysis entity may be performing below other entities/entity groups, those other comparative entities may have been high performing for many years. Thus, an analysis entity may not have a realistic view on what kind of performance improvements they might achieve, including over a particular time period. Typical analyses do not provide specific recommendations for an analysis entity on how to achieve improved performance that is tied to a specific timeframe and specific improvements that were made by reference entities over that timeframe that historically lead to such improvements.

In contrast, the graph 2050 of FIG. 20 also uses a performance indicator of automation rate over time, but data 2054 for the entity under consideration is provided as of a first time, while data for median 2058, high 2062, and low performers 2066 is shown at a second, earlier time, as well as an average value for all of these groups at the first time. Depending on data availability, specific data points can be provided for times between the second time and the first time.

Similarity between an analysis entity and reference entities can be determined in different ways. In one aspect, similarity can be determined using various characteristics for an entity, such as described in Example 4, such as number of employees, revenue, or geographic location. In another scenario, one or more process graphs of an analysis entity are compared with process graphs of other entities, such as those in a particular peer group. That is, similarity can be determined by looking at an overlap in activities in a process or ways of carrying out the process using those activities (for example, by comparing process variants of a reference entity and an analysis entity). Performance indicators for a process, such as lead to cash time or time from order receipt to order delivery, can be used to compare entities. One disadvantage of using performance indicators to determine similarity is that it can identify entities as being similar, even though processes of reference entities may be very different from a current process of the analysis entity.

As discussed above, process graphs can be evaluated in various ways. In some cases, processes and process variants of an analysis entity can be compared with those for a reference set of entities. That is, the analysis can consider the particular steps used in a process and the sequence of such steps (a process variant), or the frequency of occurrence of various process variants. In other cases, the analysis can use process steps without regard to their relationships with other process steps. For example, a frequency of occurrence of various process steps can be determined for the entity being evaluated, and for the reference entity group. Again, data for the reference entities is determined using historical data from a time where the reference entity was "similar" to the analysis entity.

It should be noted that reference entities do not need to be selected with respect to a single historical time. That is, for example, assume an analysis for an analysis entity is to be performed using data for the analysis entity as of August 2024. In some cases, a time period can be set, such as one year, and the set of reference entities can be determined as of the same date of August 2023. This would be one way of determining improvements that similarly situated entities were able to achieve in one year. However, in another implementation, entities are determined that are similarly situation as of some prior point in time, and improvements can be determined as of a set time period. For example, assuming it is desired to learn what improvements might be feasible to implement in one year, one reference entity might be determined that was similar in August 2023 to the analysis entity's state in August 2024, satisfying the analysis criteria. However, another entity might be identified that was similar to the analysis entity as of August 2022. In this case the entity could be used as a reference entity, including in a set of reference entities, but improvement for that entity would be determined over the period August 2022 - August 2023.

As will be further explained, disclosed techniques can not only provide examples of how reference entities similar to an analysis entity changed over time, they can determine probabilities of achieving a particular outcome, and suggest specific process changes to help realize that outcome. That is, for example, multiple reference entities might have performed a similar process change and seen improvement, but the degree of improvement may vary, perhaps significantly. This gives an analysis entity a more realistic assessment of how much their performance might improve over a time period, such as if process steps from a higher-performing set of peer entities are adopted. As will be discussed, disclosed techniques also provide for identifying particular actions an analysis entity might take to realize such improvements.

**Example 6- Example Computing Environment Providing Temporal, Peer-Based Process Improvement**

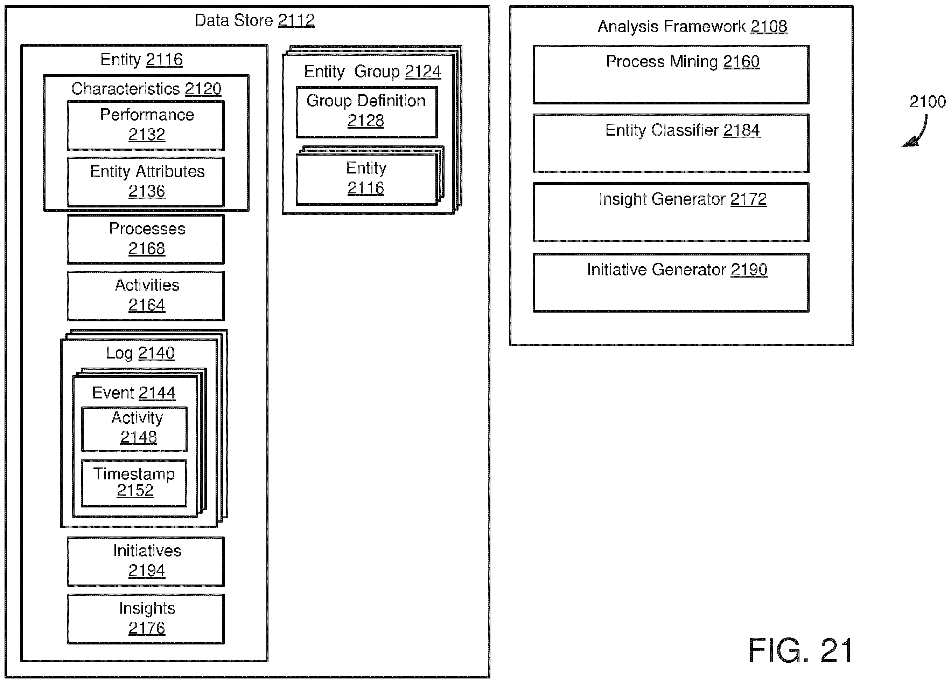

FIG. 21 illustrates a computing environment 2100 in which disclosed techniques can be implemented. The computing environment includes an analysis framework 2108 that can access data in a data store 2112. The data store 2112 can includes data for characteristics 2120 of an entity 2116 that serves as an analysis entity, and where the data store stores characteristics information for one more other entities, which can be evaluated for use as reference entities. The characteristics 2120 can be used to classify entities 2116 into entity groups 2124, where an entity group includes a group definition 2128, defining particular characteristics/characteristics values of the characteristics 2120 that define group membership. An entity group 2124 can also store information about entities 2116 that have been assigned to a particular entity group.

The characteristics 2120 can be of various types. For example, performance characteristics 2132 can measure various aspects of one or more processes or process steps engaged in by an entity, such as the time between the receipt of an order and delivery of items for the order. The characteristics 2120 can also include entity attributes 2136, where entity attributes can provide descriptive information about an entity 2116, such as a type of industry with which a business, or at least an aspect of a business associated with one or more businesses processes, is associated, a size of the entity, such as using measures like number of employees, revenue, or capitalization, or the geographic location of an entity. As described, the present disclosure includes providing recommendations to an analysis entity as to how they may improve their performance, and so it can be beneficial to defined entity groups 2124 that has entities 2116 that are similar analysis entity as determined using the group definition 2128 and the characteristics 2120.

Entities 2116 can be associated with one or more logs 2140, where a log includes information about data changes recorded for an entity. For example, when a new document, such as a sales order, is created, the log 2140 might reflect the addition of one or more records to one or more tables with data that reflect the creation of a sales order. The logs 2140 can contain, or can be used to define, events 2144, where an event can include one or more activities 2148 and one or more timestamps 2152 associated with the activities. Event information can be extracted from a "raw" data log, and itself stored as a log 2140.

The analysis framework 2108 can include a process mining component 2160, which can perform operations described in the present disclosure for identifying processes and process variants of an entity 2116 or entity group 2124. The process mining component 2160 analyzes the logs 2140, including to extract the events 2144 reflected in the log as activities 2164. That is, activities 2148 in a log 2140 represent raw data for an activity, while an activity 2164 refers to an identified activity resulting from processing such raw data.

Sequences of activities 2164 can identified by the process mining component 2160 and stored as processes 2168. That is, the processes 2168 can be for different processes of an entity, and can also refer to process variants - different ways of completing the same process. Information regarding activities 2164 and processes 2168 can include frequency information, such as the number of times an activity or process variant was observed in the log 2140.

The processes 2168, or the activities themselves 2164, can be used by an insight generator 2172 to generate insights 2176. For example, activities 2164 of an analysis entity can be compared with activities of an entity group 2124, where differences between such activities can suggest process changes that may improve the performance of the analysis entity. When processes 2168 are compared, insights 2176 can include suggestions to alter particular activities 2164 in a process, or to alter the sequence in which activities are performed (that is, define a new process variant or increase the frequency of use of an existing process variant). As used in the present disclosure, "insights" can refer to the insights described earlier, such as in Example 2, but can refer to other types of insights as well. For example, some process changes may improve performance, but may not correspond to removing a blocker.

Entity groups 2124 can be defined using an entity classifier 2184. The entity classifier 2184 can classify entities 2116 using the characteristics 2120, as well as the activities 2164 or the processes 2168. For example, it may be useful to make comparisons between entities 2116 (including as part of an entity group 2124) having similar numbers of employees that are in the same industry, but to also consider entities that have similar activities 2164 or processes 2168. That is, in some cases, the characteristics 2120 include the activities 2164 or processes 2168.

The analysis framework 2108 can include an initiative generator 2190 that can be used to generate initiatives 2194. Initiatives 2194 can be used to help an entity 2116 realize a potential performance improvement, such as based on one or more insights 2176. Initiatives 2194 can also be used by the initiative generator 2190 to generate new initiatives. For example, the initiative generator 2190 can review prior initiatives 2194 to determine how an entity 2116 achieved a particular performance improvement, such as one associated with an insight 2176. Tasks reflected in a prior initiative 2194 can be suggested as tasks for a new initiative to achieve similar process/performance improvements.

Again, a benefit of techniques of the present disclosure is that it can provide more accurate insights 2176, including a potential improvement that may be achieved after a particular time, by looking at reference entities at a first, earlier time, which are similar to an analysis entity at a second, later time. Thus, information about entities, such as characteristics 2120, activities 2164, processes 2168, or initiatives 2194 can be associated with date information, where this date information can be used by the entity classifier 2184 in generating entity groups 2124 according to an entity definition 2128. That is, the group definition 2128 is evaluated at a historical point in time.

**Example 7- Example Processes and Process Variants**

Generally, a process for identifying a group of entities to analyze as a possible peer group uses their aggregated data to provide process recommendations to an analysis entity. Entity similarity can be determined by looking for reference entities that were historically "similar" to an analysis entity at a given point in time. Process improvements can be identified for these reference entities between that historical time and a later time, such as looking at process improvements over a year. In some cases, historical data can be periodically calculated and stored, and an analysis process may be constrained to using available data sets. In other cases, process improvements can be determined using more arbitrary dates. Since a primary goal is to improve a process and provide improvement recommendations, the entities in a set of reference entities are typically selected as the best in class with respect to one or more performance indicators, such as highest completion rate or fastest lead time. That is, entities in an entity group 2124 of FIG. 21 may be selected based on their similarity to an analysis entity, but also based on their performance metrics/relative performance to other possible reference entities.

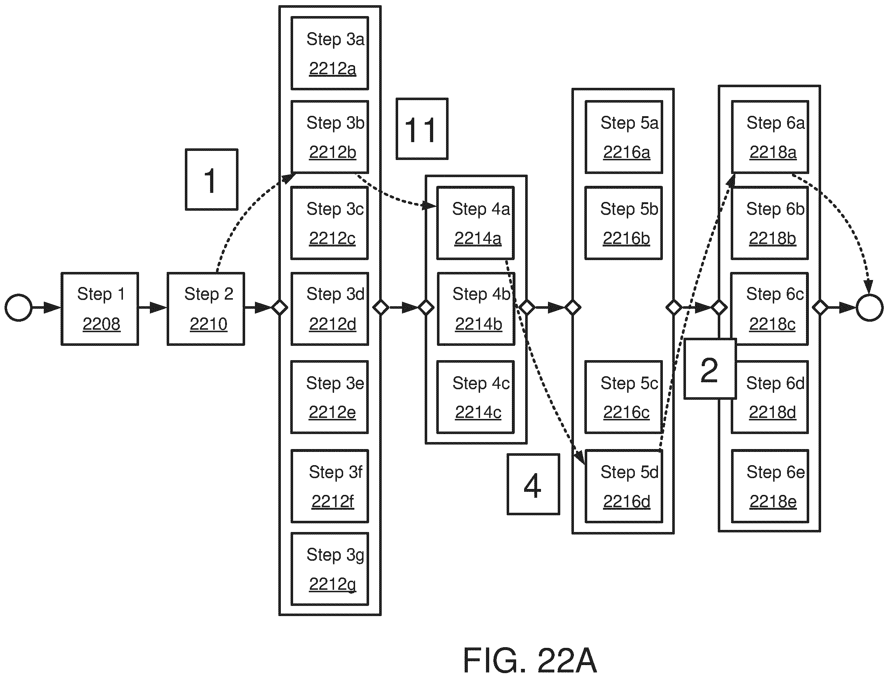

FIG. 22A illustrates a reference process 2200 of a set of entities, such as described in Example 3. The process includes a number of steps 2208, 2210, 2212, 2214, 2216, 2218, where at least some of the steps can have two or more variants. For example, step 2212 is shown as variants 2212a-2212g, step 2214 is shown as variants 2214a-2214c, step 2216 is shown as variants 2216a-2216d, and step 2218 is shown as steps 2218a-2218e.

As also described, a given entity can have one or more particular implementations of the overall process, such as through the steps 2208-2218. That is, for example, an entity may have processes that use different variants or where paths between steps/variants are performed in difference sequences. One or more performance metrics can be associated with executing a process, including having separate metrics for different process variants. Performance metrics can also be measured for particular process steps/activities, which can, in some cases, be represented as a metric value associated with transitioning from one step of a process, or specific process variant, to another. In FIG. 22A, the metric is time, reflected in a number of days (the number in the squares) taken to transition between process steps of a particular process variant (which can correspond to lead time), which can then be aggregated to provide a performance metric value for the overall process variant.

As shown in FIG. 22A, it takes one day to transition between step 2210 and step variant 2212b. It requires eleven days to transition between variant 2212b and variant 2214a, and four days to transition from variant 2214a to variant 2216d. Finally, two days are taken to transition from variant 2216d to variant 2216e. Summing these values, the overall process implementation takes eighteen days.

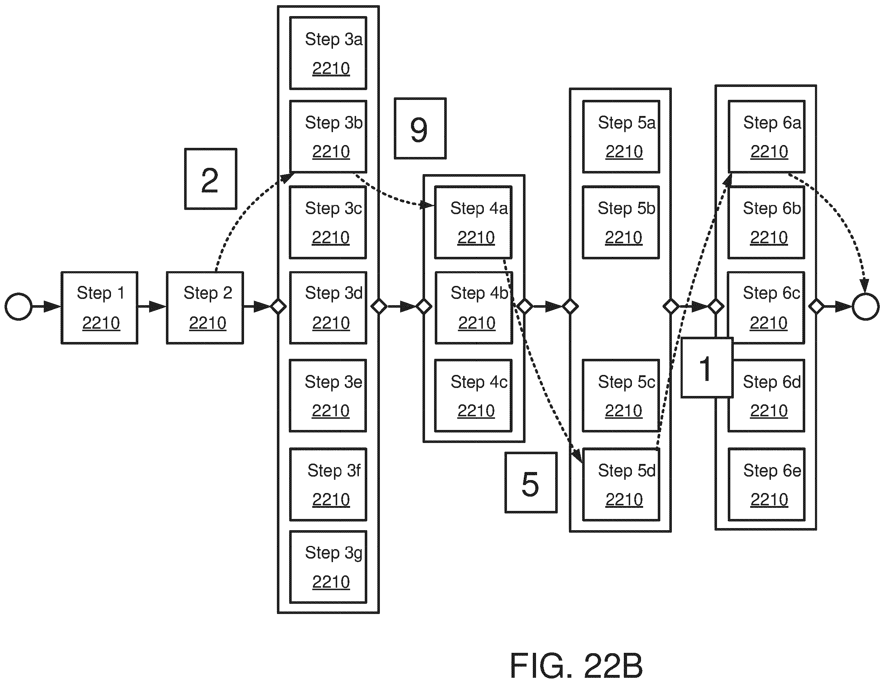

A set of entities are identified, at a historical time, for the analysis entity, and whose process implementation is shown in FIG. 22A. The set of entities can be determined based on an overlap between their process implementations of the process 2200, as well as other factors, such as revenue, number of employees etc. FIG. 22B illustrates the aggregate process implementation for this set of entities at the historical time as, again, a goal can be to identify entities that previously had similar processes to the analysis entity, and then see how those entities were able to improve such processes.

Note that, for ease of presentation, only single process variants are shown in FIGS. 22A and 22B. In practice, an analysis entity and set of reference entities may have multiple process variants for a given process, where the process variants can be associated with different performance metrics and different occurrence frequencies. In some cases, criteria can be used to restrict process variants that are displayed/used for analysis, such as selecting only the most performant, or common, process variants for FIGS. 22A and 22B.

The process implementation/variant in FIG. 22B is identical to the process implementation of the analysis entity, and illustrated in FIG. 22A. Although the process implementation of the analysis entity, in FIG. 22A, and the implementation of the comparison set of entities, summarized in FIG. 22B are identical, there are slight differences in the performance metrics. However, the overall performance metrics for the process implementations are quite similar, requiring a total of 18 days for the implementation in FIG. 22A, and 18 days for the implementation of FIG. 22B. This similarity is consistent with the assumption that the way a process is implemented affects the values of a performance metric, and so changing a process implementation to be more similar to higher-performing peers can result in improvement for an analysis entity.

A goal of the disclosed techniques is to identify how much indicators of process improvement might be improved over a period of time, as well as providing recommendations for how this can be achieved. Thus, in addition to looking at historical performance of a set of entities, current performance of the set of entities is also determined, including determining a current aggregate process implementation for the set of entities. Although using historical and current data is described, it should be appreciated that, more generally, disclosed techniques can be used with any pair of point in time, with one time before the other.

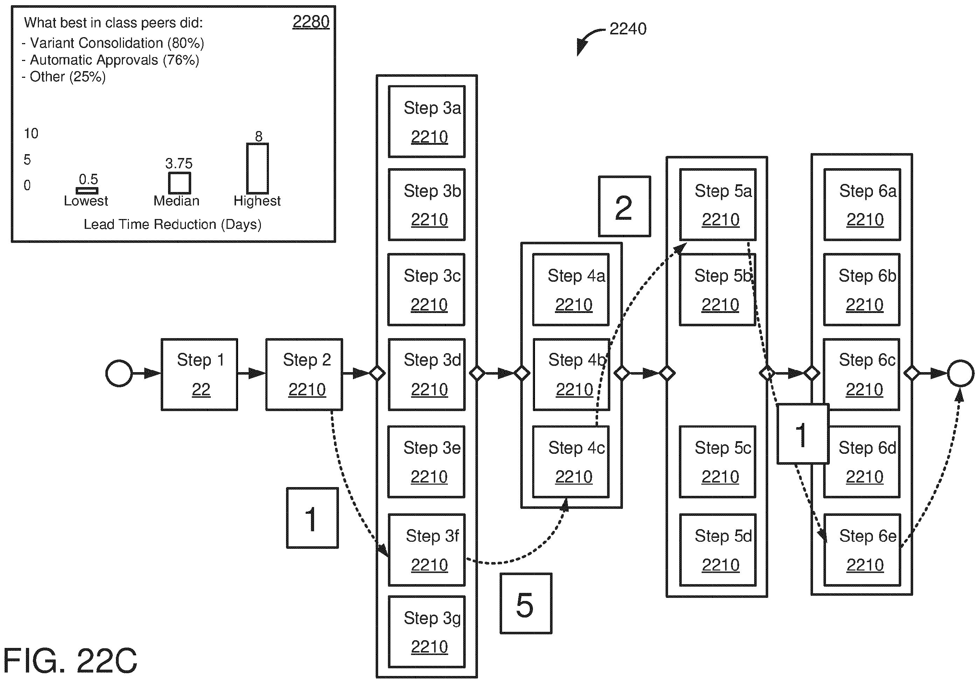

Process mining is performed for current data (or, more generally, temporally later) of entities in the set of entities, which provides the process implementation 2240 shown in FIG. 22C. The process implementation 2240 can represent a process implemented by peer entities that showed best in class performance. In some cases, process implementations for low or median performing peers may also be provided, which can indicate, for example, that such peers made fewer changes, or less performant changes, than the best-in-class peers.

It can be seen that the entities in the set modified their process implementations so that step 2210 proceeds to variant 2212f, instead of variant 2212b. This results in a savings of one day. Instead of proceeding to variant 2214a from variant 2212b, the process implementation in FIG. 22C proceeds from variant 2212f to variant 2214c, which takes only five days, compared with nine days for the transition used in FIG. 22B. Instead of transitioning from variant 2214a to variant 2216d as in FIG. 22B, the improved process implementation of FIG. 22C involves a transition from variant 2214c to variant 2216a, which takes two days instead of five days. Finally, rather than the transition from variant 2216d to variant 2218a in FIG. 22B, the updated implementation in FIG. 22C transitions from variant 2216a to variant 2218d, where both of these transitions take one day. Overall, the updated process of implementation in FIG. 22C takes nine days, much shorter than the seventeen days of the process implementation in FIG. 22B, or the eighteen days of the process implementation of the entity being analyzed, shown in FIG. 22A.

Although not shown, if desired, a display as in FIG. 22C can be modified to include process variants/performance metrics shown in FIG. 22A and FIG. 22B, such as in an overlayed manner, as described in Example 3.

Since the new process transitions in FIG. 22C resulted in performance improvement, these changes, or related changes, can be proposed as improvements to the process implementation of the analysis entity. For related changes, rather than suggesting specific changes to specific process transitions, a type of change can be indicated as associated with process improvement. For example, FIG.22C illustrates an example recommendation summary 2280 as a result of comparing the process implementations of FIGS. 22B and 22C, where it is shown what percentage of entities in the set made various types of changes, such as implementing automatic approvals or variant consolidation (for example, taking actions to remove/reduce the occurrence frequency of less performant variants).

The summary 2280 also provides information about a degree of improvement experienced by different subsets of the entities. For example, the highest performing quartile of the entities saw a reduction of at least eight days in the time needed to perform the process, the median of the peer group saw a reduction of 3.75 days, and the lowest quartile only saw an improvement of half a day or less. Thus, it can be seen how information is generated that can provide an entity with an amount by which a metric might be increased, as well as a probability of achieving that increase, and where the improvement is tied to a specific timeframe. In other words, by collecting information about which customers started which initiative and correlating these initiatives to their outcomes after a period of time (usually 12 months), the initiatives correlating to the best outcomes can be shown to customers (as in 2280).

As described, although a single variant of the process 2200 is shown, in practice, an entity or set of entities will often have multiple paths through the process 2200. That is, the process 2200 can represent all possible actions that can be taken at a particular step, as well as all possible sequences of performing these actions. A comparison of an entity being evaluated can be made for multiple process variants. A comparison might then indicate, for example, that the entity might considering increasing the frequency of one variant with respect to another in order to provide overall improvement for the process 2000, or provide information about different approaches taken by reference entities to improve performance.

Also, while the discussion of FIGS. 22A-22C describes the process 2000 and process variants, comparison can instead, or additionally, use particular steps, corresponding to particular activities/actions, of the process. For example, a comparison can be made between the frequency of occurrence of activities in a set of activities, as well as performance measures associated with a specific activity, rather than an overall process flow. A comparison might note that the analysis entity performs step 2212e, and that it takes two days to proceed to a next activity. A reference process for a set of entities might identify that step 2212c performs an equivalent function to step 2212e, and that it only takes half a day to proceed to the next activity. Thus, an insight might be generated for the analysis entity to consider performing step 2212c in place of step 2212e.

## Example 8- Example Domain Model

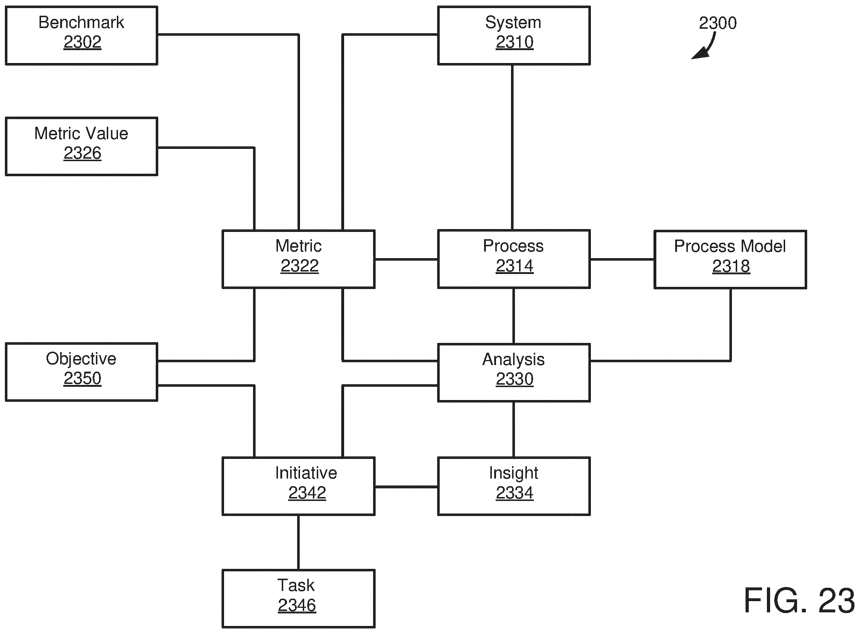

FIG. 23 provides an example domain model 2300 that can be used in disclosed techniques, such as in measuring performance of an entity or set of entities at one or more times (such as looking at performance changes from a first time to a later, second time, which can be a current time). The components of the domain model 2300 can be implemented as computing objects (for example, instances of abstract or composite data types), such as relational database tables. A variety of relationships between components will be described, and suitable queries can be written to obtain data from multiple components, such as through joins using primary key - foreign key relationships. Some relationships may be "indirect," such as two tables being related though an intermediate table. If desired, computing objects, such as views, can be defined that include the relevant relationships, which can simplify queries, as they can simply refer to the view rather than including more complex relationships (for example, a query language statement expressing joins between multiple tables).

The domain model 2300 includes a system component 2310, which can represent a particular database system or other data repository associated with an entity or a group of entities. In the case of a group of entities, the system component 2310 can store aggregated and anonymized data for entities of the group. The system component 2310 can include data in a database with information generated during operation of a business, such as the creation of sales order, invoices, and delivery records.

As previously described, process mining techniques can be performed on data of the system component 2310 to identify processes of a process component 2314. The processes of the process component 2314 can correspond to sets of similar values, representing activities (for a particular process/process variant) extracted from the data of the system component 2310. These processes can be represented in a more general manner, such as identifying tables and attributes involved in a particular process step, and sequencing information between process steps, in a process model component 2318.

Many of the components in the domain model can be associated with a metrics component 2322, where the metrics component can provide various metrics, and metric values can be stored in a metric value component 2326. Metrics of the metric component 2322 can be of different types. For example, some metrics can characterize a system of the system component 2310, such as metrics that can be used to describe an analysis entity, groups of entities to be used for comparison, and information for entities to be grouped, for assigning an entity to an entity group.

Metrics for processes of the process component 2314 can include performance indicators that have been selected or defined. For example, a performance metric can be the time taken to perform an overall process, or times between individual process steps, as described with respect to FIGS. 22A-22C. An analysis component 2330 can store information about analyses that have been performed, such as an identifier for a particular analysis, the time the analysis was generated, a description of the type of analysis performed, an identifier of a specific process that was analyzed, and a model associated with such a process. The analysis identifier can be used to retrieve metrics and metric values from the metrics component 2322 and the metric value component 2326.

Insights of an insight component 2334 can be generated from an analysis of the analysis component 2330. For example, an analysis can include comparing metrics of an analysis for a process of the analysis entity a reference set of entities. The analysis can describe areas where a process of the analysis entity be less performant compared to a process for the reference group, using one or more metrics. Insights can reflect the potential performance improvement the analysis entity might achieve, such as over a period of time, by changing elements of a process to be more similar to a process of the reference group. In making these comparisons, benchmarks of the benchmark component 2338 can be defined, where the benchmarks are defined in terms of metrics values of the metric values component 2326 for particular metrics of the metrics component 2322.

Initiatives of an initiative component 2342 can be automatically suggested or manually defined. An initiative can be defined with respect to particular tasks of a task component 2346. For example, an initiative can aim to improve a particular performance metric or implement specific process changes suggested by an insight. The improvement can be reflected in an objective of the objective component 2350, which is defined with respect to metrics and metric values. Being able to collect such initiative information across customers allows to correlate initiatives observed for different customers to their performance gains and, further, to present such correlations as illustrated in 2280.

**Example 9- Example Initiatives**

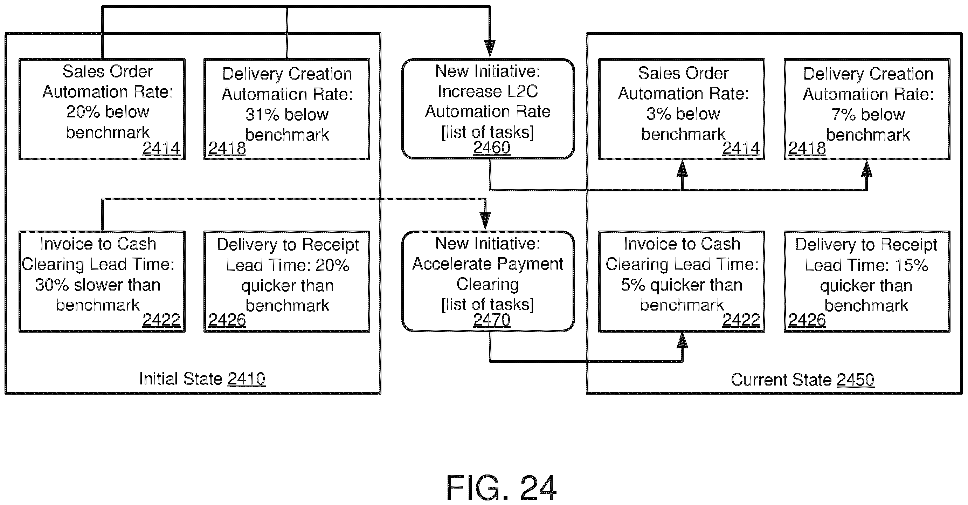

In addition to suggesting process changes that might improve efficiency, information from peer companies can provide more granular details about how a process might be improved. Assume that an entity was dissatisfied with its performance as reflected in one or more metrics. It might define an initiative, such as described with respect to FIG. 23, with tasks intended to improve process metrics. FIG. 24 illustrates various metrics at a first state 2410 and a second state 2450. One metric, sales order automation rate 2414, has a value that is 20% below a benchmark (for example, based on best-in-class peer entities) and a delivery creation automation rate 2418 that is 31% below the benchmark. The entity creates an initiative 2460 to increase a "lead to cash" automation rate (which includes both the sales order automation rate 2414 and the delivery creation automation rate 2418), which includes a list of tasks. As a result of the initiative 2460, in the second state 2450, the sales order automation rate 2414 is only 3% below the benchmark, and the delivery creation automation rate is only 7% below the benchmark, representing a significant improvement over the first state 2410, even if the metric values remain somewhat below the benchmark.

Similarly, in the first state 2410, an invoice to cash metric 2422 was 30% slower than the benchmark, while a delivery to receipt lead time metric 2426 was determined to be 20% faster than the benchmark. An initiative 2470 is created to accelerate payment clearing, including creating particular tasks. In the second state 2450, after performing tasks in the initiative 2470, the invoice to cash metric 2422 has increased to be 5% higher than the benchmark, a 35% improvement, while the delivery to receipt lead time metric 2426 decreased by 5% to be 15% higher than benchmark, but where the improvement to the metric 2422 can still improve overall process efficiency.

Information about improvement initiatives can be obtained in a variety of ways. For example, consulting engagements may be defined with an entity to help the entity improve a process. These engagements can include descriptions of particular processes, process steps, or performance metrics that can be used to link the initiative with processes identified from process mining. Linking of these documents to particular process improvements can also be accomplished by comparing a data of the engagement with a date a process change was observed. For example, engagements within a specified time period before a change was observed can be identified as potentially more relevant to a process improvement.

In other scenarios, software used by an entity can help to identify improvement initiatives, and these initiatives can be linked to particular metrics or particular computing objects, such as database tables. In some cases, improvement initiatives can be linked to particular processes or particular process activities.

Large language modes or other types of natural language generators can be used to help generate or summarize initiatives, to link initiatives to particular processes, or to cluster initiatives that relate to the same metrics and processes, which can be based on a name of the initiative as well as tasks associated with an initiative. For example, a large language model can be provided with a consulting agreement and summarize tasks, or adapt tasks for a particular analysis entity. The large language model can also perform operations such as taking descriptive information for tasks and identifying technical changes that would be involved in accomplishing the tasks.

**Example 10- Example Supplemental Domain Model**

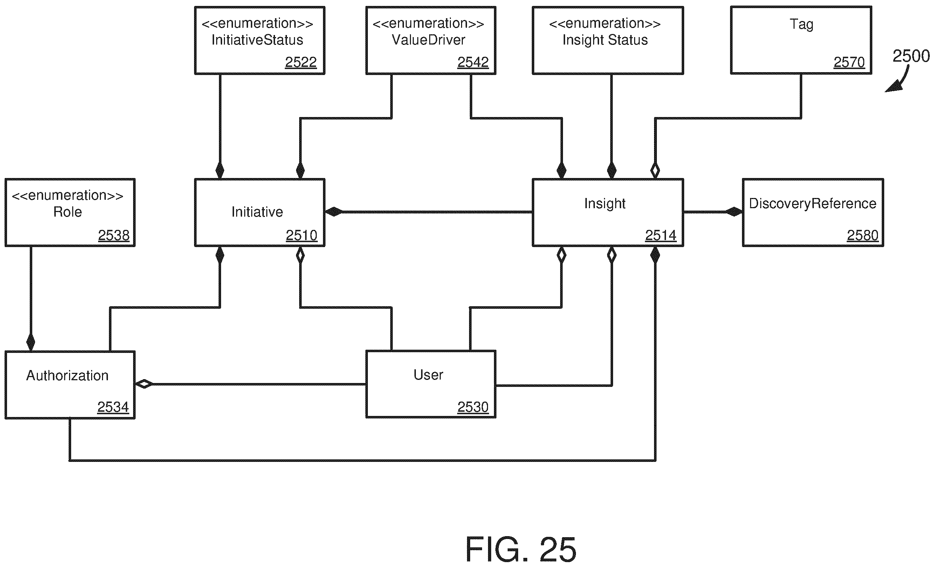

FIG. 25 provides a domain model 2500 that can be considered as an extension of the domain model 2300 of FIG. 23. The domain model 2500 includes an initiative component 2510 and an insight component 2514, which can correspond to the components 2342, 2334, of FIG. 23.

The domain model 2500 further provides that an initiative of the initiative component 2510 can be associated with an initiative status of an initiative status component 2520. Values for the initiative status can be constrained to particular enumerated values, such as planned, in process, or complete. Similarly, the insight component 2514 can be associated with a status provided in association with an insight status component 2522, which can also provide an enumerated list of possible status designations.

The domain model 2500 can include components that can be used to restrict who has access to various components of the data model, such as where users of a user component 2530 can be provided access to the initiative component 2510 and the insight component 2514 based on authorizations of an authorization component 2534. Authorizations of the authorization component 2534 can be role-based, such as by linking authorizations to a role of a set of enumerated roles in a role component 2538.

The initiative component 2510 and the insight component 2514 can be linked to value drivers of a value driver component 2542. The value drivers can be provided as an enumerated list. For example, value drivers can be associated with particular process steps and particular performance improvements that are associated with such steps. Value drivers can also be associated with descriptive information, which can be useful in categorizing various process improvements. That is, for example, a process might be associated with different process changes, relating to different types of process steps or performance metrics.

With reference back to FIG. 24, the initiative 2460 can correspond to an initiative of the initiative component 2510, and values drivers can be associated with particular performance metrics, such as the metrics 2414, 2418. Value drivers can be further associated with specific tasks that are defined to improve a metric, such making particular process changes.

It may be useful to associate various tags of a tag component 2570 with insights of the insight component 2514, such as to assist in search or reporting purposes.

The domain model 2500 also shows that discovery references of a discovery reference component 2580 can be linked to particular insights of the insight component 2514. A discovery reference be used to link various information associated with an analysis for a particular analysis entity. For example, a discovery reference can reference a discovery snapshot resulting from a particular analysis of entity data compared with insights generated from analyzing data from a peer group. The discovery reference can also be linked to particular process flows and performance indicators used in generating analysis entity discoveries or peer group insights.

**Example 11- Example JSON Initiative Representation**

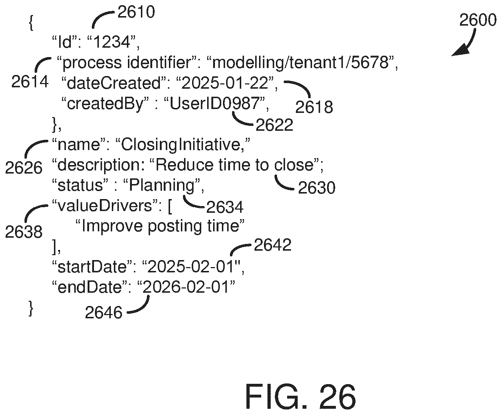

FIG. 26 provides an example JSON listing 2600 for an initiative, such as an initiative of the initiative component 2510 of FIG. 25. The listing 2600 includes an identifier 2610 for the listing and an identifier 2614 for a particular process associated with the initiative (for example, a particular process that was identified during process mining). The listing 2600 can also include a date 2618 the initiative was created and an identifier 2622 of a user who created the initiative.

More semantically meaningful information can be associated with an initiative, such as a name 2626 of the initiative and a description 2630 of the purpose of the initiative. As described with respect to the domain model 2500, the initiative can be associated with a status 2634 and one or more value drivers 2638. Optionally, the initiative can be associated with a start date 2642 or an end date 2646, where the end date can be an achieved end date or a planned end date. Further, a list of tasks each containing a title, one or more assigned users and due date is attached to an initiative.

**Example 12- Example Determination of Temporal Peer Improvement and Peer Selection**

The following discussion provides a particular implementation for determining a set of entities that is similar to an analysis entity, and for determining changes to a process of the analysis entity that may improve performance, as reflected in process change data for a set of reference entities. Starting with the latter, assume that a reference graph $\mathcal{G} = (\mathcal{N}, \varepsilon)$ is provided, that is, the graph is a set of nodes, $\mathcal{N}$, and edges, $\varepsilon$, where $\varepsilon \subseteq \mathcal{N} \times \mathcal{N}$ (that is, an edge is an ordered pair of nodes from the set of nodes). Typically, the nodes are labelled (such as with an identifier of a particular action/process step), where the graph is associated with a labelling function, but the labels are omitted from the remainder of the discussion for simplicity of presentation. Generally, a labelling function can be represented as $f_{\mathcal{G}} : \mathcal{N} \to 2^{\mathcal{L}}$, where $\mathcal{L}$ is a set of labels.

To model the actual process paths/ variant graphs of entities, a multiset of tuples, $\underline{S}$, is used (that is, a given path/variant can occur multiple times in the dataset being analyzed. Tuples are defined as initial and final states of particular paths, from 0 to $n$, in a dataset, where $N_0$, $E_0$, $P_0$ represent the nodes (of $\mathcal{N}$), edges (of $\varepsilon$) and performance metric vectors in an initial state for a given pair of an initial path and a final path, and where $N_0', E_0', P_0'$ represent the nodes (of $\mathcal{N}$), edges (of $\varepsilon$), and performance metrics vectors in the final path. Accordingly,

$$S = \{(N_0, E_0, N_0', E_0', P_0, P_0'), \dots, (N_n, E_n, N_n', E_n', P_n, P_n')\}$$

. For $0 \leq i \leq n$, where $E_i \subseteq N_i \times N_i$, $E_i' \subseteq N_i' \times N_i'$, $N_i, N_i' \subseteq \mathcal{N}, E_i, E'_i \subseteq \mathcal{E}$, and $P_i$, $P_i'$ are vectors of real numbers (in $\mathbb{R}$), holding performance measures such that for $0 \leq i < j \leq n$ it holds that $|P_i| = |P_i'| = |P_j| = |P_j'|$. For example, the graph ($N_i$, $E_i$) models the initial process with performance $P_i$, whereas ($N_i', E_i'$) models the changed graph after some time $t \in \mathbb{N}$ has passed, with performance $P_i'$. These metrics enable the comparison of performance before and after a certain period of time has passed. The vectors are of equal cardinality. Accordingly, the index of a real in a vector can model the identifier of the corresponding performance indicator. That is, a given metric has its element at the same position in all performance vectors.

As noted, each tuple in the set S represents a specific process path/variant of a process (such as where the overall process starts from Node A and ends at Node F). Different tuples thus could involve different intermediate nodes, numbers of intermediate nodes, and orders of intermediate nodes) at a first time and a second time. G can thus represent all possible activities and activity sequences from all paths/variants used by the entities in G.

The goal of identifying process changes that might improve performance of a process for an analysis entity is to find, given a graph $G^* = (N^*, E^*)$, (with $N^* \subseteq \mathcal{N}, E^* \subseteq N^* \times N^*$), changes to $G^*$ that increase relevant performance measures in a performance measure vector P*, modeling the current performance of $G^*$. $G^*$ can represent the nodes and edges from all possible paths for completing the process observed using process mining of the analysis entity.

To achieve this, a goal mapping $g$ is created that labels all reals of P*:

*O* if the measure is an optimization target;
*C* if the measure should be kept stable; or
⊥, otherwise, that is, if the measure can be ignored

Given S and S* = {{(N,E,P)|(N,E,N',E'P,P') ∈ S}} (that is, initially S* is the initial state information for respective tuples of S), S is filtered according to the following criteria, thus obtaining an approximation of S. All tuples from S are removed that exceed a dissimilarity threshold τ given their corresponding element in S*. That is, tuples from S are removed if the difference between an initial state and a final state exceeds a threshold, which can indicate, for example, that a change is too drastic to be considered for recommendation. S* therefore represents specific process paths of G whose modification might improve performance of the process for the entity being analyzed, where changed paths for the reference entities that are too dissimilar from the starting paths are removed. As will be discussed, certain other tuples are removed from S, such as those that are not relevant to a metric being evaluated or those that do not satisfy criteria for improving or maintaining performance of a particular metric.

Here, k-nearest neighbors algorithms can be used. To obtain graph-based measures, quantification approaches such as the Jaccard index or Sørensen-Dice coefficient can be used. From a process graph perspective, entities may use either activity-based or graph-based similarity. That is, in some scenarios, ignoring the graph's binary relation may be desirable.

All tuples (N,E,N',E'E,P,P') are then removed from S where the following conditions do not hold for $p'_j, p^*_j$, given $P' = \langle p'_0, ..., p'_k \rangle$ and $P' = \langle p^*_0, ..., p^*_k \rangle$, $0 \leq j \leq k$, 0. g labels $p^*_j$ as C and $p^*_j \simeq p'_j$. g labels $p^*_j$ as O and $p^*_j \gg p'_j$.
That is, tuples are removed if a performance metric to be optimized (labelled "O") is not improved more than a threshold amount at the later time, or if a performance metric is to be kept stable (labelled "C") and the later value is not approximately equal to the initial value (in some scenarios, this can be modified so that tuples are kept if the final value for the metric is at least approximately equal to the starting value, but is not removed if it is greater than the starting value). This approach can be modified, such as by weighting various performance metrics so that a tuple might be kept if it improves some metrics, even if it degrades other metrics, as long as an overall improvement for the new graph exceeds that of the initial graph.

For each $(N^\simeq, E^\simeq, N'^\simeq, E'^\simeq, P^\simeq, P'^\simeq) \in S^\simeq$, graph deltas $G_i^\Delta = (N^+, E^+, N^-, E^-)$ can be extracted, where:

$$N^+ = N'^\simeq \setminus N^*,$$

an added node;

$$E^+ = E'^\simeq \setminus E^*,$$

an added edge;

$$N^- = N^* \setminus N'^\simeq,$$

a removed node;

$$E^- = E^* \setminus E'^\simeq,$$

a removed edge

Note that every $G_i^\Delta$ is not an actual graph, but rather tuples of nodes and edges that can be applied as changes to the graph of an entity being analyzed to provide process improvement (in terms of one or more performance metrics). These change sets correspond to action recommendations, also referred to as insights. Changes to labels can be handled by straightforwardly extending the approach above.

Recommendations can be ranked using a weighted aggregation of the similarity of the "initial" graphs, the competitiveness of the achieved performance improvement, and the number of graphs for which performance improvements have been obtained (also considering potential "detractors", i.e., graphs for which the corresponding change set did not lead to the desired improvement). The resulting ranked list can be filtered by various characteristics, such as industry/vertical, region, or entity size.

Various techniques can be used to compare process information for an analysis entity with process information for a group of one or more reference entities. In one example, the relative frequency of particular process variants for an analysis entity can be compared with the relative frequency of process variants for a reference group of entities, such as based on respective event logs.

A measure of similarity can be generated using the Earth Mover's distance, which can reflect a degree of work needed to transform a distribution for an entity being evaluated to distributions for the reference entities. A threshold can be set to determine when the distance measure has a value that indicates that the entity being compared with the analysis entity should be considered for inclusion in a reference group of entities.

In a specific example, the Earth Mover's distance can be calculated as $S(r, L_1, L_2) = 1 - \min_{\{r \in R\}} LD(r, L_2, L_2)$, where $LD$ is the Levenshtein Distance, which can be calculated as $LD(r, L_1, L_2) = r \cdot d = \Sigma_{\sigma 1 \in L1} \Sigma_{\sigma 2 \in 2} r(\sigma_1, \sigma_2) d(\sigma_1, \sigma_2)$,

where $d$ is the normalized Levenshtein Distance and r is a reallocation function that measures an amount of effort for redistributing occurrence frequencies of variants from the log so that the distributions are aligned.

As an example, consider <a, b, c, d> and <a, e, c, d>. Only one change needs to be made to transform one set into the other - replacing b with e or vice versa. The normalized Levenshtein Distance can be calculated by dividing the number of changes, 1, by maximum length of the two sets. In this case, there are 4 elements in each set, so the normalized Levenshtein Distance is ¼ = 0.25.

**Example 13- Example Code for Peer Group Selection**

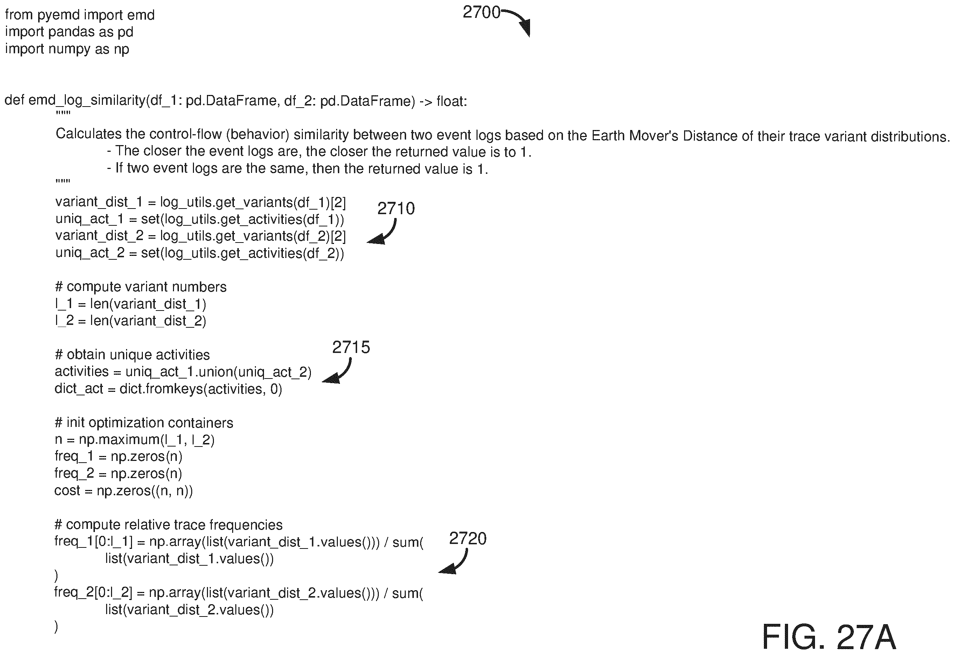

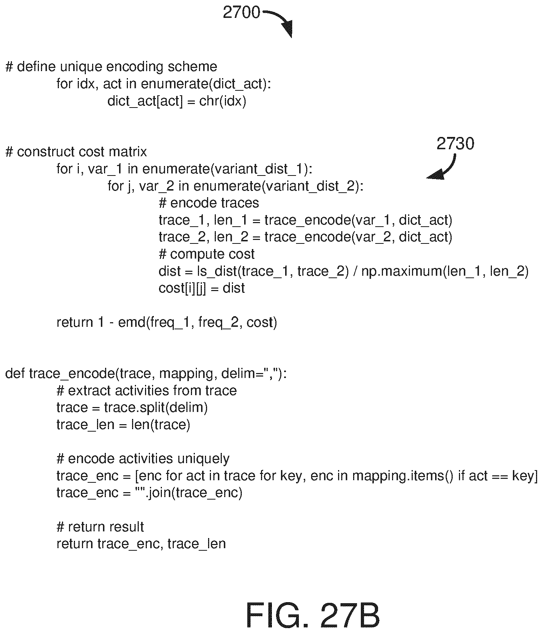

FIGS. 27A and 27B provide example code 2700 for calculating the similarity of two event logs, such as for use in determining a set of entities that are similar to an analysis entity. Process variants are extracted from each event log, and a set of unique activities represented in the event log are determined at 2710. Code 2715 combines activities observed in each event log to provide a combined set of activities. Code 2720 calculates the frequency of particular process variants in the event logs. In FIG. 27B, code 2730 calculates the cost of transforming one set of activity or variant frequencies from one log into those from another log, measuring similarity between the processes of two entities (or for an analysis entity and log data for a group of reference entities).

In the code 2700, activities represent particular process steps, while a trace refers to a particular instance of a path between activities for an "instance" of a particular process (for example, data for a specific order and delivery of items in that order). A variant refers to a specific sequence of activities, and so a given variant can be associated with multiple traces. The distributions measure the frequency, number of traces, for a particular variant, and the difference between these two distributions, such as the Earth Mover's distance, provides a value that indicates how similar two event log are, and thus the particular processes of the entities being compared.

**Example 14- Example Operations**

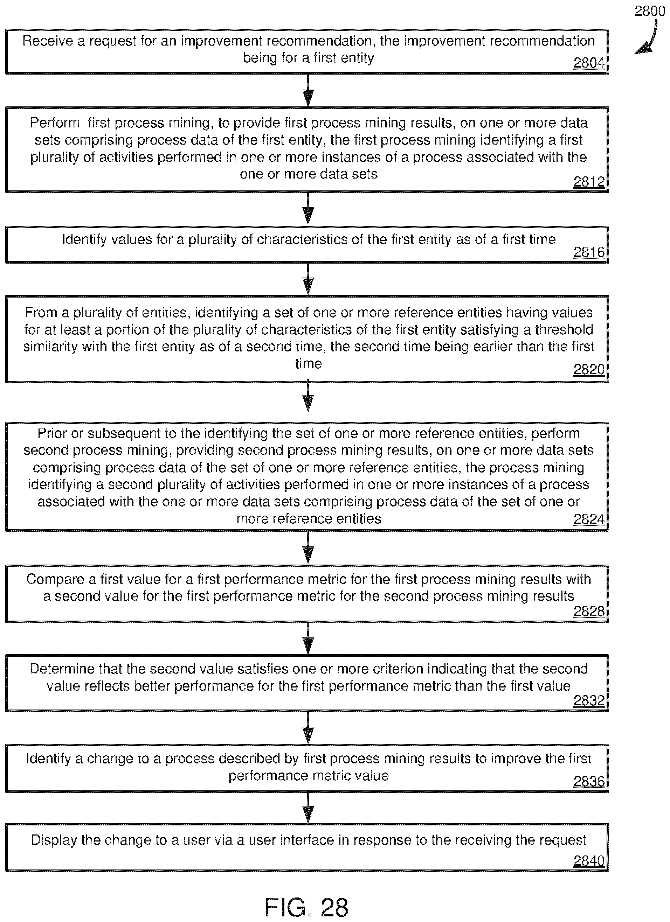

FIG. 28 is a flowchart of a process 2800 for analyzing process data to identify changes to improve a performance metric of a first entity and provide an improvement recommendation. At 2808, a request for an improvement recommendation for a first entity is received. The improvement recommendation is based on the results of first process mining performed on one or more data sets comprising process data of the first entity.

At 2812, first process mining is performed on the one or more data sets of the first entity to provide first process mining results. This first process mining identifies a first plurality of activities performed in one or more instances of a process associated with the one or more data sets. At 2816, values for a plurality of characteristics of the first entity are identified as of a first time. At 2820, from a plurality of entities, a set of one or more reference entities is identified. These reference entities have values for at least a portion of the plurality of characteristics of the first entity satisfying a threshold similarity with the first entity as of a second time, which is earlier than the first time.

At 2824, prior or subsequent to identifying the set of one or more reference entities, second process mining is performed on one or more data sets comprising process data of the set of one or more reference entities. This process mining identifies a second plurality of activities performed in one or more instances of a process associated with the one or more data sets comprising process data of the set of one or more reference entities, providing second process mining results.

At 2828, a first value for a first performance metric for the first process mining results is compared with a second value for the first performance metric for the second process mining results. At 2832, it is determined that the second value satisfies one or more criterion indicating that the second value reflects better performance for the first performance metric than the first value. At 2836, a change to a process described by the first process mining results is identified to improve the first performance metric value.

At 2840, the change is displayed to a user via a user interface in response to the received request.

**Example 15- Additional Examples**

Example 1 provides a computing system comprising at least one memory; one or more hardware processing units coupled to the at least one memory; and one or more computer readable storage media storing computer-executable instructions that, when executed, cause the computing system to perform operations. The operations include receiving a request for an improvement recommendation, the improvement recommendation being for a first entity. The operations further include performing first process mining, to provide first process mining results, on one or more data sets comprising process data of the first entity. The first process mining identifies a first plurality of activities performed in one or more instances of a process associated with the one or more data sets.

Values are identified for a plurality of characteristics of the first entity as of a first time. From a plurality of entities, a set of one or more reference entities are identified having values for at least a portion of the plurality of characteristics of the first entity satisfying a threshold similarity with the first entity as of a second time, the second time being earlier than the first time. Prior or subsequent to the identifying the set of one or more reference entities, second process mining is performed, providing second process mining results, on one or more data sets comprising process data of the set of one or more reference entities. The process mining identifies a second plurality of activities performed in one or more instances of a process associated with the one or more data sets comprising process data of the set of one or more reference entities.

The operations further include comparing a first value for a first performance metric for the first process mining results with a second value for the first performance metric for the second process mining results; determining that the second value satisfies one or more criterion indicating that the second value reflects better performance for the first performance metric than the first value; identifying a change to a process described by the first process mining results to improve the first performance metric value; and displaying the change to a user via a user interface in response to the receiving the request.

Example 2 is the computing system of Example 1, where the one or more data sets of the first entity and the one or more data sets for the set of one or more reference entities are stored in one or more database objects and the first process mining and the second process mining are performed with respect to fields of the one or more database objects.

Example 3 is the computing system of Example 1 or Example 2, where at least a portion of the one or more data objects are relational database tables.

Example 4 extends any of Examples 1-3, wherein the identifying a set of one more reference entities comprises determining a first plurality of distinct paths through at least the first plurality of activities, wherein a respective distinct path of the first plurality of distinct paths represents a respective instance of a process. The operations further include determining respective numbers of occurrences of respective distinct paths of the first plurality of distinct paths from the one or more data sets comprising process data of the first entity; determining a second plurality of distinct paths through at least the second plurality of activities; determining respective numbers of occurrence of respective distinct paths of the second plurality of distinct paths from the one or more data sets comprising process data of the set of one or more reference entities; and comparing the respective number of occurrences for the first plurality of distinct paths with the respective number of occurrences for the second plurality of distinct paths.

Example 5 extends Example 4, wherein at least a portion of the first plurality of distinct paths from the one or more data sets correspond to distinct paths in process data of the first entity.

Example 6 extends any of Examples 1-5, wherein the identifying a set of one or more reference entities comprises filtering the plurality of entities using values for one or more entity characteristics.

Example 7 extends any of Examples 1-6, wherein the second process mining is carried out for the set of one or more reference entities at a third time and for the set of one or more reference entities at a fourth time, the fourth time being later than the third time. The operations further include, from the second process mining results, identifying a change from a first process flow at the third time to a second process flow at the fourth time that improves a value for the first performance metric.

Example 8 extends Example 7, wherein the identifying a change to the first process mining results comprises the change from the first process flow at the third time to the second process flow at the fourth time.

Example 9 extends Example 7, wherein the third time is the second time.

Example 10 extends Example 7, wherein the fourth time is the first time.

Example 11 extends any of Examples 1-10, where the operations further comprise identifying an initiative defined for a reference entity of the set of one or more reference entities, the initiative identifying tasks for improving the first performance metric; and displaying at least a portion of the tasks to the user using the user interface.

Example 12 extends any of Examples 1-10, where the operations further comprise identifying an initiative defined for a reference entity of the one or more reference entities, the initiative identifying insights for improving the first performance metric; and displaying at least a portion of the insights to the user using the user interface.

Example 13 is a method, implemented in a computing system comprising at least one hardware processor and at least one memory coupled to the at least one hardware processor. The method comprises receiving a request for an improvement recommendation, the improvement recommendation being for a first entity, and performing first process mining, to provide first process mining results, on one or more data sets comprising process data of the first entity. The first process mining identifies a first plurality of activities performed in one or more instances of a process associated with the one or more data sets.

The method further includes identifying values for a plurality of characteristics of the first entity as of a first time. From a plurality of entities, a set of one or more reference entities are identified having values for at least a portion of the plurality of characteristics of the first entity satisfying a threshold similarity with the first entity as of a second time, the second time being earlier than the first time. The method further includes, prior or subsequent to the identifying the set of one or more reference entities, performing second process mining, providing second process mining results, on one or more data sets comprising process data of the set of one or more reference entities. The process mining identifies a second plurality of activities performed in one or more instances of a process associated with the one or more data sets comprising process data of the set of one or more reference entities. The method further includes comparing a first value for a first performance metric for the first process mining results with a second value for the first performance metric for the second process mining results. The method determines that the second value satisfies one or more criterion indicating that the second value reflects better performance for the first performance metric than the first value. The method includes identifying a change to a process described by first process mining results to improve the first performance metric value; and displaying the change to a user via a user interface in response to the receiving the request.

Example 14 extends Example 13, wherein the one or more data sets of the first entity and the one or more data sets for the set of one or more reference entities are stored in one or more database objects and the first process mining and the second process mining are performed with respect to fields of the one or more database objects.

Example 15 extends Example 13 or Example 14, wherein at least a portion of the one or more data objects are relational database tables.

Example 16 extends any of Examples 13-15, wherein the identifying a set of one more reference entities comprises determining a first plurality of distinct paths through at least the first plurality of activities, wherein a respective distinct path of the plurality of distinct paths represents a respective instance of a process. The method further includes determining respective numbers of occurrences of respective distinct paths of the first plurality of distinct paths from the one or more data sets comprising process data of the first entity; determining a second plurality of distinct paths through at least the second plurality of activities; determining respective numbers of occurrence of respective distinct paths of the second plurality of distinct paths from the one or more data sets comprising process data of the set of one or more reference entities; and comparing the respective number of occurrences for the first plurality of distinct paths with the respective number of occurrences for the second plurality of distinct paths.

Example 17 extends Example 16, wherein at least a portion of the plurality of distinct paths from the one or more data sets correspond to distinct paths in process data of the first entity.

Example 18 provides one or more computer-readable storage media comprising computer-executable instructions that, when executed by a computing system comprising at least one hardware processor and at least one memory coupled to the at least one hardware processor, cause the computing system to perform various operations. The operations cause the computing system to receive a request for an improvement recommendation, the improvement recommendation being for a first entity, and perform first process mining, to provide first process mining results, on one or more data sets comprising process data of the first entity. The first process mining identifies a first plurality of activities performed in one or more instances of a process associated with the one or more data sets and identifies values for a plurality of characteristics of the first entity as of a first time.

The operations also cause the computing system to, from a plurality of entities, identify a set of one or more reference entities having values for at least a portion of the plurality of characteristics of the first entity satisfying a threshold similarity with the first entity as of a second time, the second time being earlier than the first time. Prior or subsequent to the identifying the set of one or more reference entities, second process mining is performed, providing second process mining results, on one or more data sets comprising process data of the set of one or more reference entities. The process mining identifies a second plurality of activities performed in one or more instances of a process associated with the one or more data sets comprising process data of the set of one or more reference entities. The operations include comparing a first value for a first performance metric for the first process mining results with a second value for the first performance metric for the second process mining results and determining that the second value satisfies one or more criterion indicating that the second value reflects better performance for the first performance metric than the first value. A change is identified to a process described by the first process mining results to improve the first performance metric value; and the change is displayed to a user via a user interface in response to the receiving the request.

Example 19 extends Example 18, wherein the computer-executable instructions that cause the computing system to identify a set of one or more reference entities include determining a first plurality of distinct paths through at least the first plurality of activities, wherein a respective distinct path of the plurality of distinct paths represents a respective instance of a process; determining respective numbers of occurrences of respective distinct paths of the first plurality of distinct paths from the one or more data sets comprising process data of the first entity; determining a second plurality of distinct paths through at least the second plurality of activities; determining respective numbers of occurrence of respective distinct paths of the second plurality of distinct paths from the one or more data sets comprising process data of the set of one or more reference entities; and comparing the respective number of occurrences for the first plurality of distinct paths with the respective number of occurrences for the second plurality of distinct paths.

Example 20 extends Example 19, where the one or more data sets of the first entity and the one or more data sets for the set of one or more reference entities are stored in one or more database objects and the process mining is performed with respect to fields of the one or more database objects.

**Example 16 - Computing Systems**

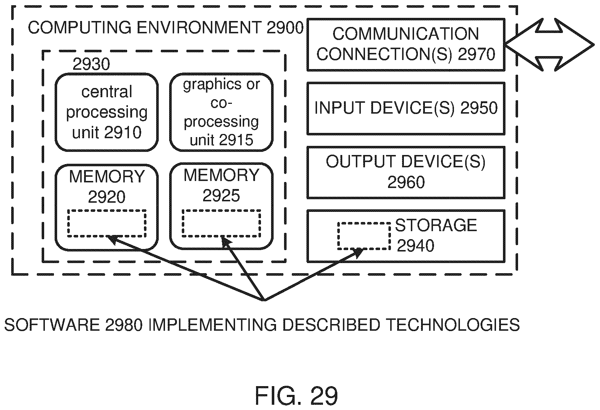

FIG. 29 depicts a generalized example of a suitable computing system 2900 in which the described innovations may be implemented. The computing system 2900 is not intended to suggest any limitation as to scope of use or functionality of the present disclosure, as the innovations may be implemented in diverse general-purpose or special-purpose computing systems.

With reference to FIG. 29, the computing system 2900 includes one or more processing units 2910, 2915 and memory 2920, 2925. In FIG. 29, this basic configuration 2930 is included within a dashed line. The processing units 2910, 2915 execute computer-executable instructions, such as for implementing technologies described in Examples 1-15. A processing unit can be a general-purpose central processing unit (CPU), processor in an application-specific integrated circuit (ASIC), or any other type of processor. In a multiprocessing system, multiple processing units execute computer-executable instructions to increase processing power. For example, FIG. 29 shows a central processing unit 2910 as well as a graphics processing unit or co-processing unit 2915. The tangible memory 2920, 2925 may be volatile memory (e.g., registers, cache, RAM), non-volatile memory (e.g., ROM, EEPROM, flash memory, etc.), or some combination of the two, accessible by the processing unit(s) 2910, 2915. The memory 2920, 2925 stores software 2980 implementing one or more innovations described herein, in the form of computer-executable instructions suitable for execution by the processing unit(s) 2910, 2915.

A computing system 2900 may have additional features. For example, the computing system 2900 includes storage 2940, one or more input devices 2950, one or more output devices 2960, and one or more communication connections 2970. An interconnection mechanism (not shown) such as a bus, controller, or network interconnects the components of the computing system 2900. Typically, operating system software (not shown) provides an operating environment for other software executing in the computing system 2900, and coordinates activities of the components of the computing system 2900.

The tangible storage 2940 may be removable or non-removable, and includes magnetic disks, magnetic tapes or cassettes, CD-ROMs, DVDs, or any other medium which can be used to store information in a non-transitory way, and which can be accessed within the computing system 2900. The storage 2940 stores instructions for the software 2980 implementing one or more innovations described herein.

The input device(s) 2950 may be a touch input device such as a keyboard, mouse, pen, or trackball, a voice input device, a scanning device, or another device that provides input to the computing system 2900. The output device(s) 2960 may be a display, printer, speaker, CD-writer, or another device that provides output from the computing system 2900.

The communication connection(s) 2970 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the general context of computer-executable instructions, such as those included in program modules, being executed in a computing system on a target real or virtual processor. Generally, program modules or components include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing system.

The terms "system" and "device" are used interchangeably herein. Unless the context clearly indicates otherwise, neither term implies any limitation on a type of computing system or computing device. In general, a computing system or computing device can be local or distributed, and can include any combination of special-purpose hardware and/or general-purpose hardware with software implementing the functionality described herein.

In various examples described herein, a module (e.g., component or engine) can be "coded" to perform certain operations or provide certain functionality, indicating that computer-executable instructions for the module can be executed to perform such operations, cause such operations to be performed, or to otherwise provide such functionality. Although functionality described with respect to a software component, module, or engine can be carried out as a discrete software unit (e.g., program, function, class method), it need not be implemented as a discrete unit. That is, the functionality can be incorporated into a larger or more general-purpose program, such as one or more lines of code in a larger or general-purpose program.

For the sake of presentation, the detailed description uses terms like "determine" and "use" to describe computer operations in a computing system. These terms are high-level abstractions for operations performed by a computer, and should not be confused with acts performed by a human being. The actual computer operations corresponding to these terms vary depending on implementation.

**Example 17 - Cloud Computing Environment**

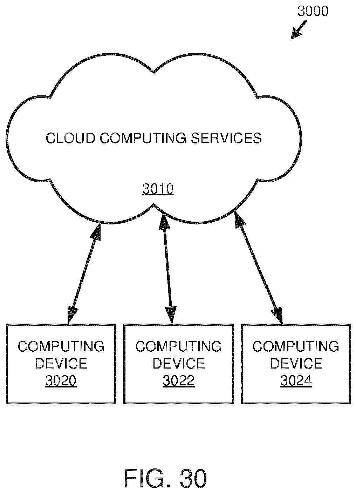

FIG. 30 depicts an example cloud computing environment 3000 in which the described technologies can be implemented. The cloud computing environment 3000 comprises cloud computing services 3010. The cloud computing services 3010 can comprise various types of cloud computing resources, such as computer servers, data storage repositories, networking resources, etc. The cloud computing services 3010 can be centrally located (e.g., provided by a data center of an entity) or distributed (e.g., provided by various computing resources located at different locations, such as different data centers and/or located in different cities or countries).

The cloud computing services 3010 are utilized by various types of computing devices (e.g., client computing devices), such as computing devices 3020, 3022, and 3024. For example, the computing devices (e.g., 3020, 3022, and 3024) can be computers (e.g., desktop or laptop computers), mobile devices (e.g., tablet computers or smart phones), or other types of computing devices. For example, the computing devices (e.g., 3020, 3022, and 3024) can utilize the cloud computing services 3010 to perform computing operators (e.g., data processing, data storage, and the like).

**Example 18 - Implementations**

Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed methods can be used in conjunction with other methods.

Any of the disclosed methods can be implemented as computer-executable instructions or a computer program product stored on one or more computer-readable storage media, such as tangible, non-transitory computer-readable storage media, and executed on a computing device (e.g., any available computing device, including smart phones or other mobile devices that include computing hardware). Tangible computer-readable storage media are any available tangible media that can be accessed within a computing environment (e.g., one or more optical media discs such as DVD or CD, volatile memory components (such as DRAM or SRAM), or nonvolatile memory components (such as flash memory or hard drives)). By way of example, and with reference to FIG. 29, computer-readable storage media include memory 2920 and 2925, and storage 2940. The term computer-readable storage media does not include signals and carrier waves. In addition, the term computer-readable storage media does not include communication connections (e.g., 2970).

Any of the computer-executable instructions for implementing the disclosed techniques as well as any data created and used during implementation of the disclosed embodiments can be stored on one or more computer-readable storage media. The computer-executable instructions can be part of, for example, a dedicated software application or a software application that is accessed or downloaded via a web browser or other software application (such as a remote computing application). Such software can be executed, for example, on a single local computer (e.g., any suitable commercially available computer) or in a network environment (e.g., via the Internet, a wide-area network, a local-area network, a client-server network (such as a cloud computing network), or other such network) using one or more network computers.

For clarity, only certain selected aspects of the software-based implementations are described. Other details that are well known in the art are omitted. For example, it should be understood that the disclosed technology is not limited to any specific computer language or program. For instance, the disclosed technology can be implemented by software written in C, C++, C#, Java, Perl, JavaScript, Python, R, Ruby, ABAP, SQL, XCode, GO, Adobe Flash, or any other suitable programming language, or, in some examples, markup languages such as html or XML, or combinations of suitable programming languages and markup languages. Likewise, the disclosed technology is not limited to any particular computer or type of hardware. Certain details of suitable computers and hardware are well known and need not be set forth in detail in this disclosure.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.

The disclosed methods, apparatus, and systems should not be construed as limiting in any way. Instead, the present disclosure is directed toward all novel and nonobvious features and aspects of the various disclosed embodiments, alone and in various combinations and sub combinations with one another. The disclosed methods, apparatus, and systems are not limited to any specific aspect or feature or combination thereof, nor do the disclosed embodiments require that any one or more specific advantages be present, or problems be solved.

The technologies from any example can be combined with the technologies described in any one or more of the other examples. In view of the many possible embodiments to which the principles of the disclosed technology may be applied, it should be recognized that the illustrated embodiments are examples of the disclosed technology and should not be taken as a limitation on the scope of the disclosed technology. Rather, the scope of the disclosed technology includes what is covered by the scope and spirit of the following claims.

# EP 4 668 135 A1

**Claims**

1. A computing system comprising:

   at least one memory;
   one or more hardware processing units coupled to the at least one memory; and
   one or more computer readable storage media storing computer-executable instructions that, when executed, cause the computing system to perform operations comprising:

   receiving a request for an improvement recommendation, the improvement recommendation being for a first entity;
   performing first process mining, to provide first process mining results, on one or more data sets comprising process data of the first entity, the first process mining identifying a first plurality of activities performed in one or more instances of a process associated with the one or more data sets;
   identifying values for a plurality of characteristics of the first entity as of a first time;
   from a plurality of entities, identifying a set of one or more reference entities having values for at least a portion of the plurality of characteristics of the first entity satisfying a threshold similarity with the first entity as of a second time, the second time being earlier than the first time;
   prior or subsequent to the identifying the set of one or more reference entities, performing second process mining, providing second process mining results, on one or more data sets comprising process data of the set of one or more reference entities, the process mining identifying a second plurality of activities performed in one or more instances of a process associated with the one or more data sets comprising process data of the set of one or more reference entities;
   comparing a first value for a first performance metric for the first process mining results with a second value for the first performance metric for the second process mining results;
   determining that the second value satisfies one or more criterion indicating that the second value reflects better performance for the first performance metric than the first value;
   identifying a change to a process described by the first process mining results to improve the first performance metric value; and
   displaying the change to a user via a user interface in response to the receiving the request.

2. The computing system of claim 1, wherein the one or more data sets of the first entity and the one or more data sets for the set of one or more reference entities are stored in one or more database objects and the first process mining and the second process mining are performed with respect to fields of the one or more database objects; and/or wherein at least a portion of the one or more data objects are relational database tables.

3. The computing system of claim 1 or 2, wherein the identifying a set of one more reference entities comprises:

   determining a first plurality of distinct paths through at least the first plurality of activities, wherein a respective distinct path of the first plurality of distinct paths represents a respective instance of a process;
   determining respective numbers of occurrences of respective distinct paths of the first plurality of distinct paths from the one or more data sets comprising process data of the first entity;
   determining a second plurality of distinct paths through at least the second plurality of activities;
   determining respective numbers of occurrence of respective distinct paths of the second plurality of distinct paths from the one or more data sets comprising process data of the set of one or more reference entities; and
   comparing the respective number of occurrences for the first plurality of distinct paths with the respective number of occurrences for the second plurality of distinct paths;
   wherein, optionally, at least a portion of the first plurality of distinct paths from the one or more data sets correspond to distinct paths in process data of the first entity.

4. The computing system of any one of claims 1 to 3, wherein the identifying a set of one or more reference entities comprises filtering the plurality of entities using values for one or more entity characteristics.

5. The computing system of any one of claims 1 to 4, wherein the second process mining is carried out for the set of one or more reference entities at a third time and for the set of one or more reference entities at a fourth time, the fourth time being later than the third time, the operations further comprising:
   from the second process mining results, identifying a change from a first process flow at the third time to a second process flow at the fourth time that improves a value for the first performance metric.

6. The computing system of claim 5, wherein the identifying a change to the first process mining results comprises the change from the first process flow at the third time to the second process flow at the fourth time; and/or

   wherein the third time is the second time; and/or
   wherein the fourth time is the first time.

7. The computing system of any one of claims 1 to 6, the operations further comprising:

   identifying an initiative defined for a reference entity of the set of one or more reference entities, the initiative identifying tasks for improving the first performance metric; and
   displaying at least a portion of the tasks to the user using the user interface.

8. The computing system of any one of claims 1 to 7, the operations further comprising:

   identifying an initiative defined for a reference entity of the one or more reference entities, the initiative identifying insights for improving the first performance metric; and
   displaying at least a portion of the insights to the user using the user interface.

9. A method, implemented in a computing system comprising at least one hardware processor and at least one memory coupled to the at least one hardware processor, the method comprising:

   receiving a request for an improvement recommendation, the improvement recommendation being for a first entity;
   performing first process mining, to provide first process mining results, on one or more data sets comprising process data of the first entity, the first process mining identifying a first plurality of activities performed in one or more instances of a process associated with the one or more data sets;
   identifying values for a plurality of characteristics of the first entity as of a first time;
   from a plurality of entities, identifying a set of one or more reference entities having values for at least a portion of the plurality of characteristics of the first entity satisfying a threshold similarity with the first entity as of a second time, the second time being earlier than the first time;
   prior or subsequent to the identifying the set of one or more reference entities, performing second process mining, providing second process mining results, on one or more data sets comprising process data of the set of one or more reference entities, the process mining identifying a second plurality of activities performed in one or more instances of a process associated with the one or more data sets comprising process data of the set of one or more reference entities;
   comparing a first value for a first performance metric for the first process mining results with a second value for the first performance metric for the second process mining results;
   determining that the second value satisfies one or more criterion indicating that the second value reflects better performance for the first performance metric than the first value;
   identifying a change to a process described by first process mining results to improve the first performance metric value; and
   displaying the change to a user via a user interface in response to the receiving the request.

10. The method of claim 9, wherein the one or more data sets of the first entity and the one or more data sets for the set of one or more reference entities are stored in one or more database objects and the first process mining and the second process mining are performed with respect to fields of the one or more database objects.

11. The method of claim 9 or 10, wherein at least a portion of the one or more data objects are relational database tables.

12. The method of any one of claims 9 to 11, wherein the identifying a set of one more reference entities comprises:

   determining a first plurality of distinct paths through at least the first plurality of activities, wherein a respective distinct path of the plurality of distinct paths represents a respective instance of a process;
   determining respective numbers of occurrences of respective distinct paths of the first plurality of distinct paths from the one or more data sets comprising process data of the first entity;
   determining a second plurality of distinct paths through at least the second plurality of activities;
   determining respective numbers of occurrence of respective distinct paths of the second plurality of distinct paths from the one or more data sets comprising process data of the set of one or more reference entities; and

comparing the respective number of occurrences for the first plurality of distinct paths with the respective number of occurrences for the second plurality of distinct paths;

wherein, optionally, at least a portion of the plurality of distinct paths from the one or more data sets correspond to distinct paths in process data of the first entity.

13. One or more computer-readable storage media comprising:

computer-executable instructions that, when executed by a computing system comprising at least one hardware processor and at least one memory coupled to the at least one hardware processor, cause the computing system to receive a request for an improvement recommendation, the improvement recommendation being for a first entity;

computer-executable instructions that, when executed by the computing system, cause the computing system to perform first process mining, to provide first process mining results, on one or more data sets comprising process data of the first entity, the first process mining identifying a first plurality of activities performed in one or more instances of a process associated with the one or more data sets;

computer-executable instructions that, when executed by the computing system, cause the computing system to identify values for a plurality of characteristics of the first entity as of a first time;

computer-executable instructions that, when executed by the computing system, cause the computing system to, from a plurality of entities, identify a set of one or more reference entities having values for at least a portion of the plurality of characteristics of the first entity satisfying a threshold similarity with the first entity as of a second time, the second time being earlier than the first time;

computer-executable instructions that, when executed by the computing system, cause the computing system to, prior or subsequent to the identifying the set of one or more reference entities, perform second process mining, providing second process mining results, on one or more data sets comprising process data of the set of one or more reference entities, the process mining identifying a second plurality of activities performed in one or more instances of a process associated with the one or more data sets comprising process data of the set of one or more reference entities;

computer-executable instructions that, when executed by the computing system, cause the computing system to compare a first value for a first performance metric for the first process mining results with a second value for the first performance metric for the second process mining results;

computer-executable instructions that, when executed by the computing system, cause the computing system to determine that the second value satisfies one or more criterion indicating that the second value reflects better performance for the first performance metric than the first value;

computer-executable instructions that, when executed by the computing system, cause the computing system to identify a change to a process described by in the first process mining results to improve the first performance metric value; and

computer-executable instructions that, when executed by the computing system, cause the computing system to display the change to a user via a user interface in response to the receiving the request.

14. The one or more computer-readable storage media of claim 13, wherein the computer-executable instructions that cause the computing system to identify a set of one more reference entities comprise:

computer-executable instructions that, when executed by the computing system, cause the computing system to determine a first plurality of distinct paths through at least the first plurality of activities, wherein a respective distinct path of the plurality of distinct paths represents a respective instance of a process;

computer-executable instructions that, when executed by the computing system, cause the computing system to determine respective numbers of occurrences of respective distinct paths of the first plurality of distinct paths from the one or more data sets comprising process data of the first entity;

computer-executable instructions that, when executed by the computing system, cause the computing system to determine a second plurality of distinct paths through at least the second plurality of activities;

computer-executable instructions that, when executed by the computing system, cause the computing system to determine respective numbers of occurrence of respective distinct paths of the second plurality of distinct paths from the one or more data sets comprising process data of the set of one or more reference entities; and

computer-executable instructions that, when executed by the computing system, cause the computing system to compare the respective number of occurrences for the first plurality of distinct paths with the respective number of occurrences for the second plurality of distinct paths.

15. The one or more computer-readable storage media of claim 13 or 14, wherein the one or more data sets of the first entity and the one or more data sets for the set of one or more reference entities are stored in one or more database objects and the process mining is performed with respect to fields of the one or more database objects.

FIG. 1

EP 4 668 135 A1

Data System Schema 200

| Technical ID<br>201 | Data Type<br>202 | I18n<br>203 | Type Title<br>204 | Call Stack ID<br>205 |
|---|---|---|---|---|
| ERGRD | String(2) | ERGRD | Create Reason | KSU00361 / PrintDocs / ERGRD |
| ABRVORG | String(2) | ABRVORG | Billing Trans. | KSU00361 / PrintDocs / ABRVORG |
| PORTION | String(8) | BU_PORTION | Portion | KSU00361 / PrintDocs / PORTION |
| TOTAL_AMNT | Decimal(38,2) | BETRW_KK | Amount | KSU00361 / PrintDocs / TOTAL_AMNT |
| VKONT | String(5) | VKONT_KK | Contract Acct | KSU00361 / PrintDocs / VKONT |
| FIKEY | String(1) | FIKEY_KK | Reconciliation Key | KSU00361 / PrintDocs / FIKEY |
| ... | ... | ... | ... | ... |
| ... | ... | ... | ... | ... |
| ... | ... | ... | ... | ... |

FIG. 2A

Definition User Interface <u>210</u>

211

<u>Type:</u>    Blocker

212

<u>Blocker Id:</u>    CTX_20_10

<u>Phrase:</u>    20

213

<u>X Location:</u>    258

214

<u>Y Location:</u>    99

215

<u>Title:</u>    Cancellation of Document due to Missing Value

216

<u>Query Pattern:</u>    OPBEL_DFKKO is not null ; AND NOT OPBEL_DFFKKO = "; AND (AUGBL is null)

FIG. 2B

EP 4 668 135 A1

FIG. 2C

300

Host Platform 320

Query Repository 328

Fetch Query / Process / Generate UI

Executable Query

Query Processor 324

Data System 326

Data

Query

Query ID

Data

Analyze

Analytic Application 322

310

Query ID

Analysis

User Device

FIG. 3A

FIG. 3B

**400**

## MILESTONES

| Create Sales Order | Create Invoice | Invoice Cleared |
|---|---|---|
| 410 | 420 | 430 |
| 4 Blockers Detected (412) | 3 Blockers Detected | |
| 414 | | |
| (100%) 13.4k Documents Created | (33.6%) 4.5k Documents Created | (8.2%) 1.1k Documents Created |

## BLOCKERS

**416**

| Manually Released (29%) 2.6k Documents | Open and Overdue (29%) 1.0k Documents |
|---|---|
| Document Canceled (42%) 3.8k Documents  — 418 | Different Terms (38%) 1.3k Documents |
| Order Not Yet Transferred (12%) 1.1k Documents | Document Canceled (32%) 1.1k Documents |
| Document Returned (16%) 1.4k Documents | |

## FIG. 4

EP 4 668 135 A1

500

```
┌─────────────────────────────────────────────┐  510
│                                             │
│     Loading a Schema of a Data System       │
│                                             │
└─────────────────────────────────────────────┘
                      │
                      ▼
┌─────────────────────────────────────────────┐  520
│  Identifying a Plurality of Events within a │
│  Process and a Plurality of Blockers of the │
│                  Events                     │
└─────────────────────────────────────────────┘
                      │
                      ▼
┌─────────────────────────────────────────────┐  530
│   Defining a Plurality of Queries for       │
│   Analyzing the Plurality of Blockers       │
│                                             │
└─────────────────────────────────────────────┘
                      │
                      ▼
┌─────────────────────────────────────────────┐  540
│   Generating and Storing a script for       │
│   Executing the Plurality of Queries        │
│                                             │
└─────────────────────────────────────────────┘
```

FIG. 5

EP 4 668 135 A1

600

FIG. 6

EP 4 668 135 A1

750

EP 4 668 135 A1

| Request ID | Item ID | Doc Type | Sales Date | Purchaser ID | Invoice Date | |
|---|---|---|---|---|---|---|
| 102795 | 678 | Order | 1/03/2023 | Org A | 1/07/2023 | . . . |
| 102798 | 1482 | Invoice | 1/04/2023 | Org B | 1/13/2023 | . . . |
| 102809 | 403 | Order | 1/04/2023 | Org C | 1/09/2023 | . . . |
| 102822 | 3234 | Order | 1/06/2023 | Org C | 1/14/2023 | . . . |
| 102856 | 1679 | Receipt | 1/06/2023 | Org D | 1/17/2023 | . . . |
| . . . | . . . | . . . | . . . | . . . | . . . | |
| . . . | . . . | . . . | . . . | . . . | . . . | |

751  752  753  754  755  756

760

FIG. 7

800

| | 801 | 802 | 803 | 804 | 805 | |
|---|---|---|---|---|---|---|
| | ID | Currency | Customer ID | Activity | Date | ··· |
| 761 | 102795 | EUR | Org A | Created | 1/07/2023 | ··· |
| 762 | 102795 | EUR | Org A | Shipped | 1/11/2023 | ··· |
| 763 | 102795 | EUR | Org A | Paid | 1/19/2023 | ··· |
| | 102798 | US | Org B | Created | 1/12/2023 | ··· |
| | 102798 | US | Org B | Shipped | 1/17/2023 | ··· |
| | ··· | ··· | ··· | ··· | ··· | |
| | ··· | ··· | ··· | ··· | ··· | |

(Event Log)

# FIG. 8

900

FIG.9

FIG. 10A

FIG. 10B

FIG. 10C

EP 4 668 135 A1

FIG. 10D

EP 4 668 135 A1

**FIG. 11**

1200

Step 4 — Variant 1, Variant 2, Variant 3, Variant 4, Variant 5

Step 3 — Variant 1, Variant 2, Variant 3, Variant 4

Step 2 — Variant 1, Variant 2, Variant 3

Step 1 — Variant 1, Variant 2, Variant 3, Variant 4, Variant 5, Variant 6

End

Start

1210

1220

FIG. 12

1300

Generating a Process Diagram of a Sequence of Events within a Process | 1310

Displaying the Process Diagram | 1320

Selecting a Reference Diagram with a Different Sequence of Events | 1330

Identifying an Improvement to the Process from the Reference Diagram | 1340

Modifying the Process Diagram with an Alternative Execution Flow from the Reference Diagram | 1350

# FIG. 13

1400

Host Platform 1420

User Device 1410

User Interface 1412

Software Application 1422

*Benchmark*

Filter Processor 1424

*Generate / Execute*

Data System (Records) 1426

API 1432

Data System (Records) 1430

FIG. 14

FIG. 15

1500

Data Set 1510

Data Set 1520

1512

1515

1513

1521

1514

1516

1517

1522

1531

Data Set 1530

Data Set 1540

EP 4 668 135 A1

FIG. 16A

EP 4 668 135 A1

1600B

Software Application 1620

Filter Processor

1622

User Interface 1630b

1631

*Revenue* ☑

*No. of Employees* ☐

*No. of Customers* ☑

*DSO* ☐

*Spend (Procurement)* ☐

*Spend (Lead Gen)* ☐

1635

*Set Weight*        *Set Value*

Data Store 1610

1612
Data Records

FIG. 16B

FIG. 16C

EP 4 668 135 A1

1700

FIG. 17A

**1700B**

FIG. 17B

EP 4 668 135 A1

FIG. 18

1900

FIG. 19

FIG. 20

EP 4 668 135 A1

**Data Store 2112**

**Entity 2116**

**Characteristics 2120**

Performance
2132

Entity Attributes
2136

Processes
2168

Activities
2164

**Log 2140**

Event 2144

Activity
2148

Timestamp
2152

Initiatives
2194

Insights
2176

**Entity Group 2124**

Group Definition
2128

Entity
2116

**Analysis Framework 2108**

Process Mining 2160

Entity Classifier 2184

Insight Generator 2172

Initiative Generator 2190

2100

FIG. 21

FIG. 22A

FIG. 22B

FIG. 22C

FIG. 23

| | |
|---|---|
| Sales Order Automation Rate: 20% below benchmark 2414 | Delivery Creation Automation Rate: 31% below benchmark 2418 |
| Invoice to Cash Clearing Lead Time: 30% slower than benchmark 2422 | Delivery to Receipt Lead Time: 20% quicker than benchmark 2426 |

Initial State 2410

New Initiative: Increase L2C Automation Rate [list of tasks] 2460

New Initiative: Accelerate Payment Clearing [list of tasks] 2470

| | |
|---|---|
| Sales Order Automation Rate: 3% below benchmark 2414 | Delivery Creation Automation Rate: 7% below benchmark 2418 |
| Invoice to Cash Clearing Lead Time: 5% quicker than benchmark 2422 | Delivery to Receipt Lead Time: 15% quicker than benchmark 2426 |

Current State 2450

FIG. 24

FIG. 25

{          ⌐2610
    "Id": "1234",
    ⌐ "process identifier": "modelling/tenant1/5678",
2614  "dateCreated": "2025-01-22", ⌐
      "createdBy" : "UserID0987",    2618
    },                    ⌐2622
    ⌐ "name": "ClosingInitiative,"
2626  "description: "Reduce time to close";
      "status" : "Planning",        ⌐2630
    ⌐ "valueDrivers": [  ⌐2634
2638     "Improve posting time"
    ],                        ⌐2642
    "startDate": "2025-02-01",
    "endDate": "2026-02-01"
}       2646 ⌐

2600

# FIG. 26

```python
from pyemd import emd
import pandas as pd
import numpy as np


def emd_log_similarity(df_1: pd.DataFrame, df_2: pd.DataFrame) -> float:
    """
    Calculates the control-flow (behavior) similarity between two event logs based on the Earth Mover's Distance of their trace variant distributions.
        - The closer the event logs are, the closer the returned value is to 1.
        - If two event logs are the same, then the returned value is 1.
    """
    variant_dist_1 = log_utils.get_variants(df_1)[2]
    uniq_act_1 = set(log_utils.get_activities(df_1))
    variant_dist_2 = log_utils.get_variants(df_2)[2]
    uniq_act_2 = set(log_utils.get_activities(df_2))

    # compute variant numbers
    l_1 = len(variant_dist_1)
    l_2 = len(variant_dist_2)

    # obtain unique activities
    activities = uniq_act_1.union(uniq_act_2)
    dict_act = dict.fromkeys(activities, 0)

    # init optimization containers
    n = np.maximum(l_1, l_2)
    freq_1 = np.zeros(n)
    freq_2 = np.zeros(n)
    cost = np.zeros((n, n))

    # compute relative trace frequencies
    freq_1[0:l_1] = np.array(list(variant_dist_1.values())) / sum(
        list(variant_dist_1.values())
    )
    freq_2[0:l_2] = np.array(list(variant_dist_2.values())) / sum(
        list(variant_dist_2.values())
    )
```

2700

2710

2715

2720

# FIG. 27A

2700

```
# define unique encoding scheme
        for idx, act in enumerate(dict_act):
                dict_act[act] = chr(idx)
```

2730

```
# construct cost matrix
        for i, var_1 in enumerate(variant_dist_1):
                for j, var_2 in enumerate(variant_dist_2):
                        # encode traces
                        trace_1, len_1 = trace_encode(var_1, dict_act)
                        trace_2, len_2 = trace_encode(var_2, dict_act)
                        # compute cost
                        dist = ls_dist(trace_1, trace_2) / np.maximum(len_1, len_2)
                        cost[i][j] = dist

        return 1 - emd(freq_1, freq_2, cost)


def trace_encode(trace, mapping, delim=","):
        # extract activities from trace
        trace = trace.split(delim)
        trace_len = len(trace)

        # encode activities uniquely
        trace_enc = [enc for act in trace for key, enc in mapping.items() if act == key]
        trace_enc = "".join(trace_enc)

        # return result
        return trace_enc, trace_len
```

# FIG. 27B

2800

Receive a request for an improvement recommendation, the improvement recommendation being for a first entity                2804

Perform first process mining, to provide first process mining results, on one or more data sets comprising process data of the first entity, the first process mining identifying a first plurality of activities performed in one or more instances of a process associated with the one or more data sets                2812

Identify values for a plurality of characteristics of the first entity as of a first time                2816

From a plurality of entities, identifying a set of one or more reference entities having values for at least a portion of the plurality of characteristics of the first entity satisfying a threshold similarity with the first entity as of a second time, the second time being earlier than the first time                2820

Prior or subsequent to the identifying the set of one or more reference entities, perform second process mining, providing second process mining results, on one or more data sets comprising process data of the set of one or more reference entities, the process mining identifying a second plurality of activities performed in one or more instances of a process associated with the one or more data sets comprising process data of the set of one or more reference entities                2824

Compare a first value for a first performance metric for the first process mining results with a second value for the first performance metric for the second process mining results                2828

Determine that the second value satisfies one or more criterion indicating that the second value reflects better performance for the first performance metric than the first value                2832

Identify a change to a process described by first process mining results to improve the first performance metric value                2836

Display the change to a user via a user interface in response to the receiving the request                2840

FIG. 28

COMPUTING ENVIRONMENT 2900

COMMUNICATION CONNECTION(S) 2970

2930

central processing unit 2910

graphics or co-processing unit 2915

INPUT DEVICE(S) 2950

MEMORY 2920

MEMORY 2925

OUTPUT DEVICE(S) 2960

STORAGE 2940

SOFTWARE 2980 IMPLEMENTING DESCRIBED TECHNOLOGIES

FIG. 29

3000

CLOUD COMPUTING SERVICES

<u>3010</u>

| COMPUTING DEVICE <u>3020</u> | COMPUTING DEVICE <u>3022</u> | COMPUTING DEVICE <u>3024</u> |

FIG. 30

# EUROPEAN SEARCH REPORT

**Application Number**

EP 25 16 8050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/348969 A1 (GROSSMAN TOVI [CA] ET AL) 5 November 2020 (2020-11-05) <br> * paragraph [0047] - paragraph [0054] * <br> * paragraph [0132] - paragraph [0146]; figures 12,13 * <br> * paragraph [0161] - paragraph [0164]; figure 16 * <br> ----- | 1-15 | INV. <br> G06F16/901 <br> G06F16/242 <br> G06Q10/0633 |
| A | ALFREDO BOLT ET AL: "Scientific workflows for process mining: building blocks, scenarios, and implementation", INTERNATIONAL JOURNAL ON SOFTWARE TOOLS FOR TECHNOLOGY TRANSFER, SPRINGER, BERLIN, DE, vol. 18, no. 6, November 2016 (2016-11), pages 607-628, XP036068915, ISSN: 1433-2779, DOI: 10.1007/S10009-015-0399-5 <br> * section 3.6; figure 8 * <br> * section 4.4.1; figure 13 * <br> ----- | 1,9,13 | |

**TECHNICAL FIELDS SEARCHED (IPC)**

G06F
G06Q

The present search report has been drawn up for all claims

| Place of search | Date of completion of the search | Examiner |
|---|---|---|
| Berlin | 8 August 2025 | Polzer, Andreas |

EPO FORM 1503 03.82 (P04C01)

## ANNEX TO THE EUROPEAN SEARCH REPORT
## ON EUROPEAN PATENT APPLICATION NO.

EP 25 16 8050

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2025

| Patent document cited in search report | Publication date | Patent family member(s) | Publication date |
|---|---|---|---|
| US 2020348969 A1 | 05-11-2020 | CN 113767388 A | 07-12-2021 |
| | | EP 3963499 A1 | 09-03-2022 |
| | | US 2020348969 A1 | 05-11-2020 |
| | | US 2020349482 A1 | 05-11-2020 |
| | | WO 2020223465 A1 | 05-11-2020 |

EPO FORM P0459

For more details about this annex : see Official Journal of the European Patent Office, No. 12/82